(19) **Europäisches Patentamt**

**European Patent Office**

**Office européen des brevets**

(11) **EP 1 087 320 A1**

(12) **EUROPEAN PATENT APPLICATION**
published in accordance with Art. 158(3) EPC

(43) Date of publication:
28.03.2001 Bulletin 2001/13

(51) Int. Cl.$^7$: **G06F 17/60**

(86) International application number:
**PCT/JP00/02291**

(21) Application number: **00915432.9**

(22) Date of filing: **07.04.2000**

(87) International publication number:
**WO 00/62218 (19.10.2000 Gazette 2000/42)**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.04.1999 JP 10333999**

(71) Applicant: **Sony Corporation Tokyo 141-0001 (JP)**

(72) Inventors:
• **Ishibashi, Yoshihito,
Sony Corp.
Shinagawa-ku, Tokyo 141-0001 (JP)**

• **Asano, Tomoyuki,
Sony Corp.
Shinagawa-ku, Tokyo 141-0001 (JP)**
• **Kitamura, Iduru,
Sony Corp.
Shinagawa-ku, Tokyo 141-0001 (JP)**
• **Kitahara, Jun,
Sony Corp.
Shinagawa-ku, Tokyo 141-0001 (JP)**

(74) Representative:
**Pilch, Adam John Michael et al
D. YOUNG & CO.,
21 New Fetter Lane
London EC4A 1DA (GB)**

(54) **INFORMATION PROCESSING DEVICE AND METHOD, AND PROVIDING MEDIUM**

(57)    The present invention allows a master information processing apparatus to settle accounts on behalf of other information processing apparatuses connected to the master information processing apparatus. Instead of a receiver that cannot settle accounts, a receiver 51 settles the amount charged to the receiver 201.

FIG. 1

## Description

Technical Field

The present invention relates to an information processing apparatus, information processing method, and providing medium. More particularly, it relates to an information processing apparatus, information processing method, and providing medium that utilize encrypted information.

Background Art

There are systems that encrypt information (hereafter referred to as content) such as music and send it to the information processing apparatus of the users who have made a required agreement, so that the users can decrypt and use the content on their information processing apparatus.

If a user possesses two or more information processing apparatuses, he/she must purchase content and settle its usage charge for each information processing apparatus, which caused a problem of troublesomeness.

Disclosure of the Invention

The present invention has been made in view of the above circumstances. If a user possesses two or more information processing apparatuses, with a main information processing apparatus, the user can purchase the contents used in the other information processing apparatuses or settle the charge thereof.

To solve these problems, the present invention provides an information processing apparatus which comprises storage means for storing appropriate proxy account settlement information for the other information processing apparatuses; requesting means for requesting the other information processing apparatuses to provide appropriate accounting information according to the proxy account settlement information stored in the storage means; first reception means for receiving the accounting information sent by the other information processing apparatuses in response to the request from the requesting means; sending means for sending the accounting information received by the first reception means to the control apparatus; second reception means for receiving the registration conditions prepared based on the results of the account settlement performed according to the accounting information sent by the sending means and received from the control apparatus; and control means for controlling the operation, based on the registration conditions received by the second reception means.

Also, the present invention provides an information processing method which comprises a storage step of storing appropriate proxy account settlement information for the other information processing apparatuses; a requesting step of requesting the other information processing apparatuses to provide appropriate accounting information according to the proxy account settlement information stored in the storage step; a first reception step of receiving the accounting information sent by the other information processing apparatuses in response to the request from the requesting step; a sending step of sending the accounting information received by the first reception step to the control apparatus; a second reception step of receiving the registration conditions prepared based on the results of the account settlement performed according to the accounting information sent by the sending step and received from the control apparatus; and a control step of controlling the operation, based on the registration conditions received by the second reception step.

Furthermore, the providing medium of the present invention provides a computer-readable program for executing a process which comprises a storage step of storing appropriate proxy account settlement information for the other information processing apparatuses; a requesting step of requesting the other information processing apparatuses to provide appropriate accounting information according to the proxy account settlement information stored in the storage step; a first reception step of receiving the accounting information sent by the other information processing apparatuses in response to the request from the requesting step; a sending step of sending the accounting information received by the first reception step to the control apparatus; a second reception step of receiving the registration conditions prepared based on the results of the account settlement performed according to the accounting information sent by the sending step and received from the control apparatus; and a control step of controlling the operation, based on the registration conditions received by the second reception step.

Furthermore, the information processing apparatus, information processing method, and providing medium of the present invention store appropriate proxy account settlement information for the other information processing apparatuses; request the other information processing apparatuses to provide appropriate accounting information according to the stored proxy account settlement information; receive the accounting information sent by the other information processing apparatuses in response to the request; send the received accounting information to the control apparatus; receive the registration conditions prepared based on the results of the account settlement performed according to the sent accounting information sent from the control apparatus; and control the operation, based on the received registration conditions.

Furthermore, the information processing apparatus of the present invention comprises first storage means for storing appropriate proxy purchase information for the other information processing apparatuses; first preparation means for preparing appropriate accounting information according to the proxy purchase information stored in the first storage means; second preparation means for preparing appropriate usage control status according to the proxy purchase information stored in the first storage means; second storage means for storing the accounting information prepared by the first preparation means; and sending means for sending the usage control status prepared by the second preparation means and the key necessary to decrypt the encrypted information supplied by the control apparatus.

Furthermore, the information processing method of the present invention comprises a first storage step of storing appropriate proxy purchase information for the other information processing apparatuses; a first preparation step of preparing appropriate accounting information according to the proxy purchase information stored in the first storage step; a second preparation step of preparing appropriate usage control status according to the proxy purchase information stored in the first storage step; a second storage step of storing the accounting information prepared by the first preparation step; and a sending step of sending the usage control status prepared by the second preparation step and the key necessary to decrypt the encrypted information supplied by the control apparatus.

Furthermore, the providing medium of the present invention provides a computer-readable program which comprises a first storage step of storing appropriate proxy purchase information for the other information processing apparatuses; a first preparation step of preparing appropriate accounting information according to the proxy purchase information stored in the first storage step; a second preparation step of preparing appropriate usage control status according to the proxy purchase information stored in the first storage step; a second storage step of storing the accounting information prepared by the first preparation step; and a sending step of sending the usage control status prepared by the second preparation step and the key necessary to decrypt the encrypted information supplied by the control apparatus.

Furthermore, the information processing apparatus, information processing method, and providing medium of the present invention store appropriate proxy purchase information for the other information processing apparatuses; prepare appropriate accounting information according to the stored proxy purchase information; prepare appropriate usage control status according to the stored proxy purchase information; store the prepared accounting information; and comprises sending means for sending the prepared usage control status and the key necessary to decrypt the encrypted information supplied by the control apparatus to the other information processing apparatuses.

Brief Description of the Drawings

Figure 1 is a system diagram illustrating a EMD system.
Figure 2 is a system diagram illustrating the major information flow in the EMD system.
Figure 3 is a block diagram showing the functional configuration of an EMD service center 1.
Figure 4 is a schematic diagram illustrating the transmission of delivery keys Kd at the EMD service center 1.
Figure 5 is another schematic diagram illustrating the transmission of delivery keys Kd at the EMD service center 1.
Figure 6 is another schematic diagram illustrating the transmission of delivery keys Kd at the EMD service center 1.
Figure 7 is another schematic diagram illustrating the transmission of delivery keys Kd at the EMD service center 1.
Figure 8 is a block diagram showing an example functional configuration of a content provider 2.
Figure 9 is a chart showing an example UCP.
Figure 10 is a schematic diagram illustrating control transfer of content.
Figure 11 is a schematic diagram illustrating first-generation duplication.
Figure 12 is a chart showing example code values of a service code and a condition code.
Figure 13 is a chart showing an example code values set as the usage conditions in UCP.
Figure 14 is a schematic diagram showing a content provider secure container.
Figure 15 is a schematic diagram showing an example authentication certificate of the content provider 2.
Figure 16 is a block diagram showing the functional configuration of a service provider 3.
Figure 17 is a chart showing example PTs.
Figure 18 is a chart showing an example code values set as the pricing conditions in PT.
Figure 19 is a chart showing another example PTs.
Figure 20 is a chart showing an example code values set as the other pricing conditions in PT.
Figure 21 is a schematic diagram showing a service provider secure container.
Figure 22 is a schematic diagram showing an example authentication certificate of the service provider 3.
Figure 23 is a block diagram showing an example functional configuration of a receiver 51 in a user home network 5.
Figure 24 is a schematic diagram showing an example authentication certificate of SAM 62 of the receiver 51.
Figure 25 is a chart showing an example of UCS.

Figure 26 is a schematic diagram illustrating the internal structure of the usage information storage 63A in the external storage 63 of the receiver 51.

Figure 27 is a chart showing an example of accounting information.

Figure 28 is a chart showing the information stored in the memory module 73 of the receiver 51.

Figure 29 is a chart illustrating reference information 51.

Figure 30 is a chart showing an example registration list of the receiver 51.

Figure 31 is a block diagram showing an example functional configuration of a receiver 201 in the user home network 5.

Figure 32 is a chart showing an example registration list of the receiver 201.

Figure 33 is a flow chart illustrating process for utilization of content.

Figure 34 is a flow chart illustrating the process of sending delivery keys Kd from the EMD service center 1 to the content provider 2.

Figure 35 is a flow chart illustrating a flow of mutual authentication between the content provider 2 and EMD service center 1.

Figure 36 is a flow chart illustrating another flow of mutual authentication between the content provider 2 and EMD service center 1.

Figure 37 is a flow chart illustrating another flow of mutual authentication between the content provider 2 and EMD service center 1.

Figure 38 is a flow chart illustrating the process of sending a content provider secure container from the content provider 2 to the service provider 3.

Figure 39 is a flow chart illustrating the process of sending a service provider secure container from the service provider 3 to the receiver 51.

Figure 40 is a flow chart illustrating the process in which the receiver 51 receives the service provider secure container.

Figure 41 is a flow chart illustrating the process in which the receiver 51 reproduces content.

Figure 42 is a flow chart illustrating an account settlement process.

Figure 43 is a flow chart illustrating the processing procedures of account settlement by proxy.

Figure 44 is a flow chart illustrating the processing procedures of account settlement by proxy.

Figure 45 is a flow chart illustrating the processing procedures of account settlement by proxy.

Figure 46 is a system diagram illustrating another example configuration of user home network 5.

Figure 47 is a chart showing an example registration list of the receiver 51 of the user home network 5.

Figure 48 is a chart showing an example registration list of the receiver 251 of the user home network 5.

Figure 49 is a flow chart illustrating the other processing procedures of account settlement by proxy.

Figure 50 is a flow chart illustrating the other processing procedures of account settlement by proxy.

Figure 51 is a flow chart illustrating the other processing procedures of account settlement by proxy.

Figure 52 is a system diagram illustrating another example configuration of user home network 5.

Figure 53 is a system diagram illustrating an example configuration of the receiver 301.

Figure 54 is a schematic diagram showing the configuration of the usage information storage 312A of the receiver 301.

Figure 55 is a chart showing an example registration list of the receiver 301.

Figure 56 is a system diagram illustrating an example configuration of the receiver 401.

Figure 57 is a chart showing an example registration list of the receiver 401.

Figure 58 is a chart showing an example registration list of the receiver 51.

Figure 59 is a flow chart illustrating the processing procedures of purchase by proxy.

Figure 60 is a flow chart illustrating the other processing procedures of purchase by proxy.

Figure 61 is a flow chart illustrating the other processing procedures of purchase by proxy.

Figure 62 is a flow chart illustrating the other processing procedures of purchase by proxy.

Figure 63 is a flow chart illustrating the other processing procedures of purchase by proxy.

Best Mode for Carrying Out the Invention

An embodiments of the present invention will be described below.

(1) Information distribution system

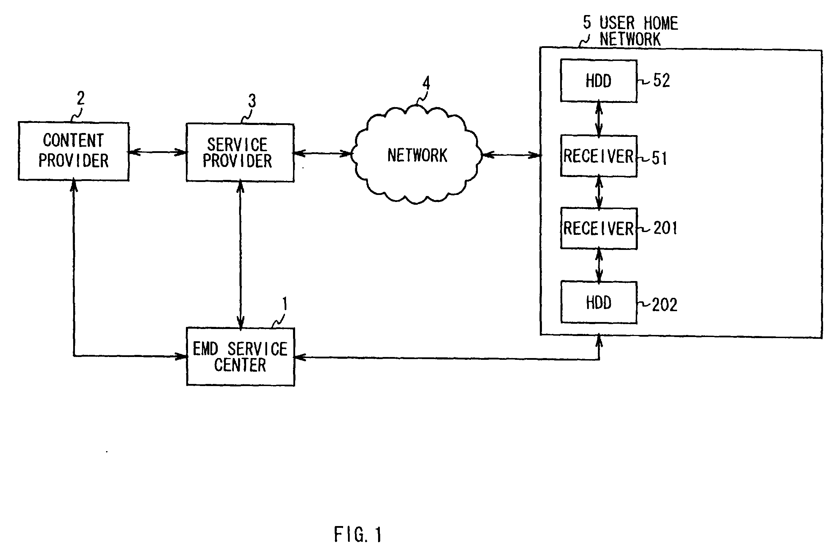

Figure 1 illustrates an EMD (electronic music distribution) system by the application of the present invention. The EMD system consists of the EMD service center 1 that manages individual pieces of equipment, content provider 2 that provides content, service provider 3 that provides predetermined services corresponding to content, and user home network 5 composed of the equipment (receiver 51 connected to HDD 52, receiver 201 connected to HDD 202 in this example) on which content is used.

The content in an EMD system is digital data whose information itself has a value. In this example, one piece of content corresponds to music data equivalent to one piece of music. Besides music data, however, content can be video data, game programs, computer programs, literary data, etc.

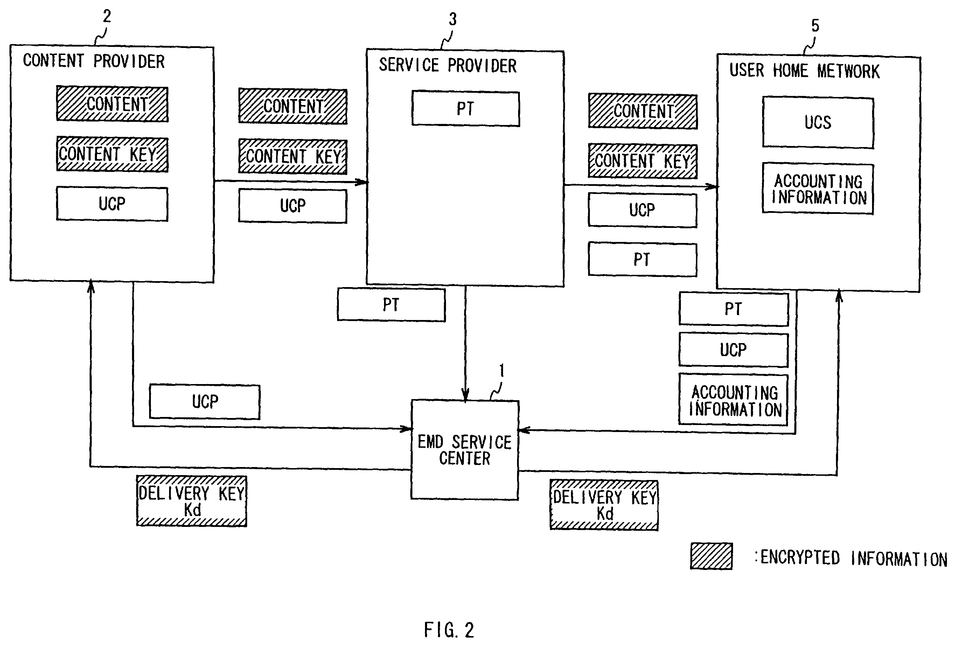

The EMD service center 1 sends the delivery keys Kd needed to use content to the user home network 5 and content provider 2, as shown in Figure 2, which shows the major information flow in the EMD system. Also, the EMD service center 1 receives accounting information and the like from the user home network 5 and adjust charges.

The content provider 2 possesses the content (encrypted with a content key Kco) to be provided, content key Kco (encrypted with a delivery key Kd) needed to decrypt the content, and usage control policy (abbreviated as UCP hereafter) that describes the usage details of content, and supplies them in the form called a content provider secure container (described later) to the service provider 3.

The service provider 3 prepares and retains one or more price tags (abbreviated as PT hereafter) according to the usage details contained in the UCP supplied by the content provider 2. The service provider 2 sends the prepared PT(s) together with the content (encrypted with a content key Kco), content key Kco (encrypted with a delivery key Kd), and UCP supplied by the content provider 2, in the form called a service provider secure container to the user home network 5 through a network 4 consisting of a private cable network, the Internet, or communications satellites.

The user home network 5 prepares usage control status (abbreviated as UCS hereafter) according to the supplied UCP and PT(s) and performs the process of using the content based on the prepared UCS. Also, the user home network 5 prepares accounting information, timed with the preparation of UCS, and sends it to the EMD service center 1, timed with, for example, the provision of the delivery keys Kd.

(2) EMD service center

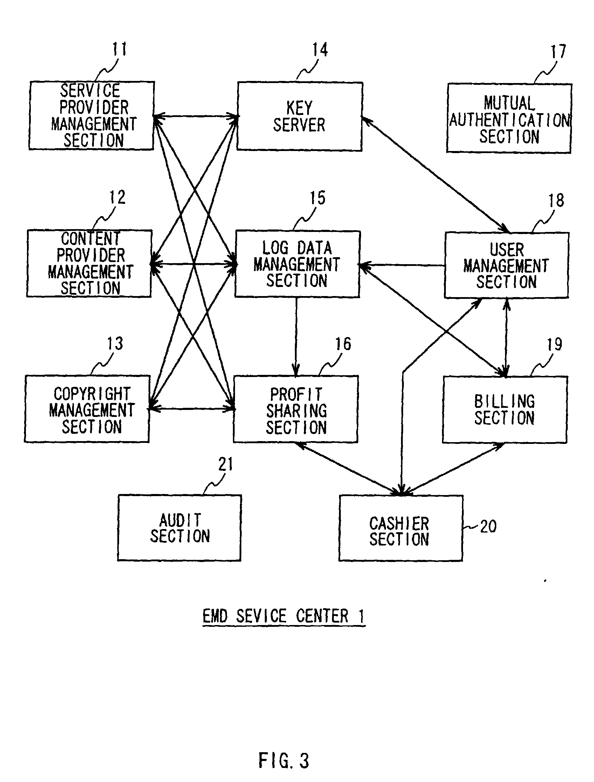

Figure 3 is a block diagram showing the functional configuration of the EMD service center 1. The service provider management section 11 supplies profit-sharing information to the service provider 3. The content provider management section 12 sends delivery keys Kd and supplies profit-sharing information to the content provider 2.

The copyright management section 13 sends information about the usage of content by the user home network 5 to the appropriate copyright management body, for example, JASPAC (Japanese Society for Rights of Authors, Composers and Publishers).

The key server 14 stores delivery keys Kd and supplies it to the content provider 2 through the content provider management section 12 or to the user home network 5 through the user management section 18.

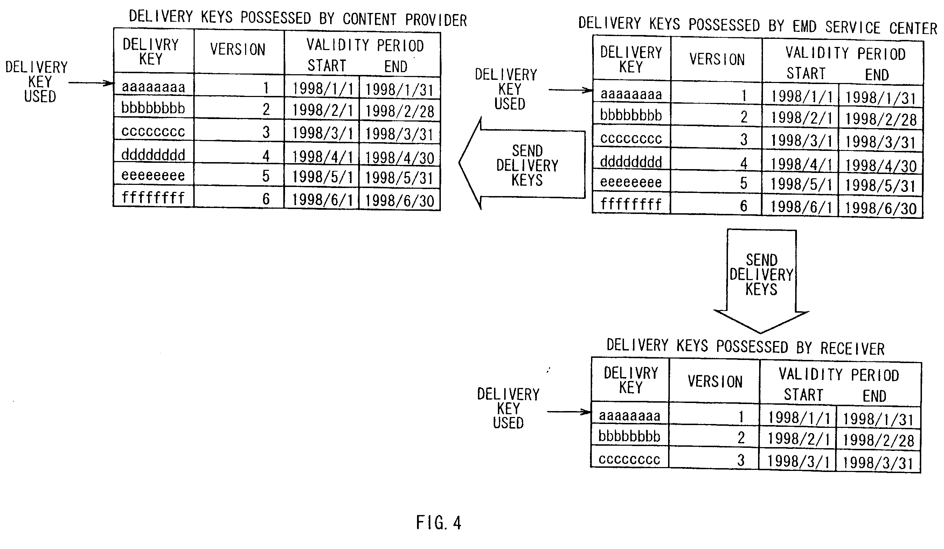

The delivery keys Kd supplied to the user home network 5 equipment and content provider 2 from the EMD service center 1 will be described with reference to Figures 4 to 7.

Figure 4 shows the delivery keys Kd possessed by the EMD service center 1, the delivery keys Kd possessed by the content provider 2, and the delivery keys Kd possessed by the receiver 51 in January 1998 when the content provider 2 starts to provide content and the receiver 51 composing the user home network 5 starts to use the content.

In the example of Figure 4, a delivery key Kd is valid from the first day to the last day of a calendar month (both inclusive). For example, the delivery key Kd version 1 with a value of "aaaaaaaa" consisting of a fixed random number of bits is available from January 1, 1998 to January 31, 1998 both inclusive (i.e., the content key Kco that encrypt the content distributed to the user home network 5 via the service provider 3 from January 1, 1998 to January 31, 1998 is encrypted with the delivery key Kd version 1). The delivery key Kd version 2 with a value of "bbbbbbbb" consisting of a fixed random number of bits is available from February 1, 1998 to February 28, 1998 both inclusive (i.e., the content key Kco that encrypt the content distributed to the user home network 5 via the service provider 3 during the given period is encrypted by the delivery key Kd version 2). Similarly, the delivery key Kd version 3 is available during March 1998, the delivery key Kd version 4 is available during April 1998, the delivery key Kd version 5 is available during May 1998, and the delivery key Kd version 6 is available during June 1998.

Before the content provider 2 starts to provide content, the EMD service center 1 sends six delivery keys Kd -- delivery keys Kd versions 1 to 6 -- available from January 1998 to June 1998 (both inclusive) to the content provider 2, which receives and stores the six delivery keys Kd. The reason why six months' delivery keys Kd are stored is that a certain period of time is required for the content provider 2 to make preparations such as encryption of the content and content keys before starting to provide the content.

Before the receiver 51 starts to use content, the EMD service center 1 sends three delivery keys Kd -- delivery keys Kd versions 1 to 3 --available from January 1998 to March 1998 (both inclusive) to the receiver 51, which receives and stores the three delivery keys Kd. Three months' delivery keys Kd are stored in order to avoid the situation in which content would not be available even during the term of the contract due to trouble in that the receiver 5 cannot be connected to the EMD service center 1 or other trouble and to reduce the load on the user home network 5 by decreasing the number of connections to the EMD service center 1.

During the period from January 1, 1998 to January 31, 1998, the delivery key Kd version 1 is used by the EMD service center 1, the content provider 2, and the receiver 51 that composes the user home network 5.

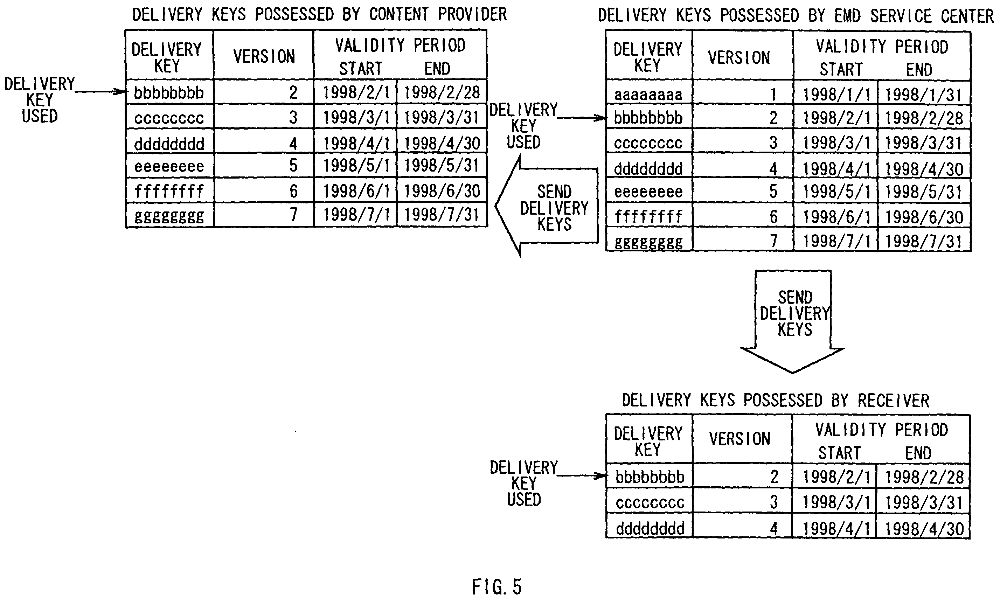

Now the transmission of delivery keys Kd from the EMD service center 1 to the content provider 2 and receiver 51 on February 1, 1998 will be described with reference to Figure 5. The EMD service center 1 sends six delivery keys Kd -- delivery keys Kd versions 2 to 7 -- available from February 1998 to July 1998 (both inclusive) to the content provider 2, which receives the six delivery keys Kd and store them overwriting the existing ones. The EMD service center 1 sends three delivery keys Kd -- delivery keys Kd versions 2 to 4 -- available from February 1998 to April 1998 (both inclusive) to the receiver 51, which receives the three delivery keys Kd and store them overwriting the existing ones. The EMD service center 1 stores the delivery key Kd version 1 as it is. This is done to make past delivery keys Kd available for use in case of unexpected trouble or in case an illegal act is committed or detected.

During the period from February 1, 1998 to February 28, 1998, the delivery key Kd version 2 is used by the EMD service center 1, the content provider 2, and the receiver 51 that composes the user home network 5.

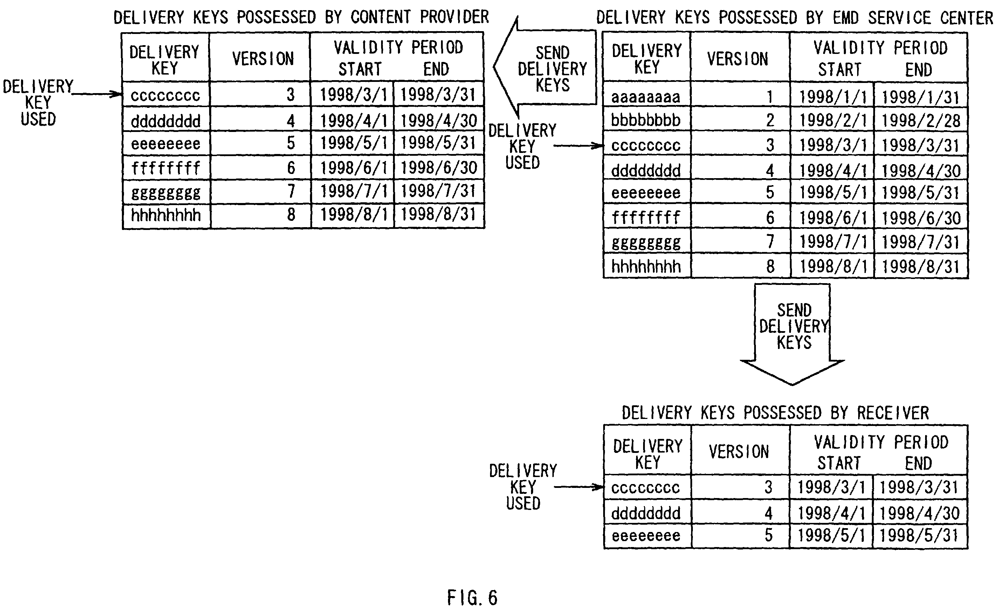

Now the transmission of delivery keys Kd from the EMD service center 1 to the content provider 2 and receiver 51 on March 1, 1998 will be described with reference to Figure 6. The EMD service center 1 sends six delivery keys Kd -- delivery keys Kd versions 3 to 8 -- available from March 1998 to August 1998 (both inclusive) to the content provider 2, which receives the six delivery keys Kd and store them overwriting the existing ones. The EMD service center 1 sends three delivery keys Kd -- delivery keys Kd version 3 to 5 -- available from March 1998 to May 1998 (both inclusive) to the receiver 51, which receives the three delivery keys Kd and store them overwriting the existing ones. The EMD service center 1 stores the delivery keys Kd versions 1 and 2 as they are.

During the period from March 1, 1998 to March 31, 1998, the delivery key Kd version 3 is used by the EMD service center 1, the content provider 2, and the receiver 51 that composes the user home network 5.

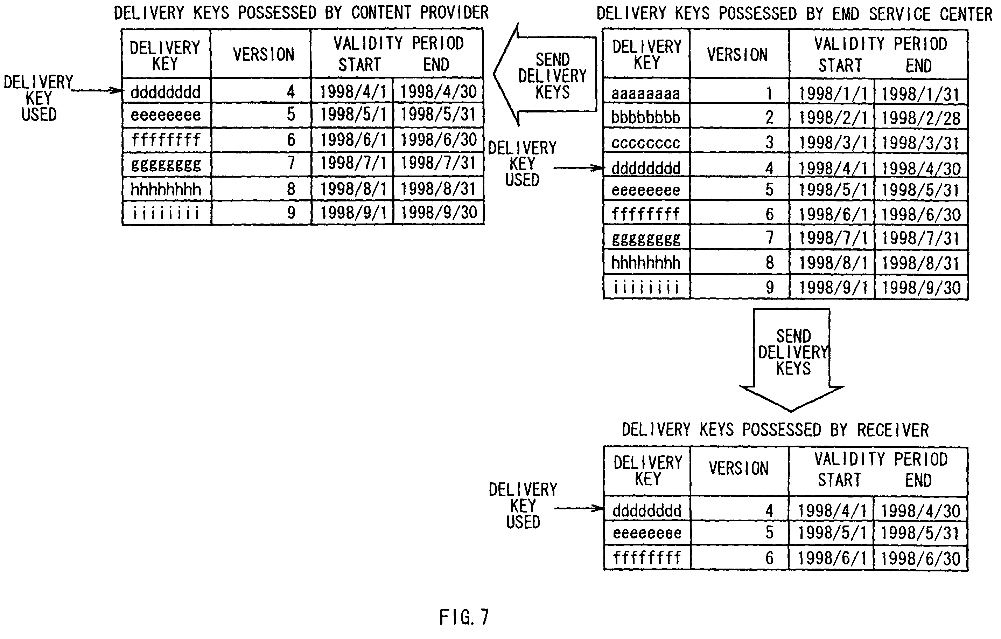

Now the transmission of delivery keys Kd from the EMD service center 1 to the content provider 2 and receiver 51 on April 1, 1998 will be described with reference to Figure 7. The EMD service center 1 sends six delivery keys Kd -- delivery keys Kd versions 4 to 9 -- available from April 1998 to September 1998 (both inclusive) to the content provider 2, which receives the six delivery keys Kd and store them overwriting the existing ones. The EMD service center 1 sends three delivery keys Kd -- delivery keys Kd version 4 to 6 -- available from April 1998 to June 1998 (both inclusive) to the receiver 51, which receives the three delivery keys Kd and store them overwriting the existing ones. The EMD service center 1 stores the delivery keys Kd versions 1, 2, and 3 as they are.

During the period from April 1, 1998 to April 30, 1998, the delivery key Kd version 4 is used by the EMD service center 1, the content provider 2, and the receiver 51 that composes the user home network 5.

In this way, if delivery keys Kd are distributed several months in advance, users can purchase content even if they do not access the EMD service center 1 at all for a month or two, and later they can access the EMD service center 1 and receive keys at a convenient time.

Returning to Figure 3, the log data management section 15 stores, the accounting information output by the user management section 18, PTs corresponding to the content, and UCP corresponding to the content.

The profit-sharing section 16 calculates, the respective profits of the EMD service center 1, content provider 2, and service provider 3 according to the information provided by the log data management section 15 and outputs the results to the service provider management section 11, content provider management section 12, cashier section 20, and copyright management section 13.

The mutual authentication section 17 performs mutual authentication with the content provider 2, service provider 3, and user home network 5 equipment. The user management section 18 prepares registration lists for predetermined processes and sends them together with the delivery keys Kd to the user home network 5.

The billing section 19 calculates the amount charged to the user based on, for example, the accounting information, UCP, and PTs supplied by the log data management section 15, and supplies the results to the cashier section 20, which then settles accounts in communication with external banks or the like (not shown), based on the amounts of usage fees to be paid or charged to the user, content provider 2, and service provider 3. Also, the cashier section 20 informs the user management section 18 about the results of the settlement.

The audit section 21 checks the validity of the accounting information supplied from the equipment in the user home network 5 as well as the validity of PTs and UCP (i.e., checks for any illegal act). In this case, the EMD service center 1 receives UCP from the content provider 2, PTs from the service provider 3 and UCP and PTs from the user home network 5.

(3) Content provider

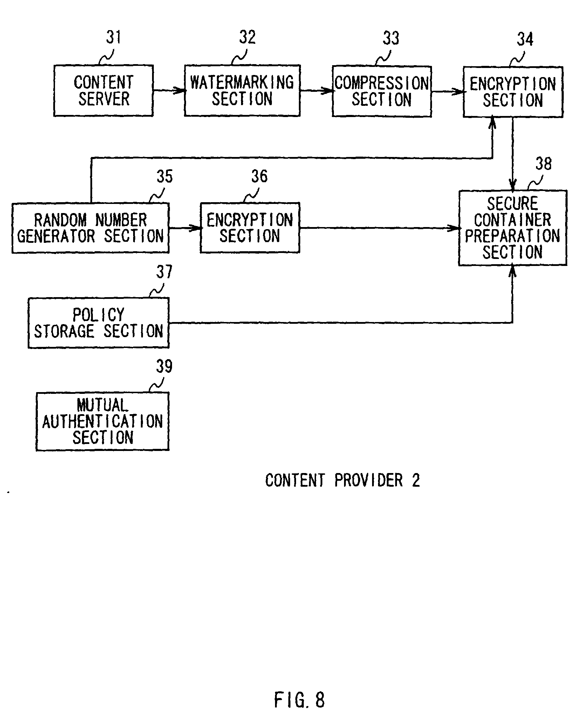

Figure 8 is a block diagram showing a functional configuration of the content provider 2. The content server 31 stores the content to be supplied to the user and supplies it the watermarking section 32, which then watermarks the content supplied by the content server 31 and supplies it to the compression section 33.

The compression section 33 compresses the content supplied by the watermarking section 32, by ATRAC2 (Adaptive Transform Acoustic Coding 2) (a trademark) or another method, and supplies it to the encryption section 34. The encryption section 34 encrypts the content compressed by the compression section 33, by common-key cryptography such as DES (Data Encryption Standard) by using the random number supplied by the random number generator section 35 as a key (hereafter this random number is referred to as a content key Kco), and outputs the results to the secure container preparation section 38.

The random number generator section 35 supplies the random number consisting of a fixed number of bits for use as the content key Kco to the encryption sections 34 and 36. The encryption section 36 encrypts the content key Kco by common-key cryptography such as DES by using the delivery key Kd supplied by the EMD service center 1, and outputs the results to the secure container preparation section 38.

DES is an encryption method that encrypts 64-bit blocks of plain text by using a 56-bit common key. The DES process consists of the part (data mixing section) that converts plain text to cipher text by mixing it with the key and the part (key processing section) that generates the key (expansion key) for use by the data mixing section from the common key. All the DES algorithms are open to the public. Therefore, only the basic processing in the data mixing section will be described here briefly.

First, 64 bits of plain text is divided into high-order 32 bits $H_0$ and low-order 32 bits $L_0$. Using, as input, the 48-bit expansion key $K_1$ supplied from the key processing section and the low-order 32 bits $L_0$, the output from an F function is calculated by mixing the low-order 32 bits $L_0$. The F function consists of two basic conversions: "substitution" for substituting numeric values in a prescribed manner and "transposition" for transposing bit positions in a prescribed manner. Then the high-order 32 bits $H_0$ is XORed with the output from the F function and denoted as $L_1$. $L_0$ is denoted as $H_1$.

After 16 iterations of the above process based on the high-order 32 bits $H_0$ and low-order 32 bits $L_0$, the resulting high-order 32 bits $H_{16}$ and low-order 32 bits $L_{16}$ are output as cipher text. For decryption, the above procedures are reversed using the common key used for the encryption.

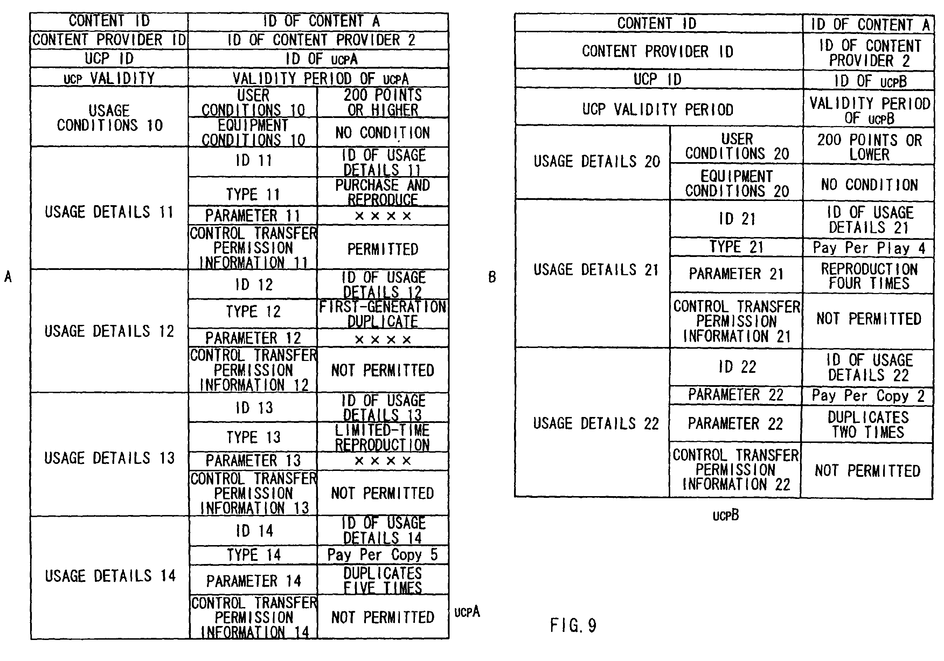

The policy storage section 37 stores the UCP set for content and outputs it to the secure container preparation section 38. Figure 9 shows UCP A, UCP B which have been set for content A kept in the content server 31 and which are stored in the policy storage section 37. A UCP contains predefined information regarding "Content ID," "Content Provider ID," "UCP ID," "UCP Validity Period," "Usage Conditions," and "Usage Details." "Content ID" contains the ID of the content to which the given UCP is applied. Each "Content ID" of UCP A (Figure 9A) and UCP B (Figure 9B) contains the ID of content A.

"Content Provider ID" contains the ID of the content provider that provides the content. Each "Content Provider ID" of UCP A, UCP B contains the ID of the content provider 2. "UCP ID" contains the ID assigned to the given UCP: "UCP ID" of UCP A contains the ID of UCP A. "UCP Validity Period" contains information about the validity period of the UCP: "UCP Validity Period" of UCP A contains the validity period of UCP A and "UCP Validity Period" of UCP B contains the validity period of UCP B.

"Usage Conditions" contains predefined information regarding "User Conditions" and "Equipment Conditions." "User Conditions" contains the conditions for the user who can select the given UCP. "Equipment Conditions" contains the conditions for the equipment that can select the given UCP.

In the case of UCP A, "Usage Conditions 10" is specified. "User Conditions 10" of "Usage Conditions 10" contains information ('200 Points or Higher') indicating that the condition for the use points is 200 points or higher. "Equipment Conditions 10" of "Usage Conditions 10" contains information ('No Condition') indicating that there is no condition. Thus, UCP A can be selected only by the users who have 200 or higher use points.

In the case of UCP B, "Usage Conditions 20" is specified. "User Conditions 20" of "Usage Conditions 20" contains information ('200 Points or lower') indicating that the condition for the use points is 200 points or lower. "Equipment Conditions 20" of "Usage Conditions 20" contains information ('No Condition') indicating that there is no condition. Thus, UCP A can be selected only by the users who have 200 or lower use points.

"Usage Details" contains predefined information regarding "ID," "Type," "Parameter," and "Control Transfer Permission Information." "ID" contains the ID assigned to the information contained in "Usage Details." "Type" contains information that indicates the use type of the content such as reproduction or duplication. "Parameter" contains the predefined information corresponding to the use type contained in "Type."

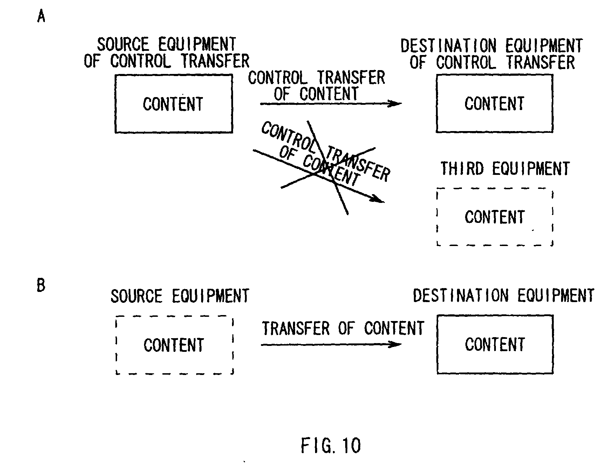

"Control Transfer Permission Information" contains information which indicates whether control transfer of the content is possible (permitted or not). In the case of a content control transfer, the content is copied to the destination equipment while being kept on the source equipment, as shown in Figure 10A. In other words, the content is used both on the source and destination equipment. In this respect, control transfer differs from normal content transfer in which content is removed from the source equipment and moved to the destination equipment, only where the content is stored and used, as shown in Figure 10B.

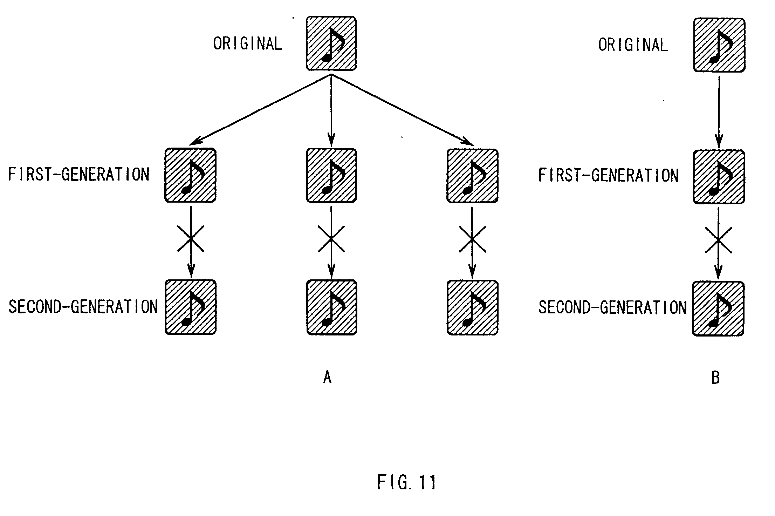

During a control transfer of content, the source equipment cannot transfer the control of the content to any third equipment (not permitted), as shown in Figure 10A. Thus, the content is kept only on the two pieces of equipment: the source equipment and destination equipment. In this respect, content control transfer differs from the first-generation duplication which can produce multiple duplicates (first-generation) from the original content, as shown in Figure 11A. Also, content control transfer differs from the one-time duplication shown in Figure 11B in that content control can be transferred to third equipment if the content is returned from the equipment.

Returning to Figure 9A, UCP A has four "Usage Details" fields: "Usage Details 11" to "Usage Details 14." "ID 11" of "Usage Details 11" contains the ID assigned to "Usage Details 11." "Type 11" contains the information indicating the use type of 'Purchase and Reproduce' meaning that the content will be purchased and reproduced. "Parameter 11" contains the predefined information corresponding to 'Purchase and Reproduce.' "Control Transfer Permission Information 11" contains the information indicating that the control transfer of the content is permitted ('Permitted').

"ID 12" of "Usage Details 12" contains the ID assigned to "Usage Details 12." "Type 12" contains the information indicating the use type of 'First-Generation Duplicate' meaning that first-generation duplicates will be produced. Multiple first-generation duplicates of the 'First-Generation Duplicate,' can be produced from the original content as shown in Figure 11A. However, it is not possible to produce second-generation duplicates from first-generation duplicates (not permitted). "Parameter 12" contains the predefined information corresponding to 'First-Generation Duplicate.' "Control Transfer Permission Information 12" contains the information indicating that the control transfer of the content is not permitted ('Not Permitted').

"ID 13" of "Usage Details 13" contains the ID assigned to "Usage Details 13." "Type 13" contains information 'Limited-Time Reproduction' indicating the use type to reproduce content A for a specified period (time). "Parameter 13" contains the start time and end time corresponding to 'Limited-Time Reproduction.' "Control Transfer Permission Information 13" is set to 'Not Permitted.'

"ID 14" of "Usage Details 14" contains the ID assigned to "Usage Details 14." "Type 14" contains 'Pay Per Copy 5' indicating the use type to duplicate five times. However, in such a case, it is not possible to produce duplicates from duplicates (not permitted), as shown in Figure 11B. "Parameter 14" contains information 'Duplicates Five Times' indicating that the duplication is possible five times. "Control Transfer Permission Information 14" is set to 'Not Permitted.'

UCP B in Figure 96 has two "Usage Details" fields: "Usage Details 21" to "Usage Details 22." "ID 21" of "Usage Details 21" contains the ID assigned to "Usage Details 21." "Type 21" is set to 'Pay Per Play 4' indicating the use type to reproduce four times. "Parameter 21" contains information "Reproduction Four Times" indicating that reproduction is possible four times. "Control Transfer Permission Information 21" contains 'Permitted'.

"ID 22" of "Usage Details 22" contains the ID assigned to "Usage Details 22." "Type 22" contains 'Pay Per Copy 2', "Parameter 22" contains "Duplicates Two Times". "Control Transfer Permission Information 22" contains 'Not Permitted'.

Here, comparing the details of UCP A and UCP B, while the user having the use points of 200 points or higher can choose from four "Usage Details" fields: "Usage Details 11" to "Usage Details 14", the user having the use points of 200 points or lower can only choose from two "Usage Details" fields: "Usage Details 21" and "Usage Details 22".

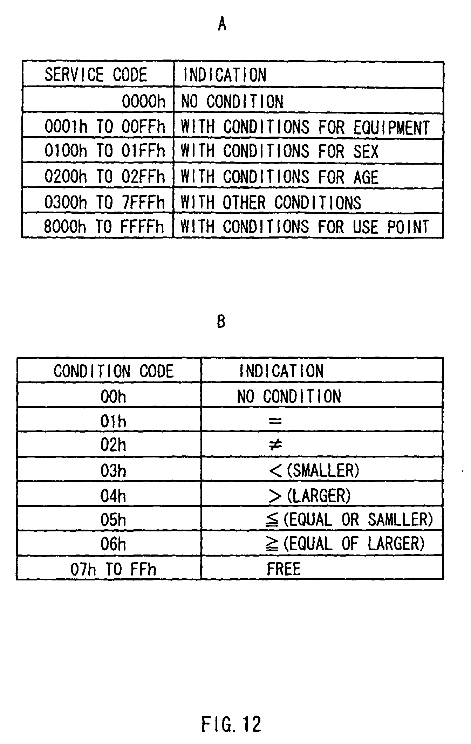

Incidentally, Figure 9 shows UCP A, UCP B to show an example. Actually, in addition to service codes shown in Figure 12A and condition codes shown in Figure 12B, "Usage Conditions 10" of UCP A and "Usage Conditions 20" of UCP B respectively contain value codes indicating values or predefined type according to the service codes.

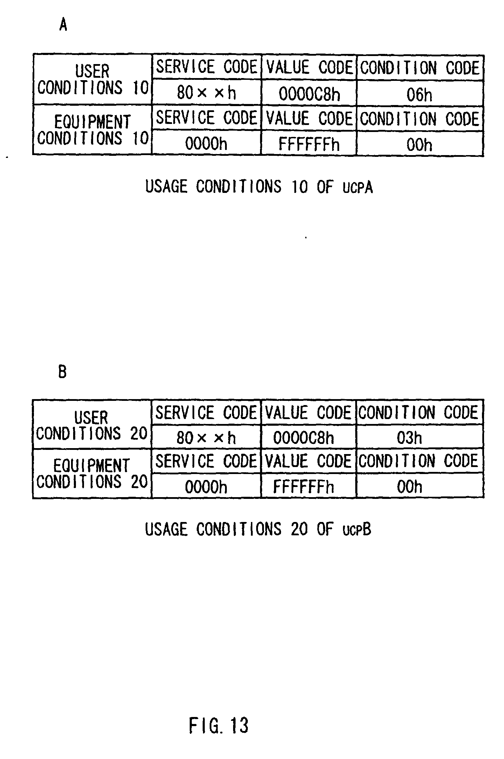

Figure 13A shows code values of each code set as "User Conditions 10" and "Equipment Conditions 10" of "Usage Conditions 10" in UCP A (Figure 9A). Since "User Conditions 10" of "Usage Conditions 10" indicates 200 points or higher, a service code 80xxh meaning "with conditions for use point", a value code 0000C8h indicating the value 200 at this time and condition code 06h (Figure 12B) meaning "> = (equal or smaller)" are set as "User Conditions".

Since "Equipment Conditions 10" in UCP A indicates "No Condition", a service code 0000h meaning "No condition", a value code FFFFFFh having no meaning and a condition code 00h (Figure 12B) meaning "No Condition" are set as "Equipment Condition".

Figure 13B shows code values of each code set as "User Conditions 20" and "Equipment Conditions 20" of "Usage Conditions 20" in UCP B. Since "User Conditions 20" indicates 200 points or lower, a service code 80xxh meaning "with conditions for use point" (Figure 12A), a value code 0000C8h indicating the value 200 and condition code 03h (Figure 12B) meaning "> = (equal or larger)" are set as "User Conditions".

"Equipment Conditions 20" in UCP B indicates "No condition" similarly to "Equipment Conditions 10" in UCP A, and the both have the same code values, an explanation for it will be omitted.

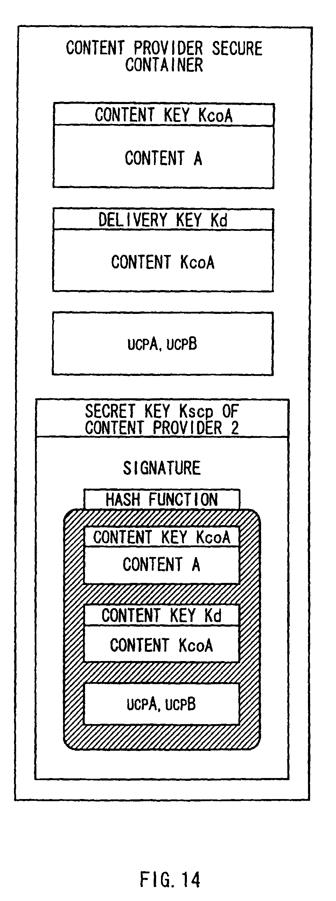

Returning to Figure 8, the secure container preparation section 38 prepares a content provider secure container consisting, for example, of a content A (encrypted with a content key KcoA), a content key KcoA (encrypted with a delivery key Kd), UCP A, UCP B, and the content provider's signature, as shown in Figure 14. The signature is obtained by encrypting a hash value with a secret key (the secret key Kscp of the content provider 2 in this case) in the public-key cryptosystem of the content provider. The hash value, in turn, has been obtained by applying a hash function to the data that needs to be sent (content A in this case (encrypted with the content key KcoA)), content key KcoA (encrypted with the delivery key Kd), and UCP A, UCP B.

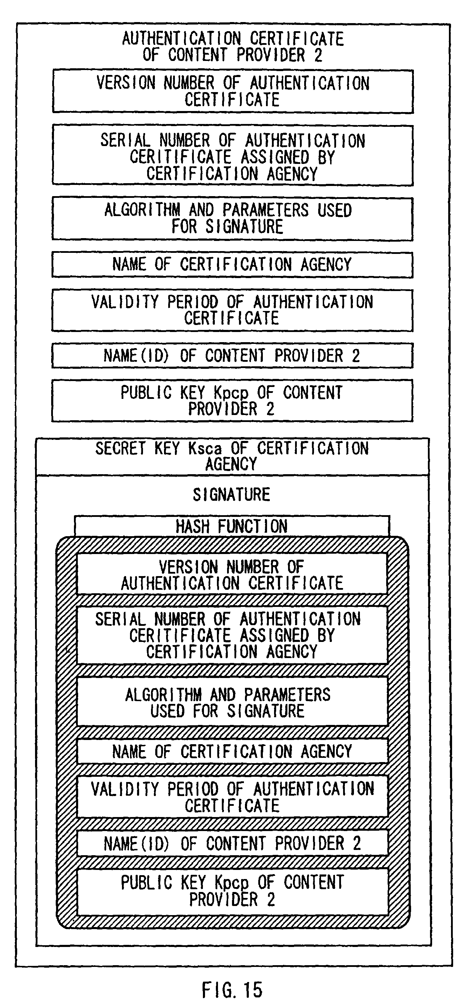

The secure container preparation section 38 sends the content provider secure container to the service provider 3 by attaching the authentication certificate of the content provider 2 shown in Figure 15. The authentication certificate consists of its version number, its serial number assigned to the content provider 2 by the certification agency, the algorithm and parameters used for the signature, the name of the certification agency, the validity period of the authentication certificate, and the name, public key Kpcp, and signature (encrypted with the secret key Ksca of the certification agency) of the content provider 2.

The signature is used to check for falsification. It is produced by computing, by means of a hash function, a hash value from the data to be sent and encrypting the hash value with the secret key of public-key cryptography.

Hash functions and signature authentication will be described below. A hash function accepts as input the data to be sent, compresses it to data of a specific bit length, and outputs it as a hash value. Hash functions are characterized in that it is difficult to predict the input from the hash value (output), that if one bit of input data changes, many bits of the hash value change, and that it is difficult to find out input data that have the same hash value.

The receiver that has received the signature and data decrypts the signature by the cryptographic public key to obtain a resulting hash value. Then the hash value of the received data is calculated and compared with the hash value obtained by decrypting the signature, to check whether the two hash values are identical. If they are determined to be identical, the received data has not been falsified and it has been sent by the sender that has the secret key corresponding to the public key. Examples of the hash functions used for signatures include, MD (Message Digest) 4, MD5, SHA (Secure Hash Algorithm), etc.

Now public-key cryptography will be described. In contrast to the common-key cryptography which uses the same key (common key) for encryption and decryption, public-key cryptography uses different keys for encryption and decryption. In public-key cryptography, one of the keys is made public, but the other key can be kept secret. The key that can be made public is called a public key while the key that is kept secret is called a secret key.

Now a typical public-key cryptosystem, RSA (Rivest-Shamir-Adleman), will be described briefly. First, two significantly large primes p and q are determined, and then their product n is determined. The least common multiple L of (p - 1) and (q - 1) are computed, and the value e that is equal to or larger than 3 and less than L and that is relatively prime to L is determined (i.e., the value that will go into both e and L, which is only 1).

In modulo L arithmetic, the multiplicative inverse d of the element e is determined. In other words, the relationship ed = 1 mod L exists among, d, e, and L, where d can be calculated by Euclid an algorithm. Here, n and e are public keys and p, q, and d are secret keys.

Cipher text C can be calculated from plain text M by equation (1).

$$C = M^e \bmod n \qquad (1)$$

The cipher text C is decrypted into the plain text M by equation (2).

$$M = C^d \bmod n \qquad (2)$$

Demonstration is omitted. The reason why plain text can be converted into cipher text by RSA and cipher text can be decrypted is that RSA is based on Fermat's first theorem and that equation (3) holds.

$$M = C^d = (M^e)^d = M^{ed} = M \bmod n \qquad (3)$$

If one knows the secret keys p and q, he/she can compute the secret key d from the public key e. However, if the number of digits of the public key n is increased to the extent that the unique factorization of the public key n is difficult in terms of the amount of computation, the secret key d cannot be computed from the public key e and the cipher text cannot be decrypted based simply on knowledge of the public key n. As described above, the RSA cryptosystem can use different keys for encryption and decryption.

Now another public-key cryptosystem, Elliptic Curve Cryptography, will be described briefly. Let B denote a point on the elliptic curve $y^2 = x^3 + ax + b$. To define additions of points on the elliptic curve, let nB denote the result of n additions of B. Similarly, subtractions will be defined. It has been proven that it is difficult to compute n from B and Bn. Suppose, B and nB are public keys and n is a secret key. Using a random number r and the public keys, cipher text C1 and C2 are computed from plain text N by equations (4) and (5).

$$C1 = M + rnB \qquad (4)$$

$$C2 = rB \qquad (5)$$

Cipher text C1 and C2 are decrypted into plain text M by equation (6)

$$M = C1 - nC2 \qquad (6)$$

Decryption is possible only when the secret key n is available. As can be seen from the above discussion, Elliptic Curve Cryptography allows the use of different keys for encryption and decryption, as is the case with the RSA cryptosystem.

Returning to Figure 8, the mutual authentication section 39 of the content provider 2 performs mutual authentication with the EMD service center 1 before receiving delivery keys Kd from the EMD service center 1. It can also perform mutual authentication with the service provider 3 before sending the content provider secure container to the service provider 3. In this example, however, since the content provider secure container does not contain secret information, this mutual authentication is not necessarily required.

(4) Service provider

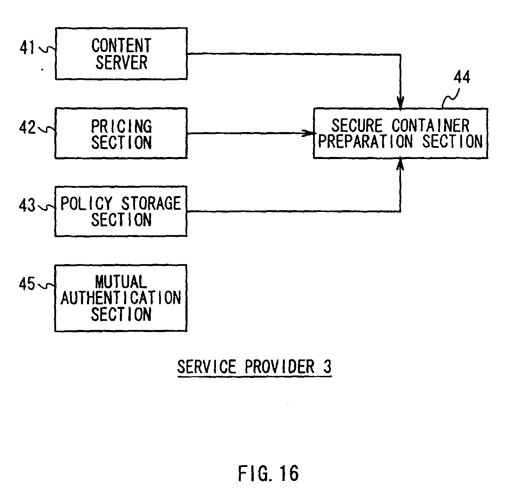

Now, the functional configuration of the service provider 3 will be described with reference to the block diagram in Figure 16. The content server 41 stores the content (encrypted with the content key Kco), content key Kco (encrypted with the delivery key Kd), UCP, and a signature of the content provider 2 contained in the content provider secure container supplied by the content provider 2 and supplies them to the secure container preparation section 44.

The pricing section 42 checks the authenticity of the content provider secure container based on the signature contained in the content provider secure container supplied by the content provider 2. In this case, the certificate of the content provider 2 is checked. If it is authentic, a public key of the content provider 2 will be given. And on the basis of this given public key, the authenticity of the content provider secure container is checked.

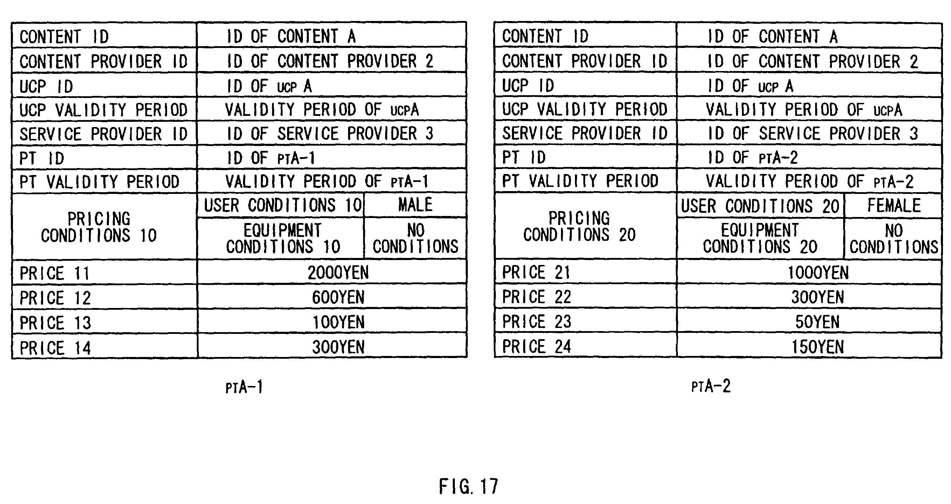

If the authenticity of the content provider secure container is confirmed, the pricing section 42 prepares PTs according to the UCP contained in the content provider secure container and supplies them to the secure container preparation section 44. Figure 17 shows two price tags, PT A-1 (Figure 17A) and PT A-2 (Figure 17B), prepared according to UCP A of the Figure 9A. A PT contains the information to be specified in "Content ID," "Content Provider ID," "UCP ID," "Service Provider ID," "PT ID," "PT Validity Period," "Pricing Conditions," and "Price."

"Content ID," "Content Provider ID," and "UCP ID" of PTs contain the information specified in the corresponding items of the UCP. That is, "Content ID" of PT A-1 and PT A-2 contains the ID of content A, their "Content Provider ID" contains the ID of the content provider 2, and their "UCP ID" contains the ID of UCP A.

"Service Provider ID" contains the ID of the service provider 2 that has provided the given PT. "Service Provider ID" of PT A-1 and PT A-2 contains the ID of the service provider 3. "PT ID" contains the ID assigned to the given PT: "PT ID" of PT A-1 contains the ID of PT A-1 and "PT ID" of PT A-2 contains the ID of PT A-2. "PT Validity Period" contains information about the validity period of the given PT: "PT Validity Period" of PT A-1 contains the validity period of PT A-1 and "PT Validity Period" of PT A-2 contains the validity period of PT A-2.

"Pricing Conditions" contains predefined information corresponding to "User Conditions" and "Equipment Conditions," as is the case with "Usage Conditions" in UCP. "User Conditions" of "Pricing Conditions" contains information about the conditions for the user who can select the given PT. "Equipment Conditions" contains information about the conditions for the equipment that can select the given UCP.

In the case of PT A-1, "Pricing Conditions 10" is specified. "User Conditions 10" of "Pricing Conditions 10" contains information ('Male') indicating that the user is male. "Equipment Conditions" of "Pricing Conditions 10" is set to 'No Condition.' Thus, PT A-1 can be selected only by male users.

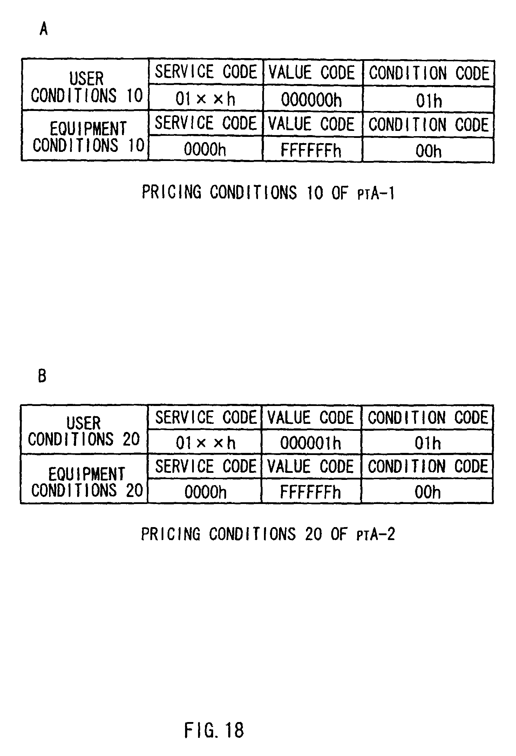

In "User Conditions 10" and "Equipment Conditions 10" of "Pricing Conditions 10", actually, code values of each type of code are set as shown in Figure 18A. "User Conditions 10" of "Pricing Conditions 10" contains a service code 01xxh meaning "with condition of sex", a value code 000000h indicating a male, and a condition code 01h (Figure 12B) meaning "=". "Equipment Conditions 10" contains a service code 0000h meaning "No condition", a value code FFFFFFh having no meaning in this case and a condition code 00h meaning "No Condition".

In the case of PT A-2, "Pricing Conditions 20" is specified. "User Conditions 20" of "Pricing Conditions 20" contains information ('Female') indicating that the user is female. "Equipment Conditions" of "Pricing Conditions 20" is set to 'No Condition.' Thus, PT A-2 can be selected only by female users.

In "User Conditions 20" and "Equipment Conditions 20" of "Pricing Conditions 20", actually, code values of each type of code are set as shown in Figure 18B. "User Conditions 20" of "Pricing Conditions 20" contain a service code 01xxh meaning "with conditions for sex", a value code 000000h indicating a female, and a condition code 01h (Figure 12B) meaning "=". "Equipment Conditions 20" contains a service code 0000h meaning "No condition", a value code FFFFFFh having no meaning in this case and a condition code 00h meaning "No Condition".

"Returning to Figure 17, "Price" on PTs contains the usage charge for the use type specified in "Type" of "Usage Details" of the corresponding UCP. This means that '2000 Yen' specified in "Price 11" on PT A-1 and '1000 Yen' specified in "Price 21" on PT A-2 indicate the purchase price (charge) of the content A since "Type 11" of "Usage Details 11" in UCP A (Figure 9A)is specified to 'Purchase and Reproduce'.

'600 Yen' in "Price 12" on PT A-1 and '300 Yen' in "Price 22" on PT A-2 are the prices of the rights to use the content A according to the use type "First-generation Duplicate" as indicated by "Type 12" of "Usage Details 12" of UCP A. '100 Yen' in "Price 13" on PT A-1 and '50 Yen' in "Price 23" on PT A-2 are the prices of the rights to use the content A according to the use type 'Limited-Time Reproduction' as indicated by "Type 13" of "Usage Details 13" of UCP A. '300 Yen' in "Price 14" on PT A-1 and '150 Yen' in "Price 24" on PT A-2 are the charges when using content A according to the use style to duplicate five times as indicated by "Type 14" of "Usage Details 14" of UCP A.

In this example, when the prices on PT A-1 (applicable to male users) and the prices on PT A-2 (applicable to female users) are compared, it can be seen that the prices on PT A-1 are twice as high as the prices on PT A-2. For example, while "Price 11" on PT A-1 for "Usage Details 11" of UCP A is '2000 Yen,' "Price 21" on PT A-2 for "Usage Details 11" of UCP A is '1000 Yen.' Similarly, the prices specified in "Price 12" to "Price 14" on PT A-1 are twice as high as the prices specified in "Price 22" to "Price 24" on PT A-2. In short, in this case, female users can use content A at lower prices.

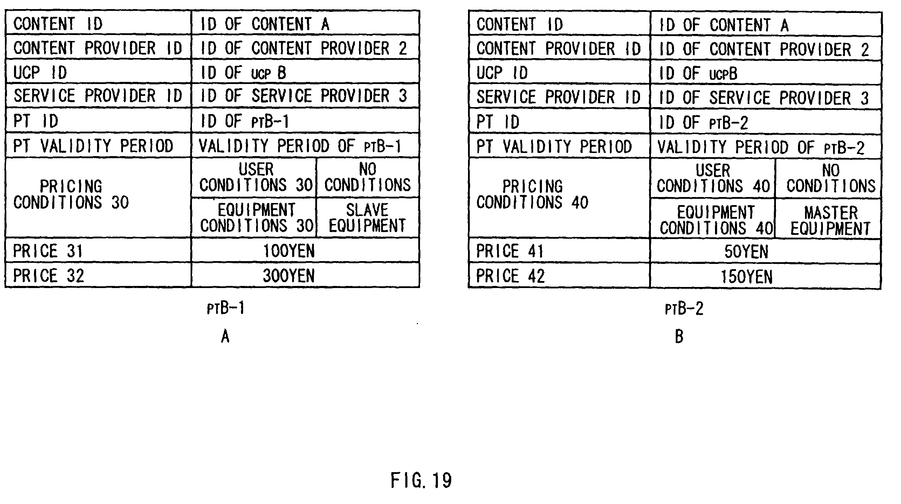

Figure 19 shows PT B-1 and PT B-2 prepared according to UCP B in Figure 9B. PT B-1 in Figure 19A includes the ID of content A, ID of content provider 2, ID of UCP B, validity period of UCP B, Id of service provider 3, ID of PT B-1, validity period of PT B-1, pricing condition 30, and two types of prices 31 and 32.

"User Conditions 30" of "Pricing Conditions 30" in PT B-1 is set to "No Condition" and "Equipment Conditions 30" contains information ('Slave Equipment') which conditions the equipment to be a slave equipment. Therefore, PT B-1 can be selected only when the content A is used by the slave equipment. The slave equipment means equipment which can not perform such processing as to purchase a predefined content or to settle an account.

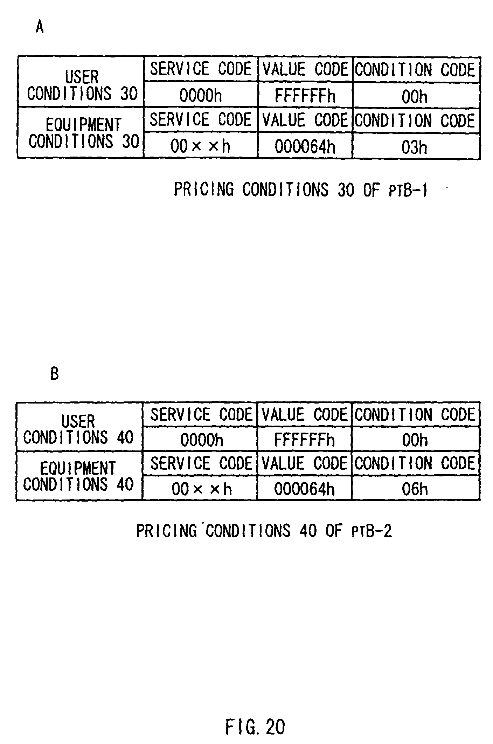

In "User Conditions 30" and "Equipment Conditions 30" of "Pricing Conditions 30", actually, code values of each type of code are set as shown in Figure 20A. "User Conditions 30" contains a service code 0000h meaning "No Condition", a value code FFFFFFh having no meaning in this case, and a condition code 00h (Figure 12B) meaning "No Condition". "Equipment Conditions 30" is specified in "Slave equipment", therefore the service code is set to 00xxh meaning "With Conditions for Equipment", the value code is set to 000064h indicating "value 10" and the condition code is set to 03h meaning "< (smaller)". In this example, such code values are set since the equipment number is set at below number 100 for the slave equipment.

'100 Yen' in "Price 31" on PT B-1 is the price when reproduction is performed four times as "Type 21" of "Usage Details 21" of UCP A indicates 'Pay Per Play 4'. Also, '300 Yen' in "Price 32" is the price when duplication is performed two times as "Type 22" of "Usage Details 22" of UCP A indicates 'Pay Per Play 2'.

PT B-2 prepared according to UCP B includes, as shown in Figure 19B, the ID of content A, ID of content provider 2, ID of UCP B, UCP B, ID of service provider 3, ID of PT B-2, validity period of PT B-2, pricing condition 40, and two types of prices 41 and 42.

"User Conditions 40" of "Pricing Conditions 40" in PT B-2 is set to "No Condition" and "Equipment Conditions 40" contains information ('Master Equipment') which conditions the equipment to be a master equipment. In short, PT B-2 can be selected only when the content A is used by the master equipment. The master equipment means equipment which can perform such processing as to purchase a predefined content or to settle an account.

In "User Conditions 40" and "Equipment Conditions 40" of "Pricing Conditions 40", actually, code values of each type of code are set as shown in Figure 20B. "User Conditions 40" of "Pricing Conditions 40" contains a service code 0000h (Figure 12A) meaning "No Condition", a value code FFFFFFh having no meaning in this case, and a condition code (15B) 00h meaning "No Condition". In "Equipment Conditions 40", the service code is set to 00xxh meaning "With Condition for Equipment", the value code is set to 000064h indicating "value 100" and the condition code is set to 06h meaning "= > (equal or larger)". In this example, such code values are set since the equipment number is set at over number 100 for the master equipment.

The prices indicated in "Price 41" and "Price 42" on PT B-2 are charges when using the content A according to the use type indicated in each "Type 21" of "Usage Details 21" and "Type 22" of "Usage Details 22" in UCP B.

Here, comparing the prices on PT B-1 (applied to the slave equipment) and PT B-2 (applied to the master equipment), the price on PT B-1 is found to be set at two times as much as that on PT B-2. For example, while "Price 31" on PT B-1 indicates '100 Yen', "Price 41" on PT B-2 indicates '50 Yen'. Similarly, while "Price 32" indicates '300 Yen', "Price 42" indicates '150 Yen'

Returning to Figure 16, the policy storage section 43 stores the content's UCP supplied by the content provider 2 and supplies it to the secure container preparation section 44.

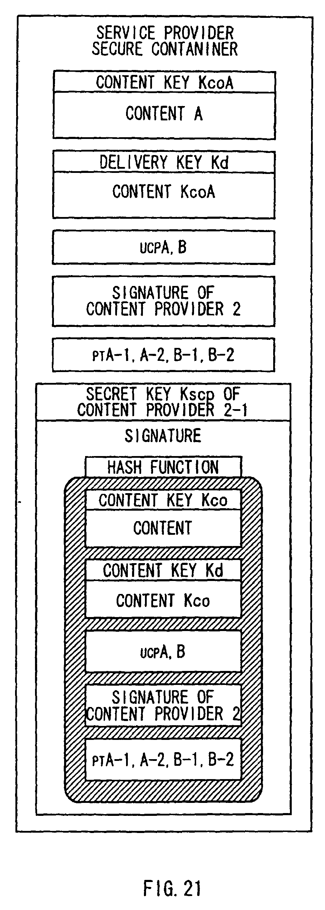

The secure container preparation section 44 prepares a service provider secure container consisting, for example, of the content A (encrypted with a content key KcoA), content key KcoA (encrypted with a delivery key Kd), UCP A, UCP B, signature of the content provider 2, PT A-1, PT A-2, PT B-1, PT B-2, and signature of the service provider, as shown in Figure 21.

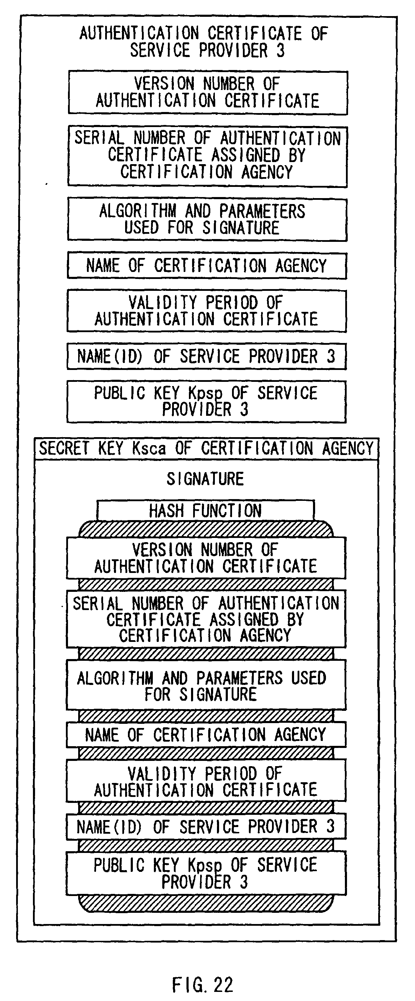

Also, the secure container preparation section 44 supplies the prepared service provider secure container to the user home network 5 by attaching an authentication certificate, such as the one shown in Figure 22, consisting of its version number, its serial number assigned to the service provider 3 by the certification agency, the algorithm and parameters used for the signature, the name of the certification agency, the validity period of the authentication certificate, the name and public key Kpsp of the service provider 3, and the signature of the certification agency.

Returning to Figure 16, the mutual authentication section 45 performs mutual authentication with the content provider 2 before receiving the content provider secure container from the content provider 2. It also performs mutual authentication with the user home network 5 before sending the service provider secure container to the user home network 5. However, this mutual authentication is not performed if, for example, the network 4 is a communication satellite network. In this example, since the content provider secure container and service provider secure container do not contain secret information, the service provider 3 need not necessarily perform mutual authentication with the content provider 2 and user home network 5.

(5) User home network

(5-1) Receiver 51

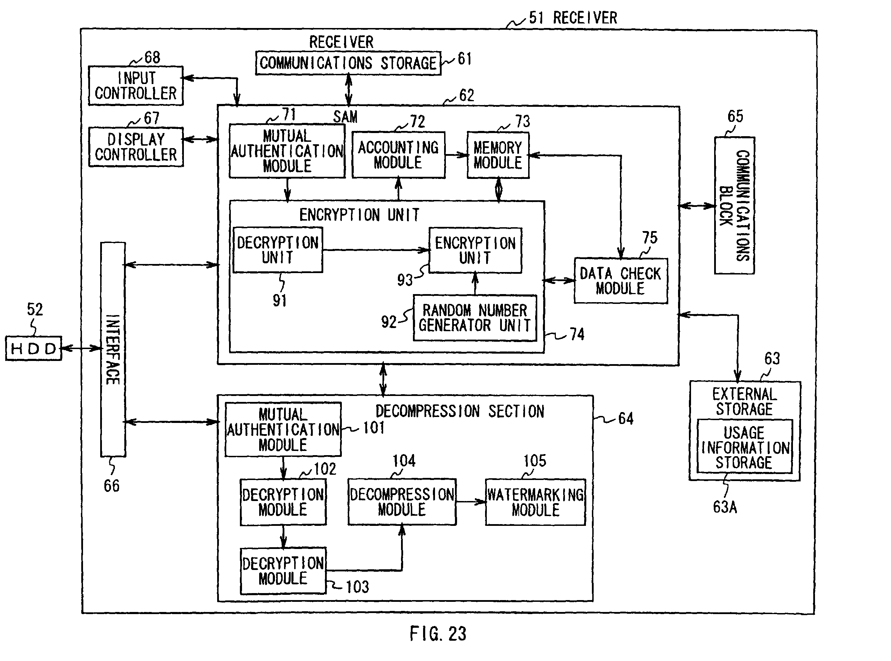

Figure 23 shows an example configuration of the receiver 51 in the user home network 5. The receiver 51 is stationary equipment which is connected to HDD 52 consisting of a communications block 61, SAM (Secure Application Module) 62, external storage 63, decompression section 64, communications block 65, interface 66, display controller 67, and input controller 68.

The communications block 61 of the receiver 51 communicates with the service provider 3 or the EMD service center 1 through the network 4, sending and receiving necessary information.

SAM 62 consists of a mutual authentication module 71, accounting module 72, memory module 73, encryption/decryption module 74, and data check module 75. It is made up of single-chip ICs designed exclusively for cryptographic use. It has a multi-layer construction in which the memory cells inside are sandwiched by dummy layers of aluminum and the like. Since it operates at a small range of voltage or frequency, it is difficult to read data illegally from outside (tamper-proof).

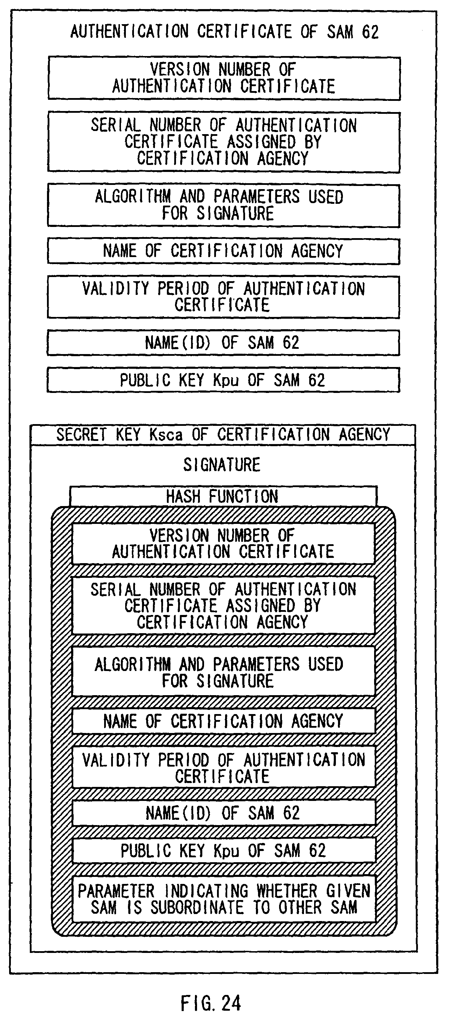

The mutual authentication module 71 of SAM 62 sends SAM 62 authentication certificate (shown in Figure 24) stored in the memory module 73 to the partner of mutual authentication, performs mutual authentication, and supplies the temporary key Ktemp (session key) consequently shared by the partner of mutual authentication to the encryption/decryption module 74. The authentication certificate of SAM contains information that corresponds to the information contained in the authentication certificate (Figure 15) of the content provider 2 and authentication certificate (Figure 22) of the service provider 3. Therefore, its description is omitted.

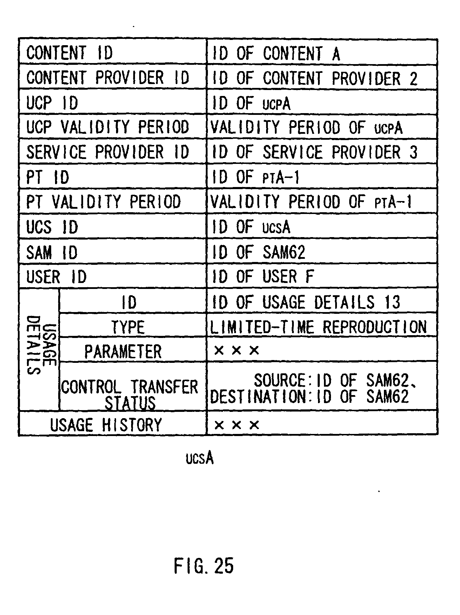

The accounting module 72 prepares usage control status (UCS) and accounting information based on the usage details of the selected UCP. Figure 25 shows an example of UCS when the rights for content have been purchased according to the use type 'Purchase and Reproduce.' It shows UCS A generated based on the usage details 13 in UCP A shown in Figure 9A and "Price 11" on PT A-1 shown in Figure 17A. As shown in Figure 25, UCS contains the predetermined information corresponding to "Content ID," "Content Provider ID," "UCP ID," "UCP Validity Period," "Service Provider ID," "PT ID," "PT Validity Period," "UCS ID," "SAM ID," "User ID," "Usage Details," and "Usage History."

"Content ID," "Content Provider ID," "UCP ID," "UCP Validity Period," "Service Provider ID," "PT ID," "PT Validity Period" of UCS contain the information specified in the corresponding items of the PT. Thus, in the case of UCS A in Figure 25, "Content ID" contains the ID of content A, "Content Provider ID" contains the ID of the content provider 2, "UCP ID" contains the ID of UCP A, "UCP Validity Period" contains the validity period of UCP A, "Service Provider ID" contains the ID of the service provider 3, "PT ID" contains the ID of PT A-1, and "PT Validity Period" contains the validity period of PT A-1.

"UCS ID" contains the ID assigned to the given UCS, and thus "UCS ID" of UCS A contains the ID of UCS A. "SAM ID" contains the ID of the equipment and "SAM ID" of UCS A contains the SAM 62 ID of the receiver 51. "User ID" contains the ID of the user who uses the content and "User ID" of UCS A contains the ID of user of the receiver 51.

"Usage Details" consists of items "ID," "Type," "Parameter," and "Control Transfer Status." Of these items, "ID," "Type," and "Parameter" contain the information specified in the corresponding items of "Usage Details" of the selected UCP. Thus, "ID" of UCSA contains the information (ID of Usage Details 11) specified in "ID 11" of "Usage Details 11" of UCP A, "Type" is set to 'Purchase and Reproduction' specified in "Type 11" of "Usage Details 11," and "Parameter" contains the information (information corresponding to 'Purchase and Reproduction') specified in "Parameter 11" of "Usage Details 11"

"Control Transfer Status" of "Usage Details" contains the respective IDs of the source equipment (equipment that has purchased the content) and destination equipment if "Control Transfer Permission information" of the selected UCP is set to 'Permitted' (i.e., control transfer is possible). If no control transfer is performed, the ID of the source equipment is used as the ID of the destination equipment. If "Control Transfer Permission Information" of the UCP is set to 'Not Permitted,' "Control Transfer Status" should be set to 'Not Permitted.' In that case, control transfer of the content is not performed (not permitted). In "Control Transfer Status" of UCS A, the IDs of both source and destination equipment are set to the ID of SAM 62 because "Control Transfer Permission Information 11" of "Usage Details 11" of UCP A is set to 'Permitted' and because the control of content A is not transferred.

"Usage History" contains the history of use types for the same content. Only information that represents 'Limited-Time Reproduction' is stored now in "Usage History" of UCS A. For example, if the receiver 51 has used content A before, the then use type is also stored.

In the case of the UCS described above, "UCP Validity Period" and "PT Validity Period" have been specified. However, these items may not be specified for the UCS. Also, although "Content Provider ID" has been specified for the above UCS, it may not be specified if the UCP ID is unique enough to identify the content provider. Similarly, "Service Provider ID" may not be specified if the PT ID is unique enough to identify the service provider.

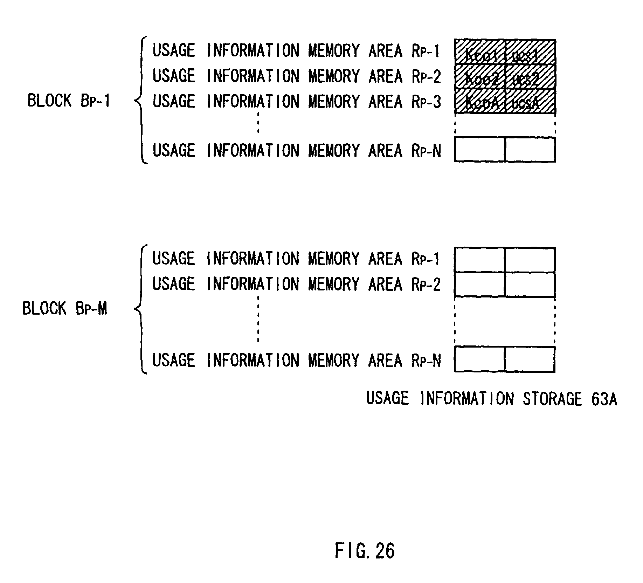

The UCS prepared is sent to the external storage 63 and stored in its usage information storage 63A, together with the content keys Kco (encrypted with a save key Ksave) supplied by the decryption unit 91 of the encryption/decryption module 74 of the receiver 51. As shown in Figure 26, the usage information storage 63A of the external storage 63 are divided into M number of blocks (1 MB each, for example): BP-1 to BP-M. Each block BP, in turn, is divided into N number of usage information memory areas: RP-1 to RP-N. The content keys Kco (encrypted with a save key Ksave) and UCS supplied by SAM 62 are stored, in matched pairs, in the appropriate usage information memory areas RP of the usage information storage 63A.

In the example of Figure 26, the UCS A shown in Figure 25 and the content key KcoA (encrypted with a save key Ksave) are stored, in matched pairs, in the usage information memory area RP-3 of the block BP-1. Other content keys Kco1 and Kco2 (encrypted with a save key Ksave) and usage control status UCS 1 and 2 are stored in the usage information memory areas RP-1 and RP-2 of the block BP-1. The usage information memory areas RP-4 (not shown) to RP-N of the block BP-1 as well as blocks BP-2 (not shown) to BP-M currently do not store any content key Kco or usage control status UCS and contain the initial information which indicates that they are empty. Hereafter, the content keys Kco (encrypted with a save key Ksave) and UCS stored in the usage information memory areas RP will be collectively referred to as usage information if there is no need to treat them separately.

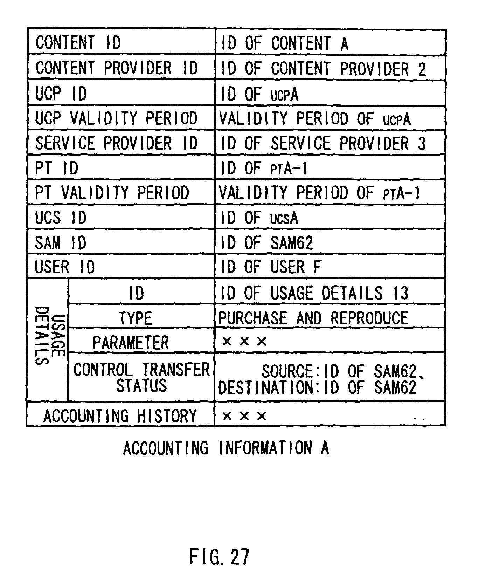

Figure 27 shows the accounting information A prepared together with UCS A shown in Figure 25. As shown in Figure 27, accounting information contains "Content ID," "Content Provider ID," "UCP ID," "UCP Validity Period," "Service Provider ID," "PT ID," "PT Validity Period," "UCS ID," "SAM ID," "User ID," "Usage Details," and "Accounting History."

"Content ID," "Content Provider ID," "UCP ID," "UCP Validity Period," "Service Provider ID," "PT ID," "PT Validity Period," "UCS ID," "SAM ID," "User ID," and "Usage Details" of the accounting information contain the information specified in the corresponding items of the UCS. Thus, in the case of the accounting information A in Figure 27, "Content ID" contains the ID of the content A, "Content Provider ID" contains the ID of the content provider 2, "UCP ID" contains the ID of UCP A, "UCP Validity Period" contains the validity period of UCP A, "Service Provider ID" contains the ID of the service provider 3, "PT ID" contains the ID of PT A-1, "PT Validity Period" contains the validity period of PT A-1, "UCS ID" contains the ID of UCS A, "SAM ID" contains the ID of SAM 62, "User ID" contains the ID of user F, and "Usage Details" contains the information specified in "Usage Details 11" of UCS A.

"Accounting History" of accounting information contains information indicating the total of the accounts calculated in equipment. "Accounting History" of accounting information A contains the total of the accounts calculated in the receiver 51.

In the accounting information descried above, although "UCP Validity Period" and "PT Validity Period" have been specified, they may not be specified for the UCS. Also, although "Content Provider ID" has been specified in the accounting information described above, it may not be specified if the UCP ID is unique enough to identify the content provider. Similarly, "Service Provider ID" may not be specified if the PT ID is unique enough to identify the service provider.

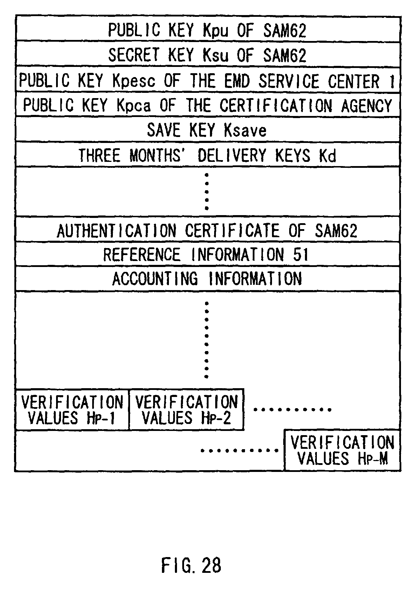

Returning to Figure 23, the memory module 73 stores keys such as the public key Kpu of SAM 62, the secret key Ksu of SAM 62, the public key Kpesc of the EMD service center 1, the public key Kpca of the certification agency, the save key Ksave, and three months' delivery keys Kd, the authentication certificate of SAM 62, accounting information, reference information 51, and M number of verification values HP-1 to HP-M, as shown in Figure 28.

The verification value HP-1 stored in the memory module 73 is the hash value obtained by the application of a hash function to all the data stored in block BP-1 of the usage information storage 63A of the external storage 63. The verification values HP-2 to HP-M are hash values obtained by the application of the hash function to the data stored in the corresponding blocks BP-2 to BP-M of the external storage 63, as is the case with the verification value HP-1.

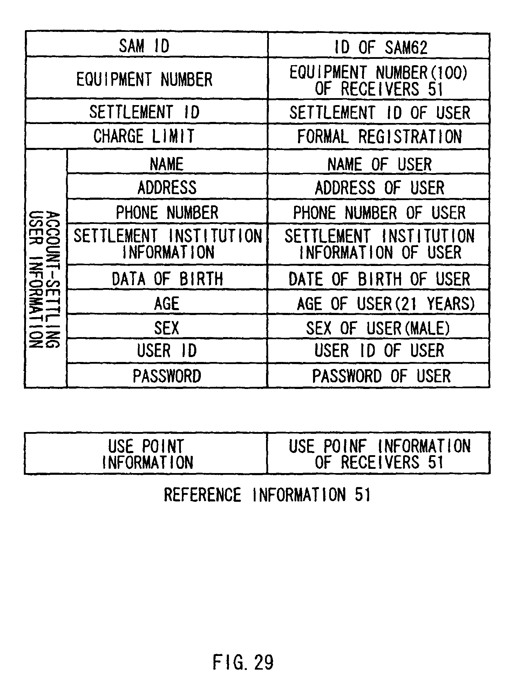

Figure 29 shows the reference information 51 stored in the memory module 73. The reference information contains predetermined information specified for each of the items of "SAM ID" "Equipment Number," "Settlement ID," "Charge Limit," "Account-Settling User Information," "Subordinate User Information," and "Use Point Information."

The reference information 51 contains the ID of SAM 62, equipment number (100) of SAM 62, settlement ID of user, account-settling user information of user (general information (the name, address, phone number, settlement institution information, date of birth, age, and sex), ID, and password of user), and predetermined use point information.

"Charge Limit" contains the upper limit on amounts charged, which varies depending on whether the given equipment is registered formally or temporarily.

"Charge Limit" of the reference information 51 contains the upper limit on amounts charged for formally registered equipment ('Formal Registration') because the receiver 51 has been formally registered.

Returning to Figure 23, the encryption/decryption module 74 of SAM 62 consists of an decryption unit 91, random number generator unit 92, and encryption unit 93. The decryption unit 91 decrypts the encrypted content key Kco with the delivery key Kd and outputs the results to the encryption unit 93. The random number generator unit 92 generates a random number with predetermined digits as required (for example, during mutual authentication), generates a temporary key Ktemp as required, and outputs them to the encryption unit 93.

The encryption unit 93 encrypts the decrypted content key Kco again with the save key Ksave stored in the memory module 73. The encrypted content key Kco is supplied to the external storage 63. When sending the content key Kco to the decompression section 64, the encryption unit 93 encrypts it with the temporary key Ktemp generated by the random number generator unit 92.

The data check module 75 checks the data in a block BP of the usage information storage 63A of the external storage 63 for falsification by comparing the hash value of the data stored in the block BP with the corresponding verification value HP stored in the memory module 73.

The decompression section 64 consists of a mutual authentication module 101, decryption module 102, decryption module 103, decompression module 104, and watermarking module 105. The mutual authentication module 101 performs mutual authentication with SAM 62 and outputs the temporary key Ktemp to the decryption module 102. The decryption module 102 uses the temporary key Ktemp to decrypt the content key Kco encrypted by the temporary key Ktemp, and outputs the results to the decryption module 103. The decryption module 103 decrypts the content recorded on the HDD 52, with the content key Kco, and outputs the results to the decompression module 104. The decompression module 104 further decompresses the decrypted content by a method such as ATRAC2 and outputs the results to the watermarking module 105. The watermarking module 105 watermarks the content for identification of the receiver 51 and outputs the results to speakers (not shown) to reproduce music.

The communications block 65 communicates with the receiver 201 of the user home network 5. The interface 66 converts the signals from SAM 62 and the decompression section 64 into a specified form and outputs the results to the HDD 52. It also converts the signals from the HDD 52 into a specified form and outputs the results to SAM 62 and the decompression section 64.

The display controller 67 controls the output to a display unit (not shown). The input controller 68 controls the input from an operator panel (not shown) consisting of various buttons.

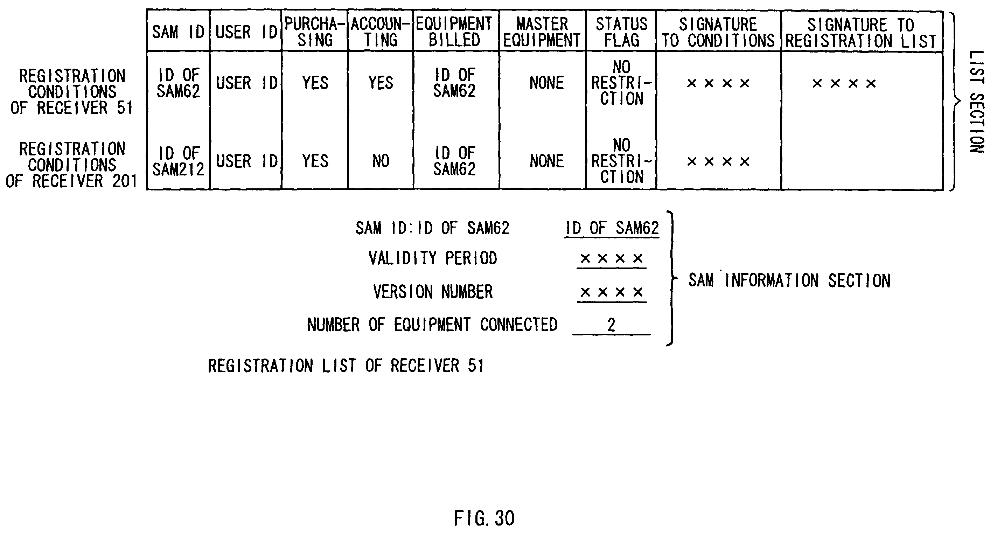

The HDD 52 stores registration lists like the one shown in Figure 30 in addition to the content and the like supplied by the service provider 3. The registration list consists of the list section that stores tabulates information and the SAM information section that stores specified information about the equipment that possesses the given registration list.

The SAM information section stores (in the "SAM ID" field) the SAM ID of the equipment that possesses the given registration list, in this example, the SAM 62 ID of the receiver 51. It also stores the validity period of the registration list (in the "Validity Period" field), version number of the registration list (in the "Version Number" field), and number of equipment connected (including this equipment) (in the "Number of Equipment Connected" field), which is two in total, in this example, including the receiver 51 itself and the one receiver 201 connected to it.

The list section consists of nine items "SAM ID," "User ID," "Purchasing," "Accounting," "Equipment Billed," "Master Equipment," "Status Flag," "Public Key," and "Signature" and, in this example, stores predetermined information in each field as the registration conditions of the receivers 51, 201.

"SAM ID" stores the SAM ID of the equipment. In this example, the SAM 62 ID of the receiver 51, SAM 212 ID of the receiver 201 are stored. "User ID" stores the ID of user of the corresponding equipment.

"Purchasing" stores information ('Yes' or 'No') which indicates whether the equipment can purchase content. In this example, since the receivers 51 and 201 can purchase content, 'Yes' is stored in the appropriate rows of the "Purchasing" column.

"Accounting" stores information ('Yes' or 'No') which indicates whether the equipment can perform accounting in communication with the EMD service center 1. In this example, the receivers 51 can only perform accounting while the receiver 201 can not. Thus the appropriate row of the "Accounting" column corresponding to the receiver 51 stores 'Yes', and that corresponding to the receiver 201 stores 'No.'

"Equipment Billed" stores the SAM ID of the equipment with which accounts are settled. In this example, since the receiver 51 (SAM 62) can settle its account for itself, the ID of SAM 62 of the receiver 51 is stored in the appropriate row of the "Equipment Billed" column. Also, since the receiver 51, instead of the receiver 201 which can not settle its own account, settle that account, the appropriate row of the "Equipment Billed" column corresponding to the receiver 201 stores the ID of SAM 62 of the receiver 51.

"Master Equipment" stores the SAM ID of the connected equipment that can provide content if the given equipment receives content from other equipment connected rather than from the service provider 3. In this example, the receivers 51 and 201 receive content from the service provider 3, so "Master Equipment" corresponding to each stores information ('None') which indicates that there is no equipment providing content.

"Status Flag" stores any restrictions to the operation of the equipment. If there is no such restriction, appropriate information ('No Restriction') is stored. If there are any restrictions or if there is any condition that will stop the operation, appropriate information ('Restricted' or 'Stop,' respectively) is stored. For example, if settlement of accounts has failed, "Status Flag" of that equipment is set to 'Restricted.' In this example, the equipment with its "Status Flag" set to 'Restricted' can reproduce (read out) the content already purchased, but cannot purchase new content. In short, certain restrictions are placed on the equipment. Besides, if illegal acts such as illegal duplication of content are detected, "Status Flag" is set to 'Stop' and the operation of the equipment is stopped. Consequently, the equipment can no longer receive any service from the EMD system.

In this example, no restriction is placed on the receivers 51 and 201 and their "Status Flag" is set to 'No Restriction.' The statuses, such as 'Restricted' and 'Stop,' which restrict the operation of the receiver will be collectively referred to as operational restriction information if there is no need to address them individually.

"Signature to Conditions" stores the signature of the EMD service center 1 to the information stored in "SAM ID," "User ID," "Purchasing," "Accounting," "Equipment Billed," "Master Equipment," and "Status Flag." "Signature to Registration List" stores the signature to the entire data specified in the registration list.

(5-2) Receiver 201

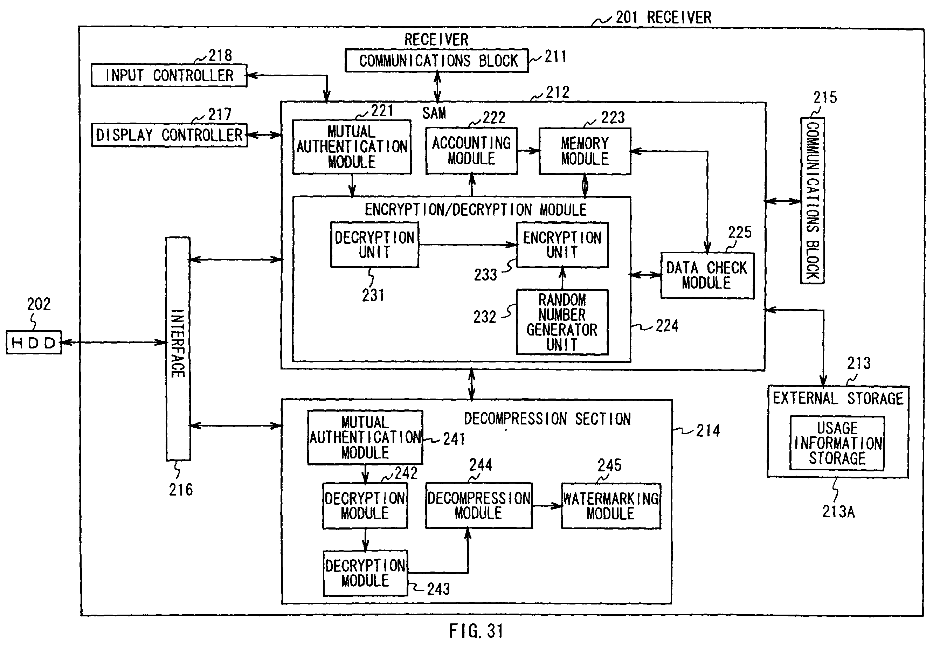

Figure 31 shows an example configuration of the receiver 201. The components from the communications block 211 to input controller 218 of the receiver 201 have functions similar to those of the communications block 61 to the input controller 68 of the receiver 51. Thus, their detailed description is omitted where possible.

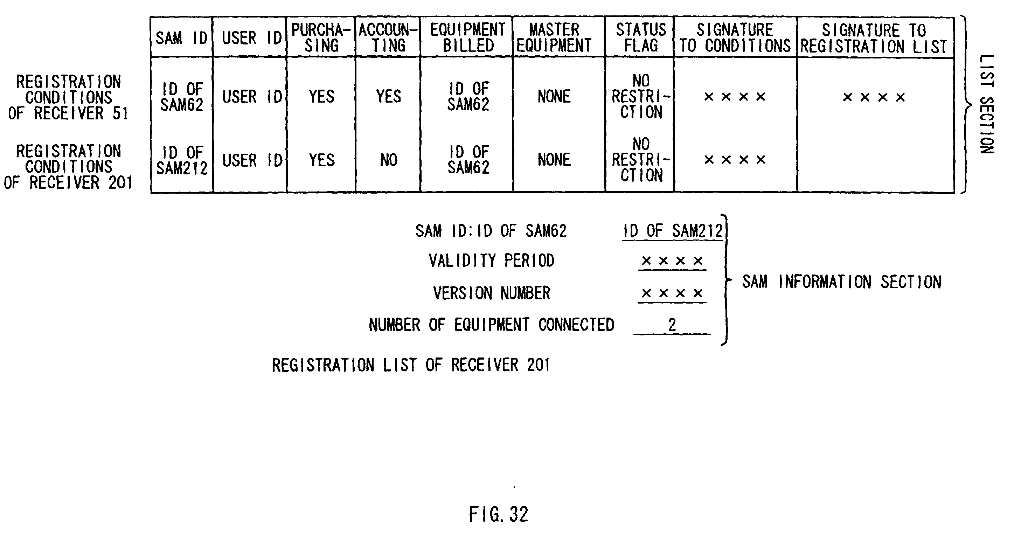

HDD 202 stores the registration list of the receiver 201 in addition to the purchased content as shown in Figure 32. The SAM information section of the registration list stores the SAM 212 ID of the receiver 201, the validity period of the registration list, version number of the registration list, and number of equipment connected (which is two in total, including the receiver 201 itself and the receiver 51 connected to it). The list section stores information similar to information in the list section of the registration list of the receiver 51 in Figure 30.

(6) Purchasing and utilization of content

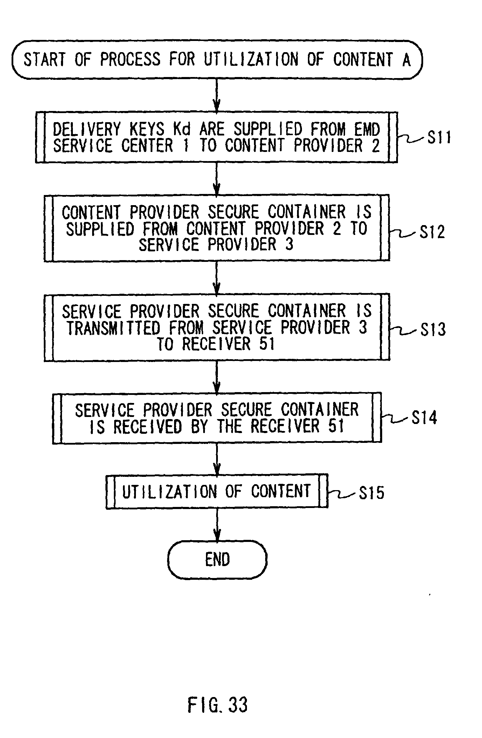

Now the processing in the EMD system will be described with reference to the flow chart in Figure 33. Here it is assumed that the content A in the content provider 2 is supplied to and used by the receiver 51 of the user home network 5 via the service provider 3.

(6-1) Transmission of delivery keys from EMD service center to content provider

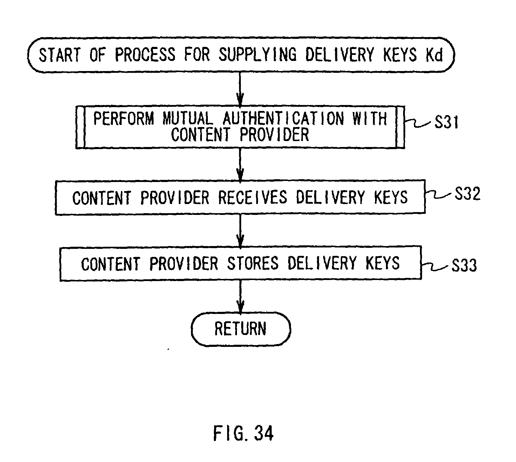

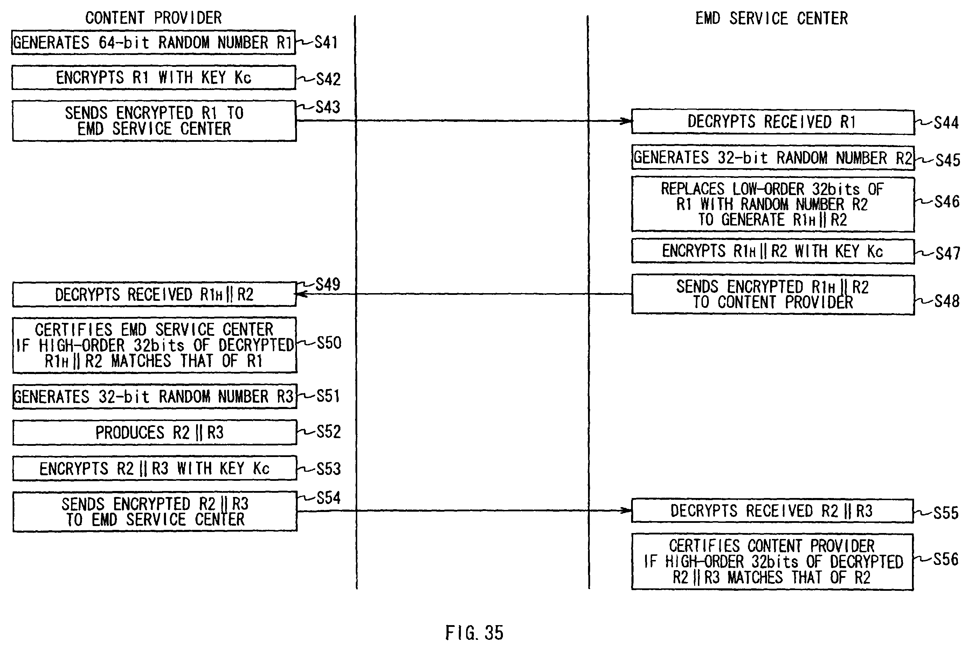

In Step S11, the delivery keys Kd are supplied to the content provider 2 by the EMD service center 1. Details of this process is shown in the flow chart of Figure 34. In Step S31, the mutual authentication section 17 (Figure 3) of the EMD service center 1 performs mutual authentication with the mutual authentication section 39 (Figure 8) of the content provider 2. When the authenticity of the content provider 2 is verified, the content provider management section 12 of the EMD service center 1 sends the delivery keys Kd supplied by the key server 14, to the content provider 2. Details of mutual authentication will be described later with reference to Figures 35 to 37.

In Step S32, the encryption section 36 of the content provider 2 receives the delivery keys Kd sent from the EMD service center 1, and stores them in Step S33.

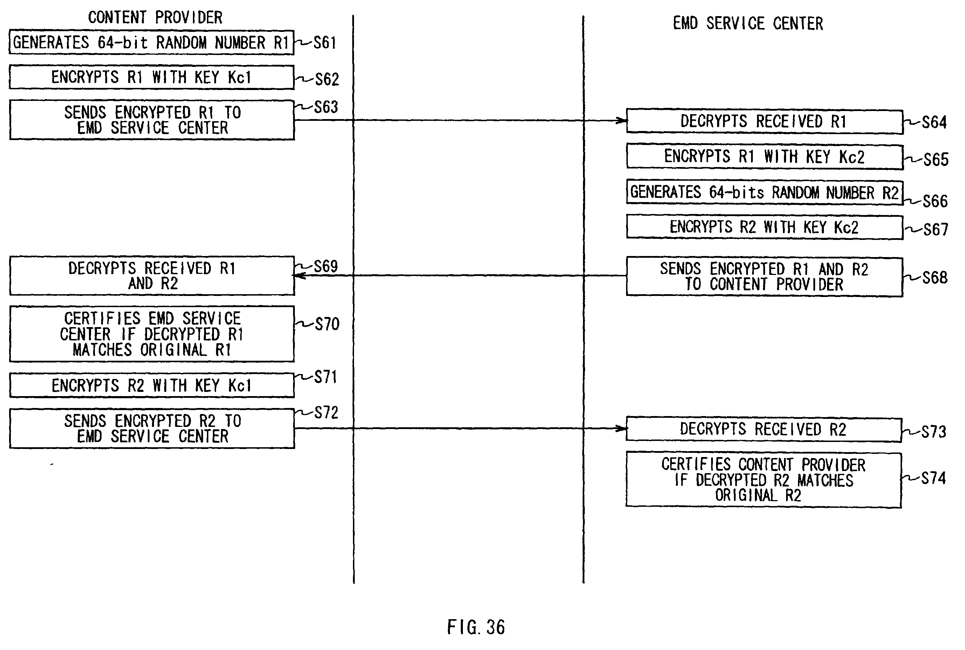

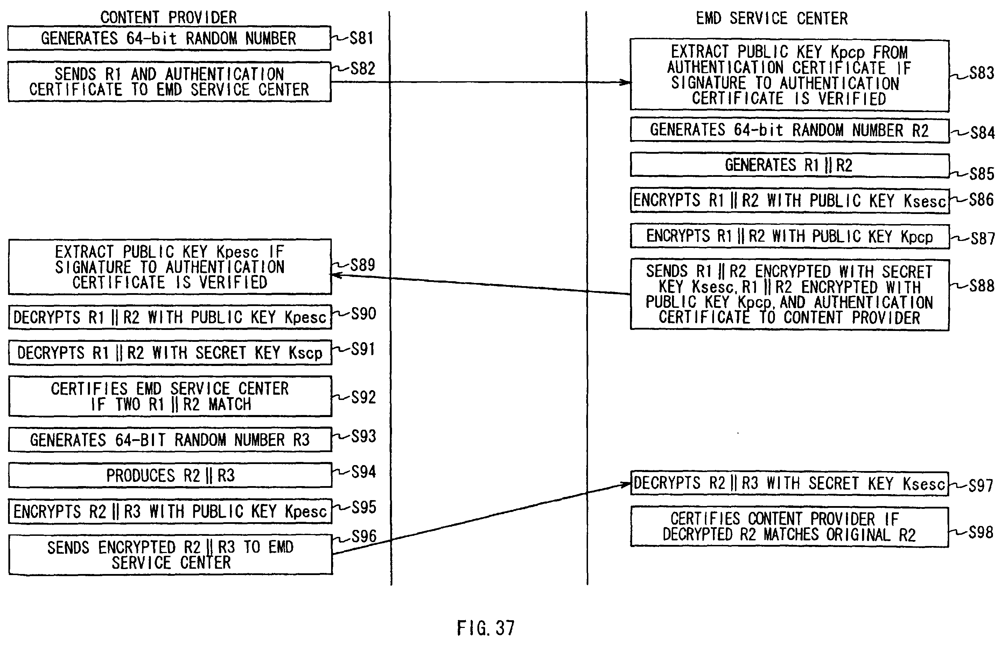

When the encryption section 36 of the content provider 2 stores the delivery keys Kd, the process of Step S11 finishes and Step S12 in Figure 33 begins. Before explaining the process of Step S12, the mutual authentication (process of checking for spoofing) in Step S31 of Figure 34 will be described, taking the case in which one common key is used (Figure 35), the case in which two common keys are used (Figure 36), and the case in which a public key is used (Figure 37).

Figure 35 is a flow chart which describes the use of one common key in common-key DES cryptography for the operation of mutual authentication between the mutual authentication section 39 of the content provider 2 and mutual authentication section 17 of the EMD service center 1. In Step S41, the mutual authentication section 39 of the content provider 2 generates a 64-bit random number R1 (it may also be generated by the random number generator section 35). In Step S42, the mutual authentication section 39 of the content provider 2 DES-encrypts the random number R1 with a prestored common key Kc (it is also possible to make the encryption section 36 perform the encryption). In Step S43, the mutual authentication section 39 of the content provider 2 sends the encrypted random number R1 to the mutual authentication section 17 of the EMD service center 1.

In Step S44, the mutual authentication section 17 of the EMD service center 1 decrypts the received random number R1 with a prestored common key Kc. In Step S45, the mutual authentication section 17 of the EMD service center 1 generates a 32-bit random number R2. In Step S46, the mutual authentication section 17 of the EMD service center 1 replaces the low-order 32 bits of the decrypted 64-bit random number R1 with the random number R2 to generate a concatenation $R1_H\|R2$, where $Ri_H$ is the high order n bits of Ri and $A\|B$ is a concatenation of A and B (the low-order n bits of A and m-bit B are concatenated to produce n+m bits). In Step S47, the mutual authentication section 17 of the EMD service center 1 DES-encrypts $R1_H\|R2$ with the common key Kc. In Step S48, the mutual authentication section 17 of the EMD service center 1 sends the encrypted $R1_H\|R2$ to the content provider 2.

In Step S49, the mutual authentication section 39 of the content provider 2 decrypts the received $R1_H\|R2$ with the common key Kc. In Step S50, the mutual authentication section 39 of the content provider 2 checks the high-order 32 bits of the decrypted $R1_H\|R2$ against the high-order 32 bits $R1_H$ of the random number R1 generated in Step S41, and if they match, it certifies that the EMD service center 1 is legitimate. If the generated $R1_H$ and received $R1_H$ do not match, the process is terminated. If they match, the mutual authentication section 39 of the content provider 2 generates a 32-bit random number R3 in Step S51. In Step S52, the mutual authentication section 39 of the content provider 2 produces a concatenation $R2\|R3$ by placing the random number R2, which is the low-order 32 bits taken out of the received and decrypted $R1_H\|R2$, in the high-order position and placing the generated random number R3 in the low-order position. In Step S53, the mutual authentication section 39 of the content provider 2 DES-encrypts $R2\|R3$ with the common key Kc. In Step S54, the mutual authentication section 39 of the content provider 2 sends the encrypted concatenation $R2\|R3$ to the mutual authentication section 17 of the EMD service center 1.

In Step S55, the mutual authentication section 17 of the EMD service center 1 decrypts the received concatenation $R2\|R3$ with the common key Kc. In Step S56, the mutual authentication section 17 of the EMD service center 1 checks the high-order 32 bits of the decrypted concatenation $R2\|R3$ against the random number R2. If they match, it certifies that the content provider 2 is legitimate. If they do not, it terminates the process, determining that the content provider 2 is illegitimate.

Figure 36 is a flow chart which describes the use of two common keys Kc1 and Kc2 in common-key DES cryptography for the operation of mutual authentication between the mutual authentication section 39 of the content provider 2 and mutual authentication section 17 of the EMD service center 1. In Step S61, the mutual authentication section 39 of the content provider 2 generates a 64-bit random number R1. In Step S62, the mutual authentication section 39 of the content provider 2 DES-encrypts the random number R1 with a prestored common key Kc1. In Step S63, the mutual authentication section 39 of the content provider 2 sends the encrypted random number R1 to the EMD service center 1.

In Step S64, the mutual authentication section 17 of the EMD service center 1 decrypts the received random number R1 with a prestored common key Kc1. In Step S65, the mutual authentication section 17 of the EMD service center 1 encrypts the random number R1 with a prestored common key Kc2. In Step S66, the mutual authentication section 17 of the EMD service center 1 generates a 64-bit random number R2. In Step S67, the mutual authentication section 17 of the EMD service center 1 encrypts the random number R2 with the common key Kc2. In Step S68, the mutual authentication section 17 of the EMD service center 1 sends the encrypted random numbers R1 and R2 to the mutual authentication section 39 of the content provider 2.

In Step S69, the mutual authentication section 39 of the content provider 2 decrypts the received random numbers R1 and R2 with a prestored common key Kc2. In Step S70, the mutual authentication section 39 of the content provider 2 checks the decrypted random number R1 against the random number R1 generated in Step S61 (the random number R1 before encryption). If they match, it certifies that the EMD service center 1 is legitimate. If they do not match, it terminates the process, determining that the EMD service center 1 is illegitimate. In Step S71, the mutual authentication section 39 of the content provider 2 encrypts the decrypted random number R2 with the common key Kc1. In Step S72, the mutual authentication section 39 of the content provider 2 sends the encrypted random number R2 to the EMD service center 1.

In Step S73, the mutual authentication section 17 of the EMD service center 1 decrypts the received random number R2 with the common key Kc1. In Step S74, the mutual authentication section 17 of the EMD service center 1 checks the decrypted random number R2 against the random number R2 generated in Step S66 (the random number R2 before encryption). If they match, it certifies that the content provider 2 is legitimate. If they do not, it terminates the process, determining that the content provider 2 is illegitimate.

Figure 37 is a flow chart which describes the use of a 160-bits length elliptic curve in public-key cryptography for the operation of mutual authentication between the mutual authentication section 39 of the content provider 2 and mutual authentication section 17 of the EMD service center 1. In Step S81, the mutual authentication section 39 of the content provider 2 generates a 64-bit random number R1. In Step S82, the mutual authentication section 39 of the content provider 2 sends the random number R1 as well as an authentication certificate (acquired in advance from the certification agency) containing its own public key Kpcp to the mutual authentication section 17 of the EMD service center 1.

In Step S83, the mutual authentication section 17 of the EMD service center 1 decrypts the signature of the received authentication certificate (encrypted with a secret key Ksca of the certification agency) with the secret key Ksca of the certification agency acquired in advance and takes out the hash value of a public key Kpcp of the content provider 2 and a name of the content provider 2. It also takes out the public key Kpcp and name of the content provider 2 contained as plain text in the authentication certificate. If the authentication certificate is a legitimate one issued by the certification agency, it can be decrypted and the resulting hash value of the public key Kpcp and the name of the content provider 2 should match the hash value obtained by the application of a hash function to the public key Kpcp of the content provider 2 and the name of the content provider 2 contained as plain text in the authentication certificate. This proves that the public key Kpcp is the legitimate one that has not been falsified. If the signature cannot be decrypted, or even if it can be, if the hash values do not match, the public key or provider is illegitimate. In that case, the process is terminated.

If the authentication is successful, the mutual authentication section 17 of the EMD service center 1 generates a 64-bit random number R2 in Step S84. In Step S85, the mutual authentication section 17 of the EMD service center 1 generates a concatenation R1‖R2 of the random numbers R1 and R2. In Step S86, the mutual authentication section 17 of the EMD service center 1 encrypts the concatenation R1‖R2 with its own secret key Ksesc. In Step S87, the mutual authentication section 17 of the EMD service center 1 encrypts the concatenation R1‖R2 with the public key Kpcp of the content provider 2 obtained in Step S83. In Step S88, the mutual authentication section 17 of the EMD service center 1 sends the concatenation R1‖R2 encrypted with the secret key Ksesc, the concatenation R1‖R2 encrypted by the public key Kpcp, and authentication certificate (acquired in advance from the certification agency) containing its own public key Kpesc to the mutual authentication section 39 of the content provider 2.

In Step S89, the mutual authentication section 39 of the content provider 2 decrypts the signature of the received authentication certificate with the secret key Kpca of the certification agency acquired in advance, and if it is right, takes out the public key Kpesc from the certificate. This process is the same as in Step S83 and thus description thereof will be omitted. In Step S90, the mutual authentication section 39 of the content provider 2 decrypts the concatenation R1‖R2 encrypted with the secret key Ksesc, by using the public key Kpesc obtained in Step S89. In Step S91, the mutual authentication section 39 of the content provider 2 decrypts the concatenation R1‖R2 encrypted with its own public key Kpcp, by using its own secret key Kscp. In Step S92, the mutual authentication section 39 of the content provider 2 compares the concatenation R1‖R2 decrypted in Step S90 and the concatenation R1‖R2 decrypted in Step S91. If they match, it certifies that the EMD service center 1 is legitimate. If they do not match, it terminates the process, determining that the EMD service center 1 is illegitimate.

If the authentication is successful, the mutual authentication section 39 of the content provider 2 generates a 64-bit random number R3 in Step S93. In Step S94, the mutual authentication section 39 of the content provider 2 generates a concatenation R2‖R3 of the random numbers R2 obtained in Step S90 and the random number R3 generated in Step S93. In Step S95, the mutual authentication section 39 of the content provider 2 encrypts the concatenation R2‖R3 with the public key Kpesc obtained in Step S89. In Step S96, the mutual authentication section 39 of the content provider 2 sends the encrypted concatenation R2‖R3 to the mutual authentication section 17 of the EMD service center 1.

In Step S97, the mutual authentication section 17 of the EMD service center 1 decrypts the encrypted concatenation R2‖R3 with its own secret key Ksesc. In Step S98, the mutual authentication section 17 of the EMD service center 1 checks the decrypted random number R2 against the random number R2 generated in Step S84 (the random number R2 before encryption). If they match, it certifies that the content provider 2 is legitimate. If they do not, it terminates the process, determining that the content provider 2 is illegitimate.

(6-2) Transmission of content from content provider to service provider

As described above, the mutual authentication section 17 of the EMD service center 1 and the mutual authentication section 39 of the content provider 2 perform mutual authentication. The random numbers used for the mutual authentication are temporary keys Ktemp valid only for the processes subsequent to the given mutual authentication.

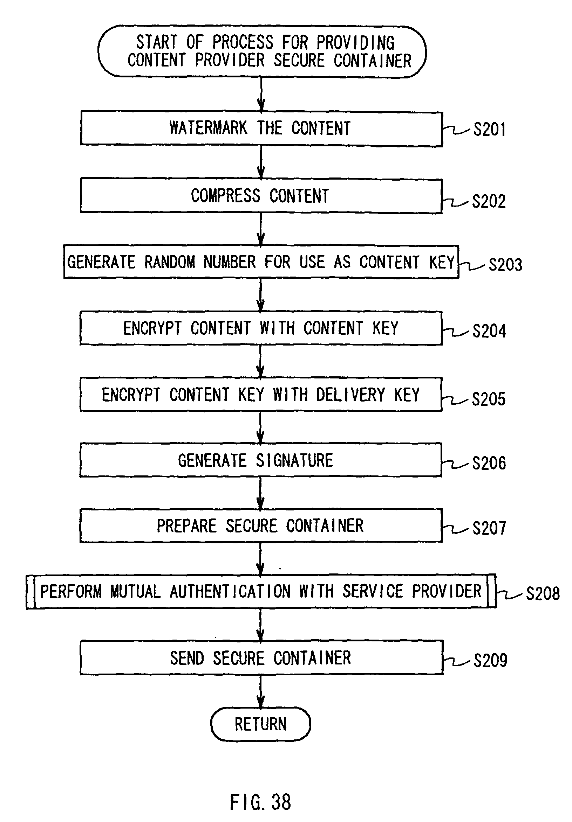

Now the process of Step S12 in Figure 33 will be described. In Step S12, the content provider secure container is supplied from the content provider 2 to the service provider 3. Details of the process is shown in the flow chart of Figure 38. In Step S201, the watermarking section 32 (Figure 8) of the content provider 2 reads content A from the content server 31, inserts a predetermined watermark that represents the content provider 2, and supplies content A to the compression section 33.

In Step S202, the compression section 33 of the content provider 2 compresses the watermarked content A by a predetermined method such as ATRAC2 and supplies it to the encryption section 34. In Step S203, the random number generator section 35 generates a random number for use as a content key KcoA and supplies it to the encryption section 34.

In Step S204, the encryption section 34 of the content provider 2 encrypts the watermarked and compressed content A by a predetermined method such as DES by using the random number (content key KcoA) generated by the random number generator section 35. Then in Step S205, the encryption section 36 encrypts the content key KcoA by a predetermined method such as DES by using the delivery key Kd supplied by the EMD service center 1.

In Step S206, the secure container preparation section 38 of the content provider 2 computes a hash value by the application of a hash function to the content A (encrypted with the content key KcoA), content key KcoA (encrypted with the delivery key Kd), and UCP A, UCP B (Figure 9) for content A stored in the policy storage section 37, and encrypts the hash value with its own secret key Ksesc, to generates the signature shown in figure 14.

In Step S207, the secure container preparation section 38 of the content provider 2 prepares the content provider secure container, shown in figure 14, which contains content A (encrypted with the content key KcoA), the content key KcoA (encrypted with the delivery key Kd), UCP A, UCP B (Figure 9) and the signature generated in Step S206.

In Step S208, the mutual authentication section 39 of the content provider 2 performs mutual authentication with the mutual authentication section 45 (Figure 16) of the service provider 3. The process of this mutual authentication is similar to that described with reference to Figures 35 to 37 and thus description thereof is omitted. In Step S209, the secure container preparation section 38 of the content provider 2 sends the content provider secure container prepared in Step S207 to the service provider 3 by attaching the authentication certificate (Figure 15) issued in advance by the certification agency.

When the content provider secure container is supplied to the service provider 3 as described above, the process of Step S12 finishes and Step S13 in Figure 33 begins.

(6-3) Transmission of content from service provider to receiver

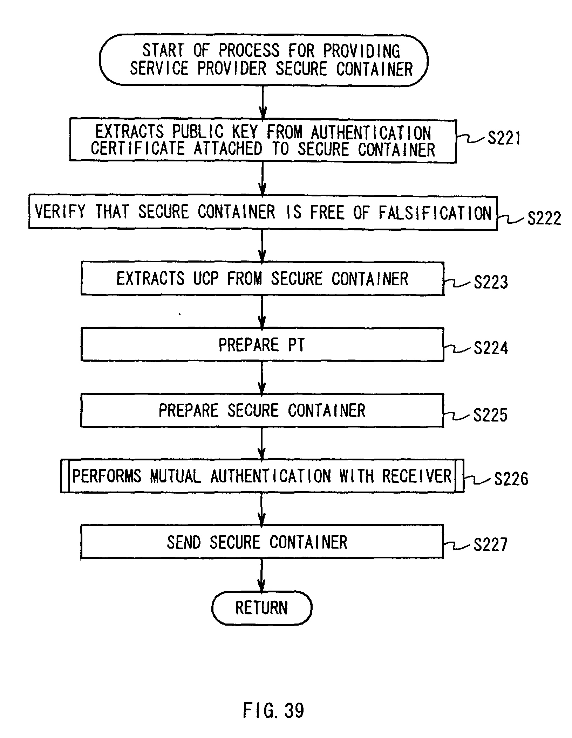

In Step S13, the service provider secure container is supplied from the service provider 3 to the user home network 5 (receiver 51). Details of the process is shown in the flow chart of Figure 39. In Step S221, the pricing section 42 (Figure 16) of the service provider 3 checks the signature contained in the authentication certificate (Figure 15) attached to the content provider secure container sent by the content provider 2. If the authentication certificate has not been falsified, the pricing section 42 takes the public key Kpcp of the content provider 2 out of the authentication certificate. The verification of the authentication certificate is similar to the process of Step S83 in Figure 37 and thus description thereof is omitted.

In Step S222, the pricing section 42 of the service provider 3 decrypts the signature in the content provider secure container sent by the content provider 2, by using the public key Kpcp of the content provider 2. It checks the content provider secure container for falsification by determining whether the resulting hash value matches the hash value obtained by the application of a hash function to the content A (encrypted with the content key KcoA), content key KcoA (encrypted with the delivery key Kd), and UCP A, UCP B. If the two hash values do not match (falsification is detected) the process is terminated. In this example, however, it is assumed that there is no falsification of the content provider secure container and Step S223 is performed next.

In Step S223, the pricing section 42 of the service provider 3 takes content A (encrypted with the content key KcoA), the content key KcoA (encrypted with the delivery key Kd), and the signature out of the content provider secure container and supplies them to the content server 41, which then stores them. Also, the pricing section 42 takes UCP A, UCP B out of the content provider secure container and supplies it to the secure container preparation section 44.

In Step S224, the pricing section 42 of the service provider 3 prepares PT A-1, PT A-2 (Figure 17) PT B-1, PT B-2 (Figure 19) and based on the extracted UCP A, UCP B and supplies them to the secure container preparation section 44.

In Step S225, the secure container preparation section 44 of the service provider 3 prepares the service provider secure container shown in Figure 21 from content A (encrypted with the content key KcoA) read out from the content server 41, the content key KcoA (encrypted with the delivery key Kd), the signature of the content provider 2, UCP A, UCP B, PT A-1, PT A-2, PT B-1 and PT B-2 that are supplied from the pricing section 42, and their signatures.

In Step S226, the mutual authentication section 45 of the service provider 3 performs mutual authentication with the mutual authentication module 71 (Figure 23) of the receiver 51. The process of this mutual authentication is similar to that described with reference to Figures 35 to 37 and thus description thereof is omitted.

In Step S227, the secure container preparation section 44 of the service provider 3 sends the service provider secure container prepared in Step S225 to the receiver 51 of the user home network 5 by attaching the authentication certificate of the service provider 3 (Figure 22).

When the service provider secure container is supplied to the receiver 51 by the service provider 3 as described above, the process of Step S13 finishes and Step S14 in Figure 33 begins.

(6-4) Recording of content by receiver

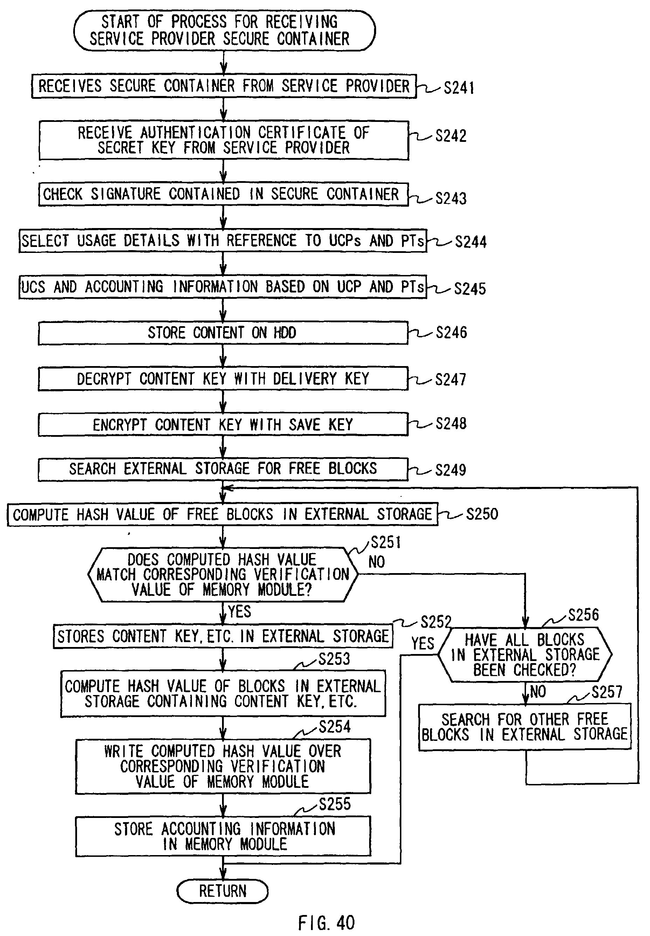

In Step S14, the service provider secure container sent by the service provider 3 is received by the receiver 51 of the user home network 5. Details of the process is shown in the flow chart of Figure 40. In Step S241, the mutual authentication module 71 of the receiver 51 (Figure 23) performs mutual authentication with the mutual authentication section 45 of the service provider 3 (Figure 16) via the communications block 61. If the mutual authentication is successful, the communications block 61 receives the service provider secure container (Figure 21) from the service provider 3-1 that participated in the mutual authentication. If the authentication fails, the process is terminated. In this example, however, it is assumed that the mutual authentication has been successful and Step S242 is performed next.

In Step S242, the communications block 61 of the receiver 51 receives an authentication certificate of the secret key from the service provider 3 that participated in the mutual authentication.

In Step S243, the encryption/decryption module 74 of the receiver 51 checks the signature contained in the service provider secure container for falsification received in Step S241. If falsification is detected, the process is terminated. In this example, however, it is assumed that there is no falsification and Step S224 is performed next.

In Step S244, the UCPs that satisfy the usage conditions and the PTs that satisfy the pricing conditions are selected, based on the reference information 51 (Figure 29) stored in the memory module 73 of the receiver 51, and displayed on the display unit (not shown) through the display controller 67. The user selects the usage details of one of the UCPs by manipulating the operator panel (not shown) with reference to the details of the UCPs and PTs displayed. Then, the input controller 68 outputs, to SAM 62, the signals that correspond to the user operation input from the operator panel.

In this example, "Use Point Information" of the reference information 51 is supposed to be set to a use point of 222 points or more. Therefore, out of UCP A, UCP B which are set to correspond to content A, UCP A is selected since "User Conditions 10" of "Usage Conditions 10" contains 200 points or higher. Besides, since "Account-Settling User Information" of the reference information 51 has been set to 'Male' users, "Pricing Conditions 10" of PT A-1 (Figure 17A) are satisfied. As a result, out of PT A-1 and PT A-2 prepared in accordance with UCP A, PT A-1 is selected. After all, details of UCP A and PT A-1 are displayed on the display unit. Also, in this example, it is assumed that the user has selected usage details 11 of UCP A (price 11 of PT A-1).

In Step S245, the accounting module 72 of SAM 62 of the receiver 51 prepares UCS A (Figure 25) and accounting information A (Figure 27), based on the entry of "Usage Details 11" of UCP A (entries of "Price 11" of UCP A-1) selected in Step S244. Therefore, in this case, content A is purchased and reproduced for 2000 YEN.

In Step S246, content A (encrypted with the content key KcoA), UCP A, PT A-1, PT A-2, and the signature of the content provider 2 are taken out of the service provider secure container (Figure 21), output to the HDD 52, and stored there. In Step S247, the decryption unit 91 of the encryption/decryption unit 74 decrypts the content key KcoA (encrypted with the delivery key Kd) contained in the service provider secure container, with the delivery key Kd stored in the memory module 73.

In Step S248, the encryption unit 93 of the encryption/decryption unit 74 encrypts the content key KcoA decrypted in Step S247, by means of the save key Ksave stored in the memory module 73.

In Step S249, the data check module 75 of SAM 62 searches the usage information storage 63A (Figure 26) of the external storage 63 for the block BP which has free space and in which the content key KcoA encrypted with the save key Ksave in Step S248 and UCS A prepared in Step S245 are stored in matching pairs. In this example, block BP-1 of the usage information storage 63A is detected. Incidentally, in the usage information storage 63A of Figure 26, the usage information memory area RP-3 of the block BP-1 is shown to store the content key KcoA and UCS A. In this example, however, they are not stored at this point and the usage information memory area RP-3 of the block BP-1 is free, containing predetermined initial information.

In Step S250, the data check module 75 of the receiver 51 obtains a hash value by applying a hash function to the block BP-1 data (all the data stored in the usage information memory areas RP-1 to RP-N) detected in Step S249. Then in Step S251, the data check module 75 compares the hash value obtained in Step S250 with the verification value HP-1 (Figure 28) that is stored in the memory module 73 and that corresponds to block BP-1. If they match, the block BP-1 data is free of falsification and Step S252 is performed next.

In Step S252, SAM 62 of the receiver 51 stores the usage information (the content key KcoA encrypted with the save key Ksave in Step S248 and UCS A (Figure 25) prepared in Step S245) in the usage information memory area RP-3 of the block BP-1 in the usage information storage 63A (of the external storage 63), as shown in Figure 26.

In Step S253, the data check module 75 of the receiver 51 computes a hash value by applying a hash function to the block BP-1 data in the usage information storage 63A, including the usage information stored in the usage information memory area RP-3 in Step S252. In Step S254, the data check module 75 overwrites the verification value HP-1 stored in the memory module 73 with the hash value. In Step S255, the accounting module 72 stores, in the memory module 73, the accounting information A prepared in Step S245, and the process finishes.

In Step S251, if the data check module 75 determines that the computed hash value and the verification value HP-1 do not match, the block BP-1 data has been falsified. Consequently, the data check module 75 goes to Step S256, where it determines whether all the blocks BP in the usage information storage 63A of the external storage 63 have been checked. If it determines that not all the blocks BP in the external storage 63 have been checked, it goes to Step S257 and searches for unchecked blocks (other blocks with free space), returns to Step S250, where the rest of the process is executed.

In Step S256, if the data check module 75 determines that all the blocks BP in the usage information storage 63A of the external storage 63 have been checked, there is no block BP (usage information memory area RP) that can store usage information. Consequently, the process finishes.

When the service provider secure container is thus received by the receiver 51, the process of Step S14 finishes and Step S15 in Figure 33 begins.

(6-4) Reproduction of content

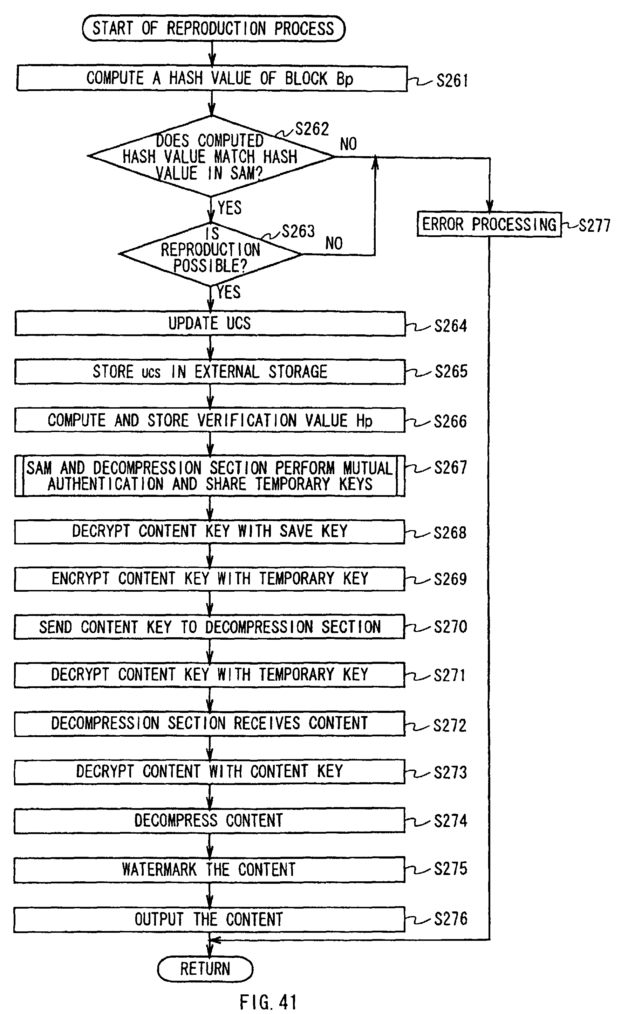

In Step S15, the contents A supplied is used by the receiver 51. In this example, according to the usage details 11 of UCP A selected in Step S224 of Figure 40, the usage type of content A is reproduction. Thus, reproduction of content A will be described next. Details of the reproduction is shown in the flow chart of Figure 41.

In Step S261, the data check module 75 of the receiver 51 computes a hash value by applying a hash function to the block BP-1 data in the usage information storage 63A of the external storage 63, including the content key KcoA (encrypted with the save key Ksave) and UCS A stored in the usage information memory area RP-3 in Step S252 of Figure 40.

In Step S262, the data check module 75 of the receiver 51 compares the hash value computed in Step S261 with the hash value (verification value HP-1) computed in Step S253 of Figure 40 and stored in the memory module 73 in Step S254. If they match, the block BP-1 data is free of falsification and Step S263 is performed next.

In Step S263, it is determined whether contents A is available, based on the information contained in "Parameter" of "Usage Details" for UCS A (Figure 25). For example, as "Type" of "Usage Details" for UCS is set to 'Limited-Time Reproduction,' "Parameter" of the UCS stores the start time and end time of usage. And it is determined whether the present time is within the limits. That is, if the present time is within the limits, the content is judged to be available and if it is not within the limits, the content is judged to be unavailable. On the other hand, if "Type" of "Usage Details" for UCS is set to a use type that allows reproduction (duplication) up to a certain number of times, "Parameter" stores the information about the remaining number of times the content can be used. If the available number of times stored in "Parameter" is not zero (0), the corresponding content is judged to be available. On the other hand, if the available number of times is zero (0), the corresponding content is judged to be unavailable.

Since "Type" of "Usage Details" for UCS A is set to 'Purchase and Reproduce,' in this case, content A is purchased and reproduced with no limitation. And "Parameter" of "Usage Details" for UCS contains information indicating that the content is available. Therefore, in this example, contents A is judged to be available. Consequently, Step S264 is performed next.

In Step S264, the accounting module 72 of the receiver 51 updates UCS A. Although UCS A does not contain any information that should be updated, the available number of times stored in "Parameter" is decremented by 1 if "Type" of "Usage Details" is set to a use type that allows reproduction up to a certain number of times.

Next, in Step S265, the SAM 62 of the receiver 51 stores the UCS A updated in Step S264 (not actually updated in this example) in the usage information memory area RP-3 of the block BP-1 in the usage information storage 63A of the external storage 63. In Step S266, the data check module 75 computes a hash value by applying a hash function to the block BP-1 data in the usage information storage 63A of the external storage 63, including the UCS A stored in Step S265 and overwrites the verification value HP-1 stored in the memory module 73 with the hash value.

In Step S267, the mutual authentication module 71 of SAM 62 and mutual authentication module 101 of the decompression section 64 perform mutual authentication and share temporary keys Ktemp. The process of this mutual authentication is similar to that described with reference to Figures 35 to 37 and thus description thereof is omitted. The random numbers R1, R2, and R3, or their combinations used for the mutual authentication are stored as temporary keys Ktemp.

In Step S268, the decryption unit 91 of the encryption/decryption module 74 decrypts the content key KcoA (encrypted with the save key Ksave) stored in block BP-1 (the usage information memory area RP-3) in the usage information storage 63A of the external storage 63 in Step S252 of Figure 40, by using the save key Ksave stored in the memory module 73.

Next, in Step S269, the encryption unit 93 of the encryption/decryption module 74 encrypts the decrypted content key KcoA, by using the temporary key Ktemp. In Step S270, SAM 62 sends the encrypted content key KcoA encrypted with the temporary key Ktemp to the decompression section 64.

In Step S271, the decryption module 102 of the decompression section 64 decrypts the content key KcoA by using the temporary key Ktemp. In Step S272, the decompression section 64 receives the content A (encrypted with the content key Kco) recorded on the HDD 52 through the interface 66. In Step S273, the decryption module 103 of the decompression section 64 decrypts content A (encrypted with the content key Kco) with the content key KcoA.

In Step S274, the decompression module 104 of the decompression section 64 decompresses the decrypted content A by a predetermined method such as ATRAC2. In Step S275, the watermarking module 105 of the decompression section 64 watermarks the decompressed content A for identification of the receiver 51. In Step S276, content A is output to speakers or the like (not shown) and the process finishes.

In Step S277, if it is determined in Step S262 that the hash value computed in Step S261 and the hash value stored in the memory module 73 of the receiver 51 do not match, or if the content is judged to be unavailable in Step S263, SAM 62 runs predetermined error processing to display an error message on the display unit (not shown) through the display controller 67 and the process finishes.

In this way, when content A is reproduced (used) on the receiver 51, the process finishes, and so does the entire process in Figure 33.

(6-5) Account settlement

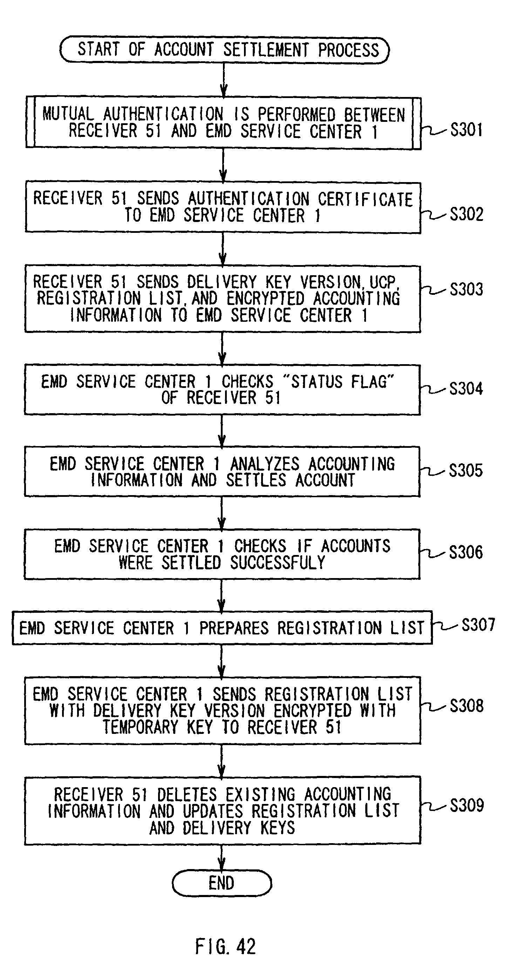

Now the processing procedures for settling accounts with the receiver 51 will be described with reference to the flow chart in Figure 42. This process is started when the amount posted exceeds a preset ceiling (the limit charge for formal or temporary registration), or if the version of delivery keys Kd becomes obsolete, making it impossible, for example, to decrypt the content key Kco (encrypted with the delivery key Kd) in Step S247 of Figure 40 (and thus impossible to receive the service provider secure container).

In Step S301, mutual authentication is performed between the receiver 51 and EMD service center 1. This mutual authentication is similar to that described with reference to Figures 35 to 37 and thus description thereof is omitted.

Next, in Step S302, SAM 62 of the receiver 51 sends an authentication certificate to the user management section 18 (Figure 3) of the EMD service center 1. In Step S303, SAM 62 of the receiver 51 encrypts accounting information stored in the memory module 73, by means of the temporary key Ktemp shared with the EMD service center 1 in Step S301, and sends it to the EMD service center 1 together with the version of delivery keys Kd, corresponding UCP and PT, and registration list.

In Step S304, after the information sent by the receiver 51 in Step S303 is received and decrypted, the user management section 18 of the EMD service center 1 checks the receiver 51 for any illegal act that would make "Status Flag" in the registration list to be set to 'Stop.'

In Step S305, the billing section 19 of the EMD service center 1 analyzes the accounting information received in Step S303 to calculate the amounts to be charged to the user (user F, for example). Then, in Step S306, the user management section 18 checks to see if the accounts were settled successfully in Step S305.

Next, in Step S307, the user management section 18 of the EMD service center 1 sets the registration conditions of the receiver 51 based on the results of checks run in Steps S304 and S306, and attaches a signature to it to prepare a registration list of the receiver 51.

For example, if an illegal act is detected in Step S304, the "Status Flag" is set to 'Stop,' which stops all the subsequent processes. In short, the receiver 51 can no longer receive any service from the EMD system. On the other hand, if it is confirmed that the settlement has failed in Step S306, "Status Flag" is set to 'Restricted,' in which case, the receiver 51 can no longer purchase any new content although it can reproduce already purchased content.

Next, the account settlement process goes to Step S308, where the user management section 18 of the EMD service center 1 encrypts the latest version of delivery keys Kd (the latest three months' delivery keys Kd) and the registration list prepared in Step S307, by using the temporary key Ktemp, and sends the results to the receiver 51.

In Step S309, SAM 62 of the receiver 51 receives the delivery keys Kd and registration list sent by the EMD service center 1, through the communications block 61, decrypts them, and stores them in the memory module 73. The existing accounting information is deleted and the registration list and delivery keys Kd are updated in the memory module 73. Besides, the signature to the registration list received is checked to verify that the registration list is free of falsification. This process of signature verification is similar to the process of Step S83 in Figure 37 and thus description thereof is omitted.

(6-6) Account settlement by proxy

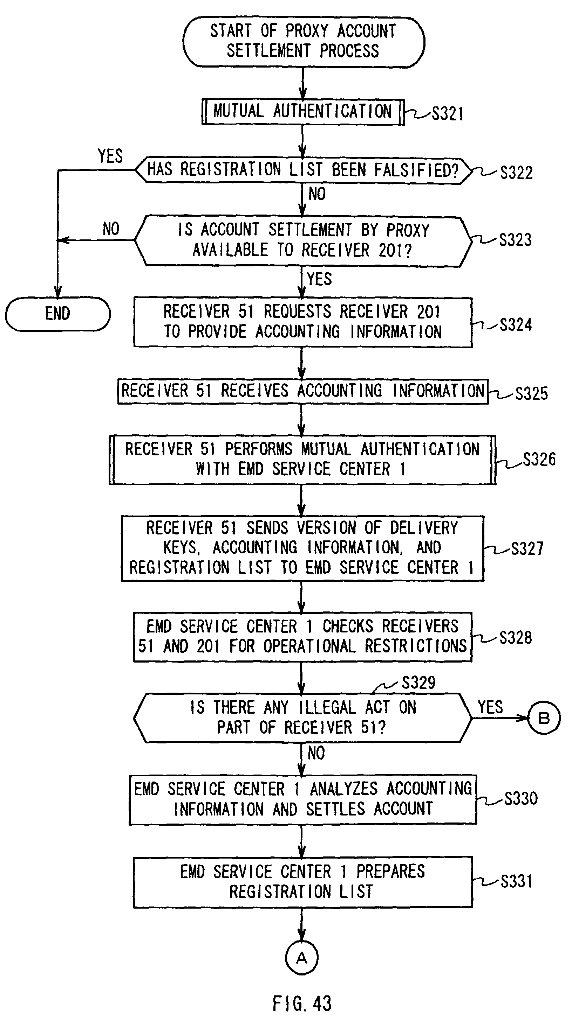

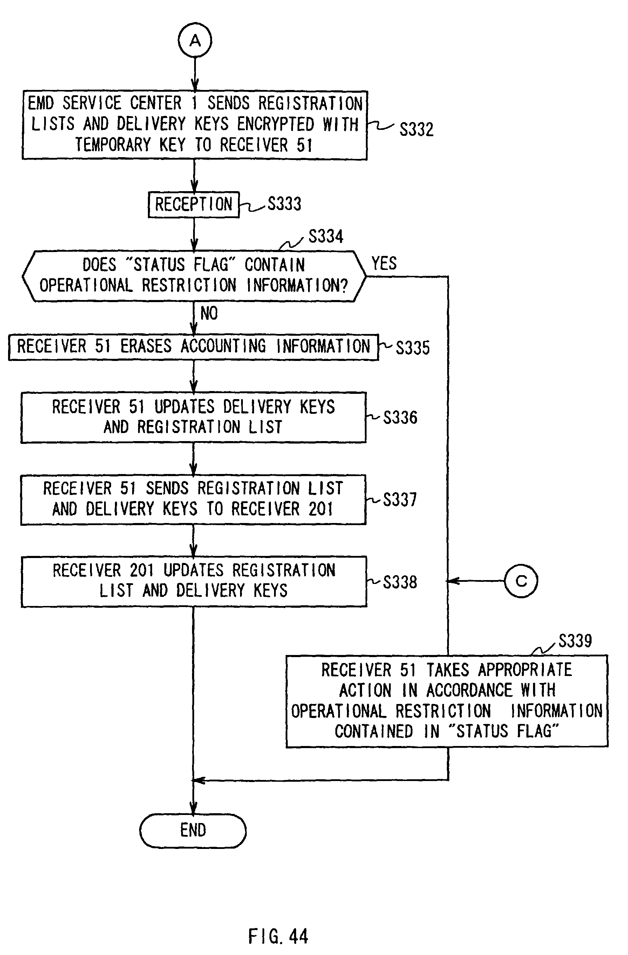

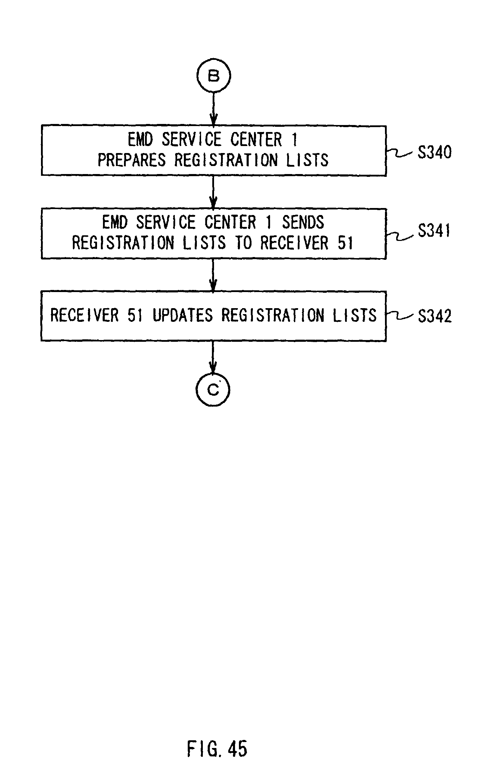

Now the processing procedures used by the receiver 51 to settle an account on behalf of the receiver 201 (account settlement by proxy) will be described with reference to the flow chart in Figures 43 to 45. When the receiver 51 receives a predetermined signal from the receiver 201 asking for account settlement by proxy, the mutual authentication module 71 of the receiver 51 performs mutual authentication with the mutual authentication module 221 of the receiver 201 in Step S321. This mutual authentication is similar to that described with reference to Figure 37 and thus description thereof is omitted. As a result, the mutual authentication module 71 of the receiver 51 acquires the SAM 212 ID of the receiver 201 and shares temporary keys Ktemp with the receiver 201.

In Step S322, SAM 62 of the receiver 51 checks the registration list stored on the HDD 52 for falsification. Specifically, it decrypts the signature stored in "Signature to Registration List" of the registration list with the cryptographic public key and compares the resulting hash value with the hash value of the entire data in the registration list to see if they match.

If it is determined in Step S322 that the registration list is free of falsification, SAM 62 of the receiver 51 goes to Step S323 and checks whether the receiver 201 is eligible for (needs) account settlement by proxy. Specifically, it checks whether the ID of SAM 212 obtained in Step S321 has been registered in "SAM ID" of the registration list and whether SAM 62 has been specified in "Master Equipment" for the receiver 201.

If it is determined in Step S323 that account settlement by proxy is available to the receiver 201, as is the case with this receiver, SAM 62 of the receiver 51 goes to Step S324, in which it sends a predetermined signal that requests to provide accounting information through the communications block 65 to the receiver 201. Then in Step S325, it receives accounting information from the receiver 201.

In Step S326, the receiver 51 performs mutual authentication with the EMD service center 1. This mutual authentication is similar to that described with reference to Figures 35 to 37 and thus description thereof is omitted. In Step S327, SAM 62 of the receiver 51 encrypts the accounting information received in Step S325, the version of the delivery keys Kd stored in the memory module 73, or registration list stored on the HDD 52, by using the temporary key Ktemp, and sends the results to the EMD service center 1.

In Step S328, the user management section 18 of the EMD service center 1 receives the information from the receiver 51 and decrypts it. Then, the audit section 21 of the EMD service center 1 checks the receiver 51 for any illegal act that would make "Status Flag" in the registration list to be set to 'Stop.'

Next, in Step S329, the user management section 18 of the EMD service center 1 checks the receiver 51 for any illegal act based on the results of Step S328. If it is determined that there is no illegal act on the part of the receiver 51, the user management section 18 goes to Step S330.

In Step S330, the billing section 19 of the EMD service center 1 calculates the amount to be charged to the user by analyzing the accounting information received in Step S328. Then, in Step S331, the user management section 18 of the EMD service center 1 specifies registration conditions of the receivers 51 and 201 based on the results of Step S330 and attaches signatures to the registration conditions and registration list to prepare the registration list of each receiver.

In Step S332, the user management section 18 of the EMD service center 1, encrypts the latest version of the delivery keys Kd as well as the registration lists of the receivers 51 and 201 prepared in Step S331, by using the temporary key Ktemp, and send them to the receiver 51.

In Step S333, SAM 62 of the receiver 51 receives and decrypts the delivery keys Kd, registration list of the receiver 51, and registration list of the receiver 201 sent by the EMD service center 1. Then in Step S334, it checks to see if "Status Flag" for the SAM 212 ID of the receiver 201 in the registration list of the receiver 51 contains operational restriction information (e.g., 'Restricted' or 'Stop'). If no such information is contained, Step S335 begins.

In Step S335, SAM 62 of the receiver 51 erases the accounting information received from the receiver 201 in Step S325. In Step S336, it updates the delivery keys Kd and the registration list of the receiver 51.

In Step S337, SAM 62 of the receiver 51 performs mutual authentication (the process described with reference to Figures 33 to 35) with the receiver 201 and then sends the registration list of the receiver 201 and delivery keys Kd encrypted with the temporary key Ktemp to the receiver 201.

In Step S338, the receiver 201 receives the registration list of the receiver 201 and delivery keys Kd from the receiver 51, decrypts them with the temporary key Ktemp, and stores (updates) them.

If it is determined in Step S334 that "Status Flag" contains operational restriction information, SAM 62 of the receiver 51 goes to Step S339 and takes a predetermined action (REVOKE) with respect to the receiver 201 to restrict its operation.

If an illegal act is detected on the part of the receiver 51 in Step S329, the process goes to Step S340, where the EMD service center 1 sets all "Status Flag" for the receivers 51 and 201 to 'Stop,' prepares the respective registration lists of the receivers, and sends them to the receiver 51 in Step S341.

In Step S342, the receiver 51 receives the registration lists from the EMD service center 1 and updates the registration lists. Then it goes to Step S339 and takes appropriate actions according to the operational restriction information set in "Status Flag" in the registration lists. In this case, the delivery keys Kd are not supplied to the receivers 51 and 201, making it impossible for them to reproduce content. Consequently, the receivers 51 and 201 can no longer receive any service from the EMD system.

If it is determined in Step S322 that the registration list has been falsified or if it is determined in Step S323 that account settlement by proxy is not available to the receiver 201, the process is terminated.

In this way, the amount charged to the receiver 201 is paid by the receiver 51 by proxy.

(7) Other example configurations of user home network

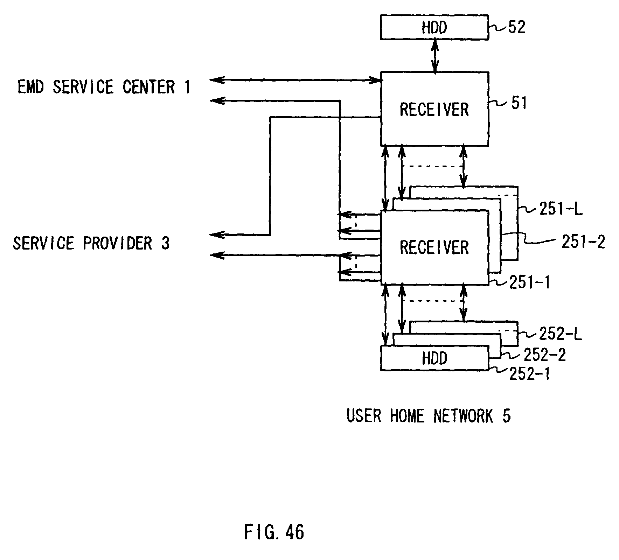

Figure 46 shows another example configuration of user home network 5. The components that corresponds to those of the user home network 5 in Figure 1 are denoted by the same reference numerals. Specifically, L number of receivers 251-1 to 251-L (they are collectively referred to as the receivers 251 if there is no need to handle them individually. This applies to other equipment items as well) are provided instead of the receiver 201 and L number of HDD 252-1 to 252-L are provided instead of the HDD 202.

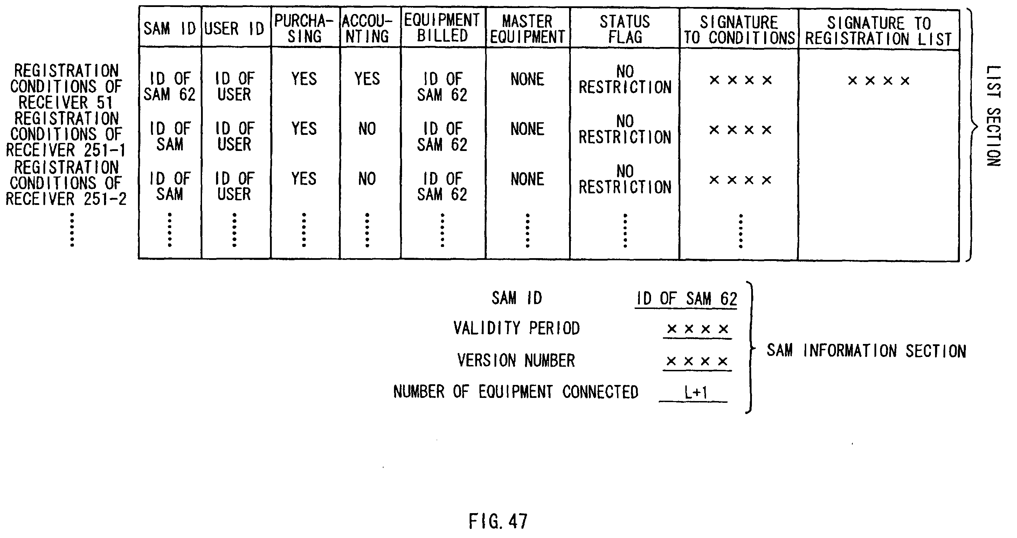

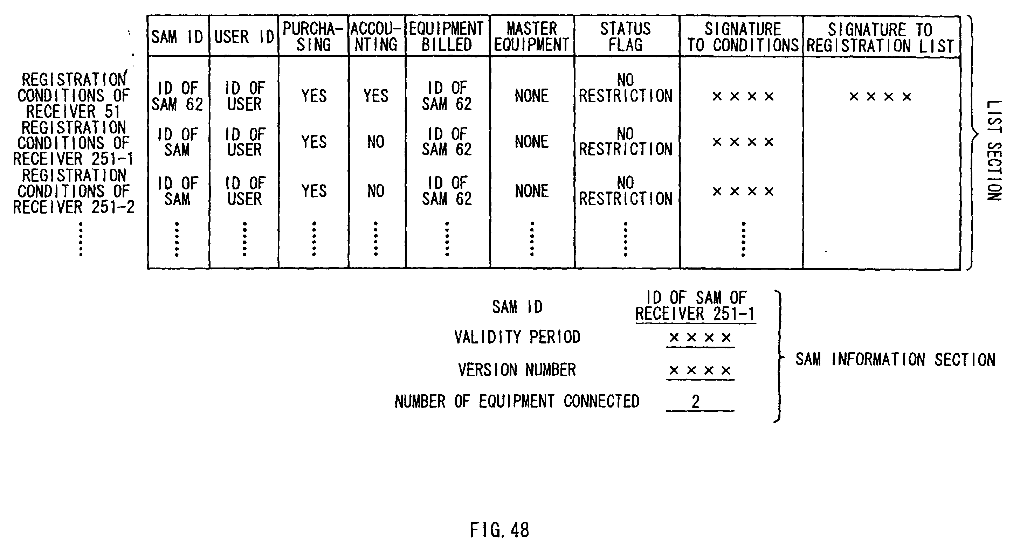

The receivers 251-1 to 251-L are stationary equipment with the same configuration as the receiver 201 and are connected to the HDD 252-1 to 252-L, respectively. Also, the receivers 251 can run the processes necessary to purchase content, as is the case with the receiver 201. However, they cannot settle accounts for themselves and their accounts must be settled by the receiver 51 on their behalf. That is, for example, as shown in the registration list (Figure 47) of the receiver 51 and registration list (Figure 48) of the receiver 251-1, "Purchasing" is set to 'Yes,' "Accounting" is set to 'No,' and "Master Equipment" is set to 'ID of SAM 62,' for the SAM ID of the receiver 251-i (= 1, 2, ..., L).

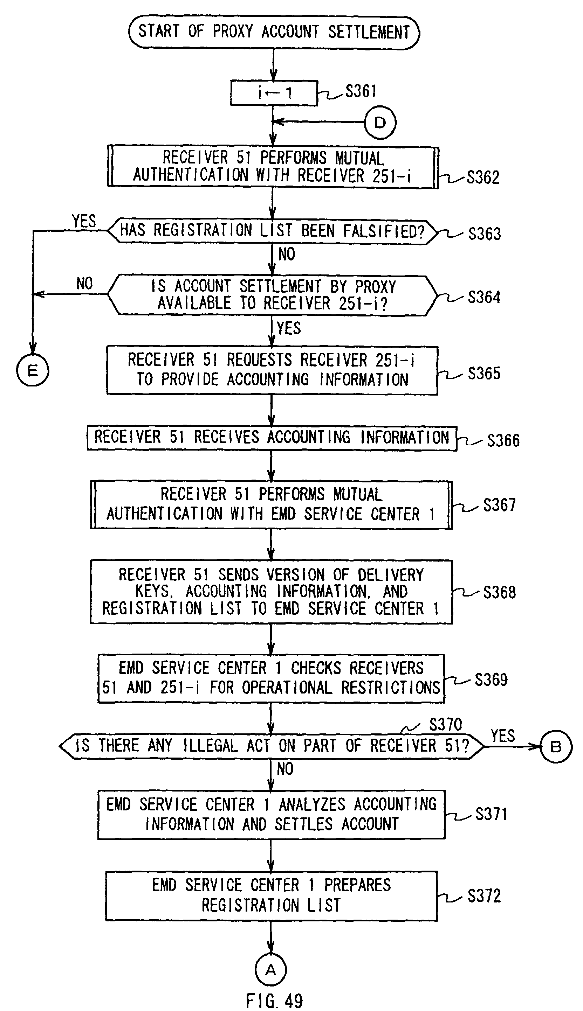

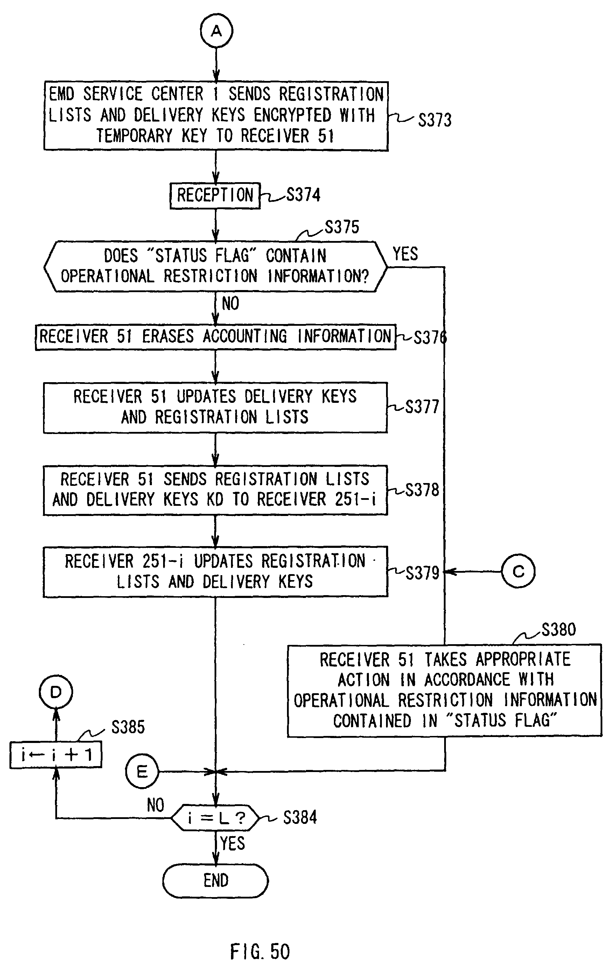

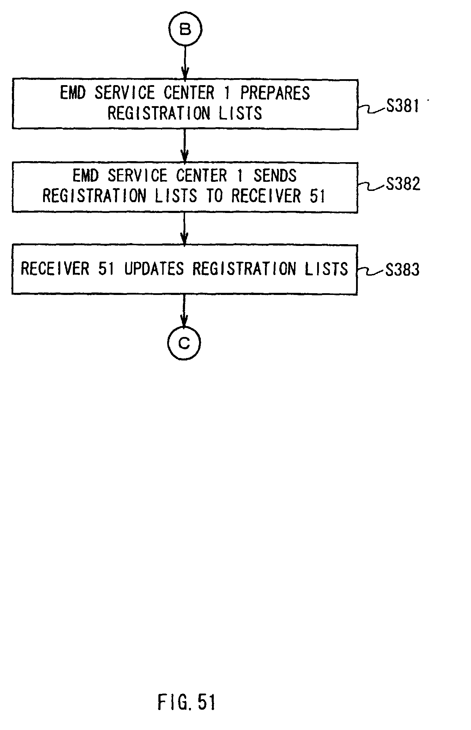

Now the processing procedures used by the receiver 51 to settle accounts on behalf of the receivers 251 will be described with reference to the flow chart in Figures 49 to 51.

In Step S361, SAM 62 of the receiver 51 sets the initial value '1' on the counter i. In Step S362, the mutual authentication module 71 of the receiver 51 performs mutual authentication with the mutual authentication modules (not shown) of the receiver 251-i (= 1, 2, ..., L). This mutual authentication is similar to that described with reference to Figures 35 to 37 and thus description thereof is omitted.

The processes of Steps S363 to S383 are similar to those of Steps S322 to S342 in Figure 43 and thus description thereof is omitted.

After the receiver 251-i updates the delivery keys Kd and registration lists in Step S379 or after the receiver 51 takes actions in accordance with the operational restriction set in "Status Flag," the process goes to Step S384. In this step, SAM 62 of the receiver 51 checks to see if the value of the counter i matches the number of pieces of equipment (number L of the receivers 251, in this example) whose accounts are to be settled by proxy. If they do not match, SAM 62 of the receiver 51 goes to Step S385 to increased the value of the counter i by 1, and then returns to S362. This allows subsequent processes to be performed for the subsequent receivers 251-i.

In Step S384, if it is determined that the value of the counter i matches the number of pieces of equipment whose accounts are to be settled by proxy, the process finishes.

If it is determined in Step S363 that the registration list has been falsified or if it is determined in Step S364 that account settlement by proxy is not available to the equipment, the process goes to Step S384.

In this way, the amount charged to each of the receivers 251-1 to 251-L are paid by the receiver 51. Although a case in which the receiver 51 settles accounts on behalf of all the receivers 251 at once has been described above, it is also possible to settle an account by proxy only for the equipment which makes a request, as shown in the flow chart of Figures 43 to 45.

In Step S323 of Figure 43 and Step S363 of Figure 49 described above, the registration list was checked for falsification by checking the signature stored in "Signature to Registration List." However, CB (Cipher Block Chaining) mode can also be used. It checks data for falsification by dividing input data into 64-bit blocks, inputting them one by one into a block cipher machine with fast processing time, encrypting them with a predetermined check key to generate a first output, and then running an XOR operation on the first output and a delayed second output.

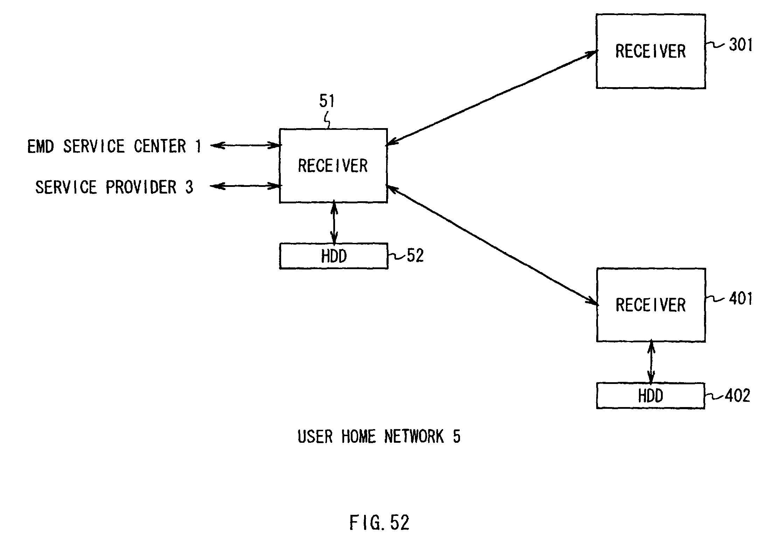

Figure 52 shows another example configuration of user home network 5. The components that corresponds to those of the user home network 5 in Figure 1 are denoted by the same reference numerals. Specifically, receivers 301 and 401 are provided instead of the receiver 201, and an HDD 402 is provided instead of the HDD 202.

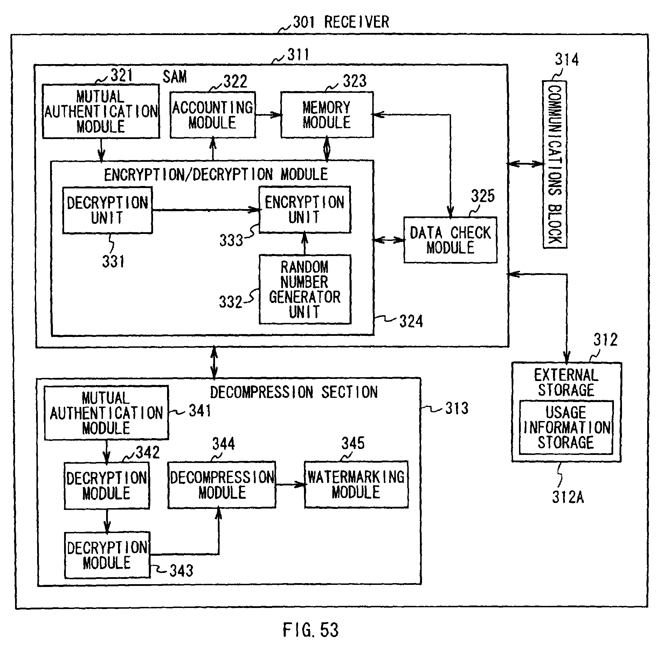

Figure 53 shows an example functional configuration of the receiver 301. The receiver 301 has components from SAM 311 to a communications block 314, which have basically the same function as SAM 212 to the communications block 215 of the receiver 201. However, it is portable equipment without any function that corresponds to the communications block 211, interface 216, display controller 217, and input controller 218 of the receiver 201.

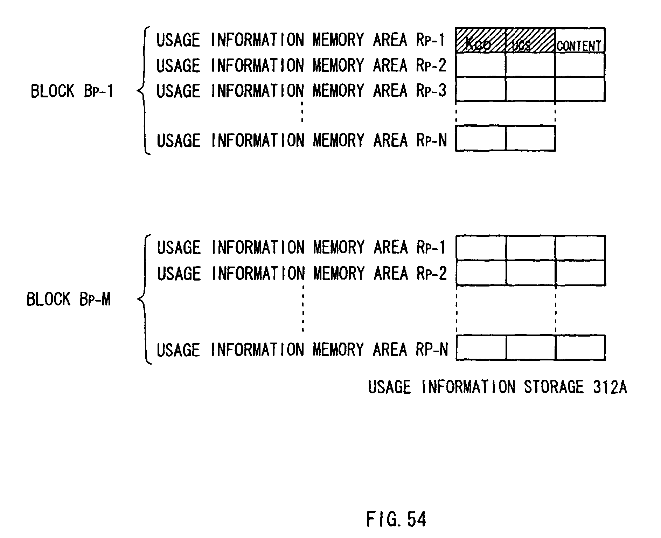

Since the receiver 301 is not connected to an HDD, content is stored together with corresponding content keys Kco (encrypted with a save key Ksave) and UCS in the usage information storage 312A of the external storage 312 that is configured as shown in Figure 54.

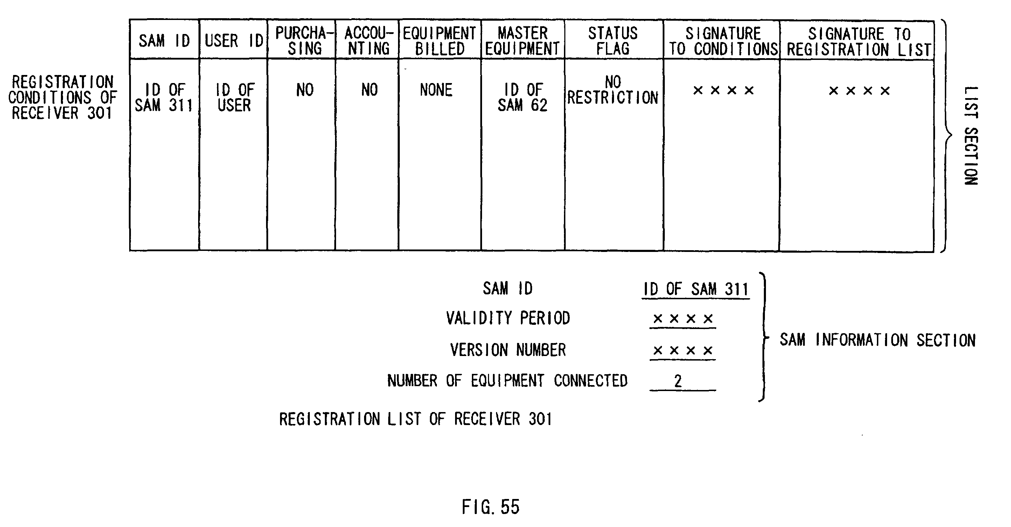

The registration list of the receiver 301, which looks like the one shown in Figure 55, is stored in the memory module 323. The SAM information section of the registration list stores the SAM 311 ID of the receiver 301 that possesses this registration list (in the "SAM ID" field), the validity period of the registration list (in the "Validity Period" field), version number of the registration list (in the "Version Number" field), and number of equipment connected (in the "Number of Equipment Connected" field), which is two in total, including the receiver 301 itself and the receiver 51 connected to it. The list section stores the registration conditions of the receiver 301 shown in the registration list of the receiver 51 in Figure 30. However, the "Signature to Conditions" and "Signature to Registration List" columns have been deleted. They were deleted after the signature to the registration list was confirmed. This saves storage space in the memory module 323. In this example, one signature requires 40 bytes.

Since the receiver 301 cannot communicate with the service provider 2 and EMD service center 1, it cannot run the processes for purchasing content. Consequently, "Purchasing" is set to 'No.' Also, since the receiver 301 does not purchase content directly, it does not settle accounts. Consequently, "Accounting" is set to 'No' and "Equipment Billed" is set to 'None.'

The receiver 301, in this example, is supplied with content by the receiver 51. Therefore, "Master Equipment" stores the ID of SAM 62 of the receiver 51.

In this example, "Status Flag" is set to 'No Restriction.' "Signature to Conditions" and "Signature to Registration List" store appropriate signatures.

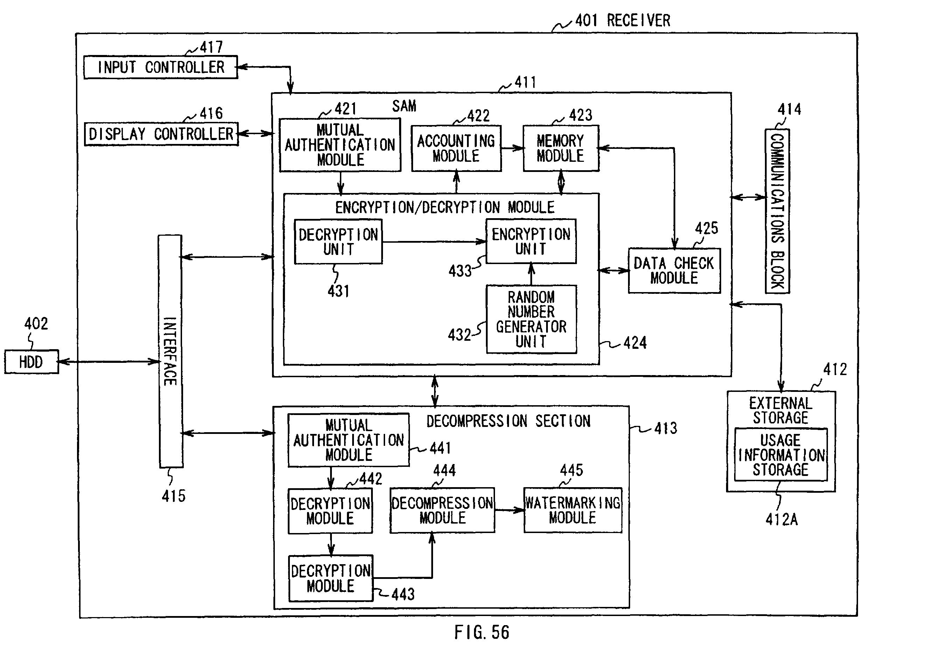

Figure 56 shows an example functional configuration of the receiver 401. The receiver 401 has components from SAM 311 to a communications block 417, which have basically the same function as SAM 212 to the input controller 218 of the receiver 201. It is stationary equipment without any function that corresponds to the communications block 211 of the receiver 201.

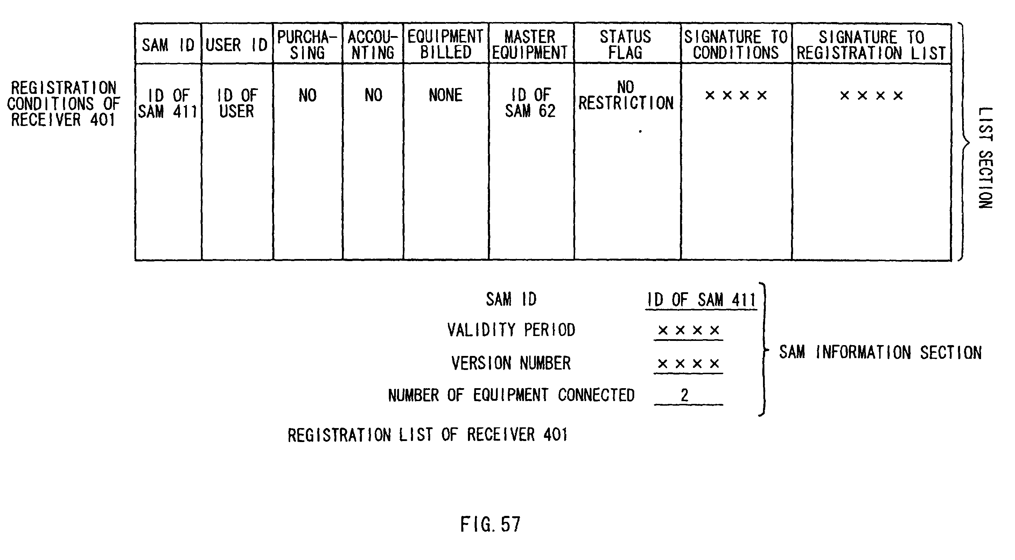

The HDD 402 stores the registration list of the receiver 401 such as the one shown in Figure 57 in addition to content and the like. The SAM information section of the registration list stores the SAM 411 ID of the receiver 401 that possesses this registration list (in the "SAM ID" field), the validity period of the registration list, version number of the registration list, and number of equipment connected (in the "Number of Equipment Connected" field), which is two in total, including the receiver 401 itself and the receiver 51 connected to it.

"SAM ID" in the list section stores the SAM 411 ID of the receiver 401 and "User ID" stores the user ID of receiver 401. However, since the receiver 401 cannot communicate with the service provider 2 and EMD service center 1, it cannot run the processes for purchasing content. Consequently, "Purchasing" is set to 'No.'

Since the receiver 401 does not purchase content directly, it does not settle accounts. Consequently, "Accounting" is set to 'No' and "Equipment Billed" is set to 'None.' The receiver 401 is supplied with content by the receiver 51 connected to it. Therefore, "Master Equipment" stores the ID of SAM 62 of the receiver 51.

"Status Flag," in this example, is set to 'No Restriction.' "Signature to Conditions" and "Signature to Registration List" store appropriate signatures.

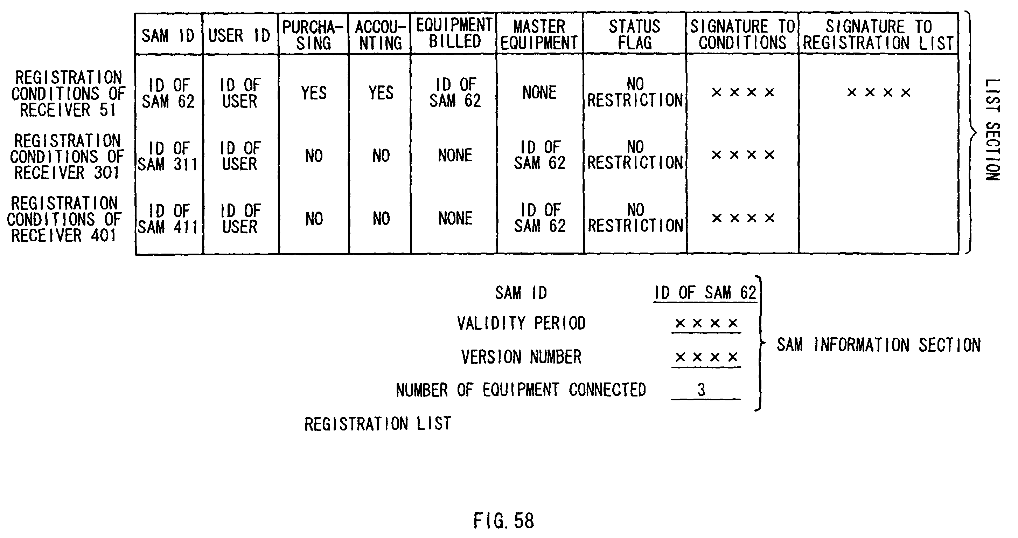

In this example, as shown in Figure 58, the registration list of the receiver 51 contains the registration conditions of the receiver 301 shown in Figure 55 and registration conditions of the receiver 401 shown in Figure 57 in addition to the registration list of the receiver 51.

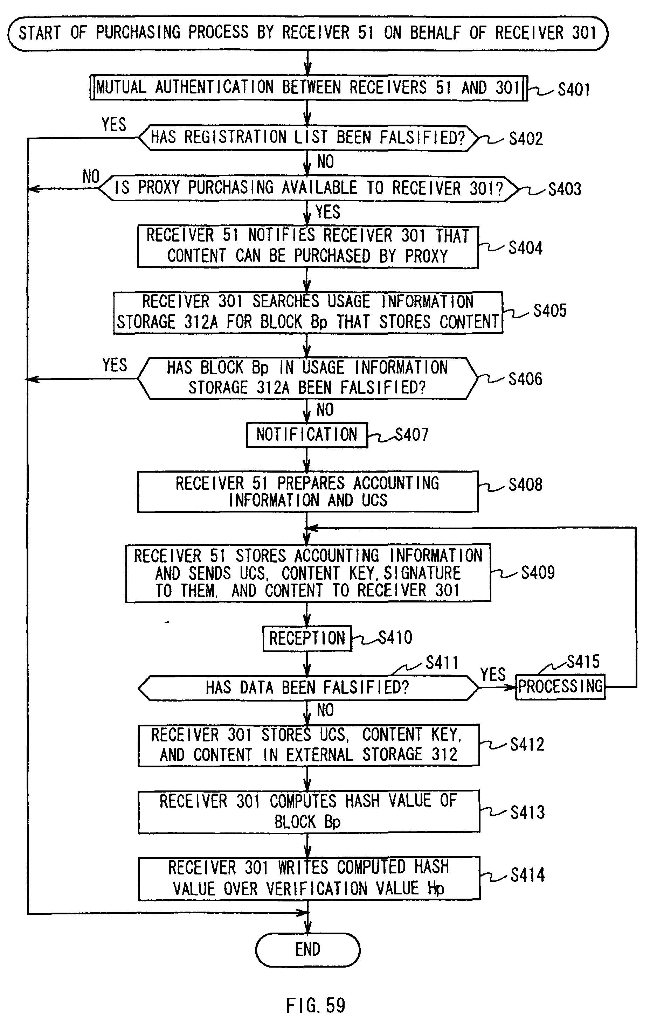

Now the processing procedures used by the receiver 51 to purchase content on behalf of the receiver 301 will be described with reference to the flow chart in Figure 59. In Step S401, the receiver 51 performs mutual authentication with the receiver 301. This mutual authentication is similar to that described with reference to Figure 37 and thus description thereof is omitted. As a result, the mutual authentication module 71 of the receiver 51 acquires the SAM 311 ID of the receiver 301 and shares temporary keys Ktemp with the receiver 301.

In Step S402, SAM 62 of the receiver 51 checks the registration list stored on the HDD 52 for falsification. Specifically, it decrypts the signature stored in "Signature to Registration List" of the registration list with the cryptographic public key and compares the resulting hash value with the hash value of the entire data in the registration list to see if they match.

If it is determined in Step S402 that the registration list is free of falsification, SAM 62 of the receiver 51 goes to Step S403 and checks whether content can be purchased by proxy for the receiver 301 which requested it. Specifically, it checks whether the ID of SAM 311 obtained in Step S401 has been registered in "SAM ID" of the registration list and whether SAM 62 has been specified in "Master Equipment" for the receiver 301. In this case, "SAM ID" in the registration list (Figure 58) of the receiver 51 contains the SAM 311 ID of the receiver 301 and "Master Equipment" for the receiver 301 contains the ID of SAM 62. Thus, it is determined in Step S403 that content can be purchased for the receiver 301 by proxy, and S404 is performed next.

In Step S404, SAM 62 of the receiver 51 sends a predetermined signal to the receiver 301 through the communications block 65, indicating that content can be purchased by proxy.

When SAM 311 of the receiver 301 receives the signal from the receiver 51, indicating that purchasing by proxy is possible, the data check module 325 of the receiver 301 searches the usage information storage 312A of the external storage 312 for the block BP that stores content A in Step S405.

Then, in Step S406, the data check module 325 of the receiver 301 computes a hash value by applying a hash function to the entire data in the block BP detected in the usage information storage 312A of the external storage 312 in Step S405, and checks if the hash value matches the verification value HP that is stored in the memory module 323 and that corresponds to the given block BP. If they are proved to be identical, i.e., the block BP data detected in Step S405 in the usage information storage 312A is free of falsification, Step S407 is performed next, where SAM 311 sends a predetermined signal to the receiver 51 through the communications block 314, indicating that it is ready to receive content.

In Step 5408, SAM 62 of the receiver 51 (the accounting module 72) prepares UCS and accounting information based on selected "Usage Details" of the UCP and PT. Specifically, the display controller 67 of the receiver 51 outputs details of UCP A, UCP B (Figure 9), PT A-1, PT A-2 (Figure 17), PT B-1, and PT B-2 (Figure 19) to the display unit (not shown) to present them to the user. The user selects "Usage Details 11" of UCP A and PT A-1, in this example, by manipulating the operator panel (not shown), based on the presented information. Thereby, the input controller 68 receives the signals (ID of "Usage Details 11" of UCP A and ID of PT A-1) that correspond to the user operation, from the operator panel and outputs them to SAM 62. Then, the accounting module 72 of SAM 62 prepares UCS A and accounting information A, based on the ID of "Usage Details 11" of UCP A and ID of PT A-1 received from the input controller 68.

In this example, the receiver 301 does not have a display unit for displaying the contents of UCPs and PTs to the user or an operator panel for allowing the user to select usage details and the like. Therefore, the user selects contents of UCPs and PTs through the receiver 51 which is connected to the receiver 301 and which has a display unit and operator panel.

Next, in Step S409, SAM 62 of the receiver 51 stores the accounting information A prepared in Step S408 in the memory module 73, and encrypts the prepared UCS A together with the content key KcoA and signature to them by a temporary key Ktemp and sends them to the receiver 301. In time with the execution of this process, the content A stored in the HDD 52 are also encrypted with the temporary key Ktemp and sent to the receiver 301. After sending the UCS A and content key KcoA to the receiver 301, the receiver 51 erases (discards) them. This makes the rights to use content A to be held only by the receiver 301.

Next, in Step S410, SAM 311 of the receiver 301 receives the UCS A, content key KcoA, signature to them, and content A sent by the receiver 51 in Step S409, and decrypts them with the temporary key Ktemp. In Step S411, the encryption/decryption module 324 of the receiver 301 checks the data sent by the receiver 51 for falsification by verifying the signature received in Step S410. This process of signature verification is similar to the process of Step S83 in Figure 37 and thus description thereof is omitted.

If it is determined in Step S411 that the data from the receiver 51 has not been falsified, the process goes to Step S412, where SAM 311 of the receiver 301 stores the UCS A, content key KcoA, and content A received in Step S410, in the block BP detected in Step S405 in the usage information storage 312A of the external storage 312.

Then, in Step S413, the data check module 325 of the receiver 301 computes a hash value by applying a hash function to the data in the block BP of the usage information storage 312A of the external storage 312 where the UCS A, content key KcoA, and content A were stored in Step S412. Then in S414, the data check module 325 writes the computed hash value over the corresponding verification value HP stored in the memory module 323.

If it is determined in Step S402 that the registration list has been falsified, if it is determined in Step S403 that account settlement by proxy is not available to the receiver 301, and if it is determined in Step S406 that the detected block BP has been falsified, the process is terminated.

If it is determined in Step S411 that the data from the receiver 51 has been falsified, the process goes to Step S415, where SAM 311 of the receiver 301 notifies the receiver 51 of the falsification and takes other necessary measures. Then the process returns to Step S409. That is, thereby, UCS A, content key KcoA, signature to them, and content A are sent again to the receiver 301. In this example, this transmission from the receiver 51 is retried only a preset number of times. When that number is exceeded, the process is terminated. In that case, it is possible to delete, in Step S409, the accounting information A stored in the memory module 73 of the receiver 51. However, it is also possible to enter the number of times an attempt at proxy purchase processing failed into the accounting information A, and restrict the operation of the receiver 301 by setting "Status Flag" to 'Restricted' for the SAM 311 ID of the receiver 301 in the registration list when the number of failures exceeds a preset number.

Content is purchased by the receiver 51 on behalf of the receiver 301 in the manner described above. The accounting information is not supplied to the receiver 301, but kept by the receiver 51, which pays the amount charged to the receiver 301 via its own account. (according to the flow chart in Figure 42)

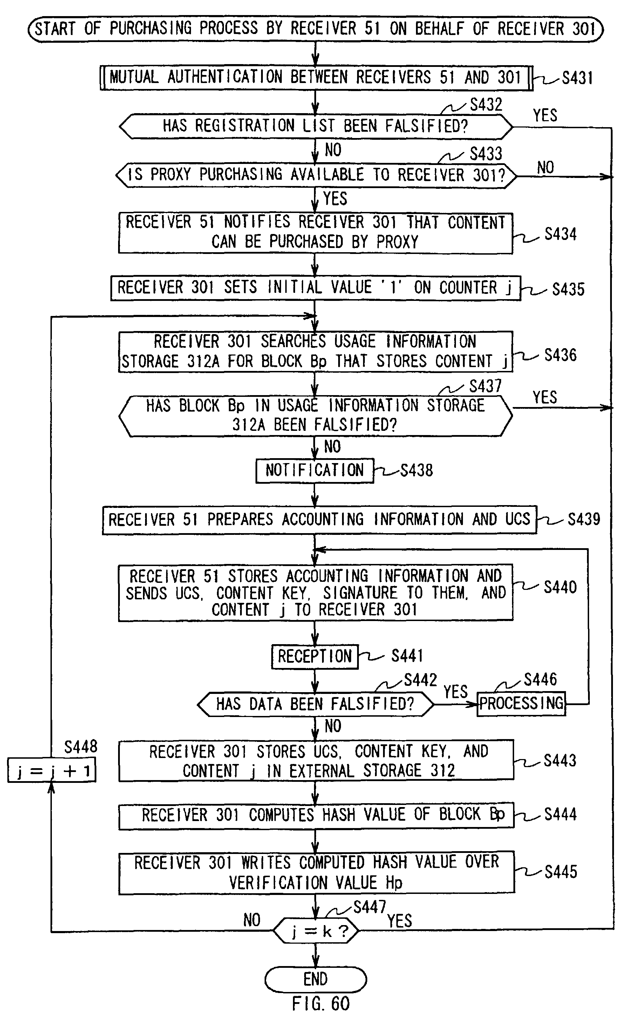

Now processing procedures used by the receiver 51 to purchase two or more pieces of content on behalf of the receiver 301 will be described with reference to the flow chart in Figure 60. In Step S431, the receiver 51 performs mutual authentication with the receiver 301. This mutual authentication is similar to that described with reference to Figure 37 and thus description thereof is omitted. As a result, the mutual authentication module 71 of the receiver 51 acquires the SAM 311 ID of the receiver 301 and shares temporary keys Ktemp with the receiver 301.

The processes of Steps S432 to S434 are similar to those of Steps S402 to S404 in Figure 59 and thus description thereof is omitted.

In Step S435, SAM 311 of the receiver 301 sets the initial value '1' on the counter j. Next, the data check module 325 of the receiver 301 searches the usage information storage 311A of the external storage 312 for the block BP that stores content j (= 1, 2, 3, ..., K).

The processes of Steps S437 to S446 are similar to those of Steps S406 to S415 in Figure 59 and thus description thereof is omitted.

In Step S447, SAM 311 of the receiver 301 checks to see if the value of the counter j matches the number of pieces of content K which the receiver 301 wants to purchase. If they do not match, SAM 311 of the receiver 301 goes to Step S448 to increased the value of the counter j by 1, and then returns to S436. This allows subsequent processes to be performed for the content j to be purchased by proxy subsequently.

If it is determined in Step S447 that the value of the counter j matches the number of pieces of content K to be purchased by proxy, the process finishes.

Two or more pieces of content are purchased by proxy, following the procedures described above.

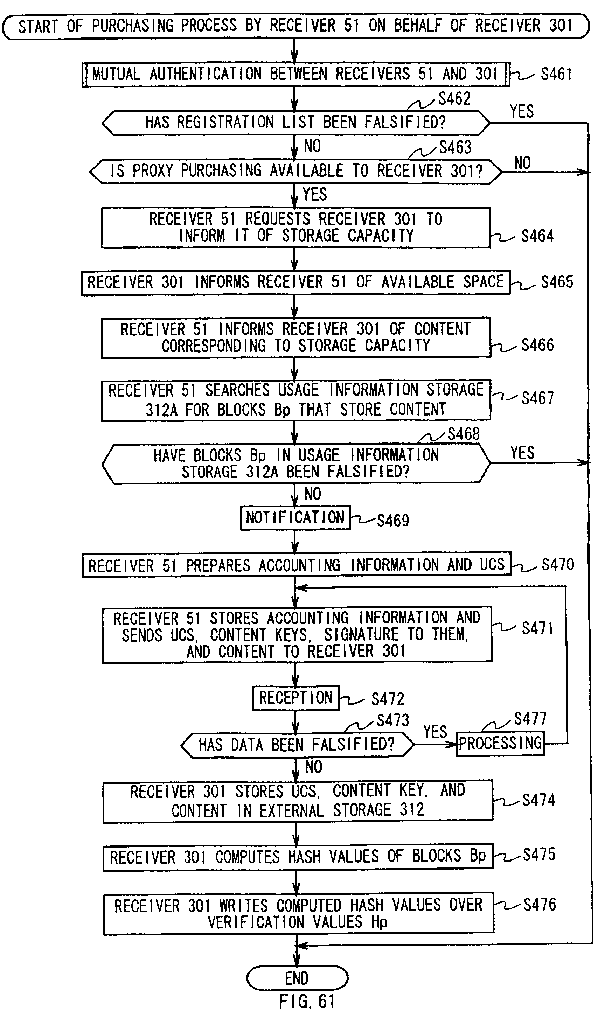

Now other processing procedures used by the receiver 51 to purchase two or more pieces of content on behalf of the receiver 301 will be described with reference to the flow chart in Figure 61. In this example, the receiver 301 purchases K pieces of content as is the case with Figure 60.

In Step S461, the receiver 51 performs mutual authentication with the receiver 301. This mutual authentication is similar to that described with reference to Figure 37 and thus description thereof is omitted. As a result, the mutual authentication module 71 of the receiver 51 acquires the ID of SAM 311 of the receiver 301 and shares temporary keys Ktemp with the receiver 301.

The processes of Steps S462 to S463 are similar to those of Steps S402 and S403 in Figure 59 and thus description thereof is omitted.

If it is determined in Step S463 that content can be purchased on behalf of the receiver 301, SAM 62 of the receiver 51 sends a predetermined signal to the receiver 301, requesting the latter to inform the former of the available space for content.

Upon receipt of the signal from the receiver 51 requesting for notification of available space, the SAM 311 of the receiver 301 checks in Step S465 the usage information storage 312A (blocks BP) of the external storage 312 for available space where content can be stored and informs the receiver 51 about the results.

In Step S466, the receiver 51 informs the receiver 301 of the IDs for the k (=< K) pieces of content that can be stored in the available space the receiver 51 was informed of in Step S465. For example, if the available space in the external storage 312 of the receiver 51 is large enough, the receiver 301 is informed of the IDs for all the K pieces of content it wants to purchase. If it is not large enough, the receiver 301 is informed of the IDs for only the content that can be stored in the available space.

In Step S467, the data check module 325 of the receiver 301 searches the usage information storage 312A of the external storage 312 for the k number of blocks BP that store the k pieces of content whose IDs were received in Step S466. In Step S468, the data check module 325 of the receiver 301 computes hash values by applying a hash function to the data in the k number of blocks BP that were detected in Step S467 and that are located in the usage information storage 312A of the external storage 312 and checks if the hash values match the respective verification values HP that are stored in the memory module 323 and that correspond to the k number of detected blocks BP to check the data in the k number of blocks BP for falsification.

If it is determined in Step S468 that the data in all the blocks BP detected in Step S467 are free of falsification, the process goes to Step S469, where SAM 311 of the receiver 301 sends a predetermined signal to the receiver 51 through the communications block 314, indicating that it is ready to receive the k pieces of content whose IDs were received in S466.

In Step S470, SAM 62 (accounting module 72) of the receiver 51 prepares k pieces of UCS and k pieces of accounting information corresponding to the k pieces of content. The specific process for that is basically the same as that of Step S408 in Figure 59 and thus description thereof is omitted.

Next, in Step S471, SAM 62 of the receiver 51 stores the prepared k pieces of accounting information in the memory module 73 and encrypts the prepared k pieces of UCS together with k number of content keys Kco, and a signature to them by a temporary key Ktemp and sends them to the receiver 301. In time with the execution of this process, the k pieces of content stored in the HDD 52 are also encrypted with the temporary key Ktemp and sent to the receiver 301.

Next, in Step S472, SAM 311 of the receiver 301 receives, the k pieces of UCS, k number of content keys Kco, signature to them, and k pieces of content sent by the receiver 51 in Step S471, and decrypts them with the temporary key Ktemp. In Step S473, the encryption/decryption module 324 of the receiver 301 checks the data sent by the receiver 51 for falsification by verifying the signature received in Step S472. This process of signature verification is similar to the process of Step S83 in Figure 37 and thus description thereof is omitted.

If it is determined in Step S473 that the data from the receiver 51 has not been falsified, the process goes to Step S474, where SAM 311 of the receiver 301 stores the k pieces of UCS, k number of content keys Kco, and k pieces of content received in Step S472 in the k number of blocks BP detected in Step S467, in the usage information storage 312A of the external storage 312.

In Step S475, the data check module 325 of the receiver 301 computes hash values by applying a hash function to the data in the k number of blocks BP in the usage information storage 312A of the external storage 312 where the UCS, content keys Kco, and content were stored in Step S474. Then in S476, the data check module 325 writes the computed hash values over the verification values HP that are stored in the memory module 323 and that correspond to the blocks BP. This concludes the process.

If it is determined in Step S462 that the registration list has been falsified, if it is determined in Step S463 that account settlement by proxy is not available to the receiver 301, and if it is determined in Step S468 that the detected blocks BP have been falsified, the process is terminated.

If it is determined in Step S473 that the data from the receiver 51 has been falsified, the process goes to Step S477, where SAM 311 of the receiver 301 notifies the receiver 51 of the falsification and takes other necessary measures. Then the process returns to Step S471. That is, thereby, the k pieces of UCS, k number of content keys Kco, signature to them, and k pieces of content are sent again to the receiver 301. Here again, this transmission from the receiver 51 is retried only a preset number of times. When that number is exceeded, the process is terminated. In that case, it is possible to delete, in Step S471, the k pieces of accounting information stored in the memory module 73 of the receiver 51. However, it is also possible to enter the number of times an attempt at proxy purchase processing failed into each of the k pieces of accounting information, and restrict the operation of the receiver 301 by setting "Status Flag" to 'Restricted' for the SAM 311 ID of the receiver 301 in the registration list when the number of failures exceeds a preset number.

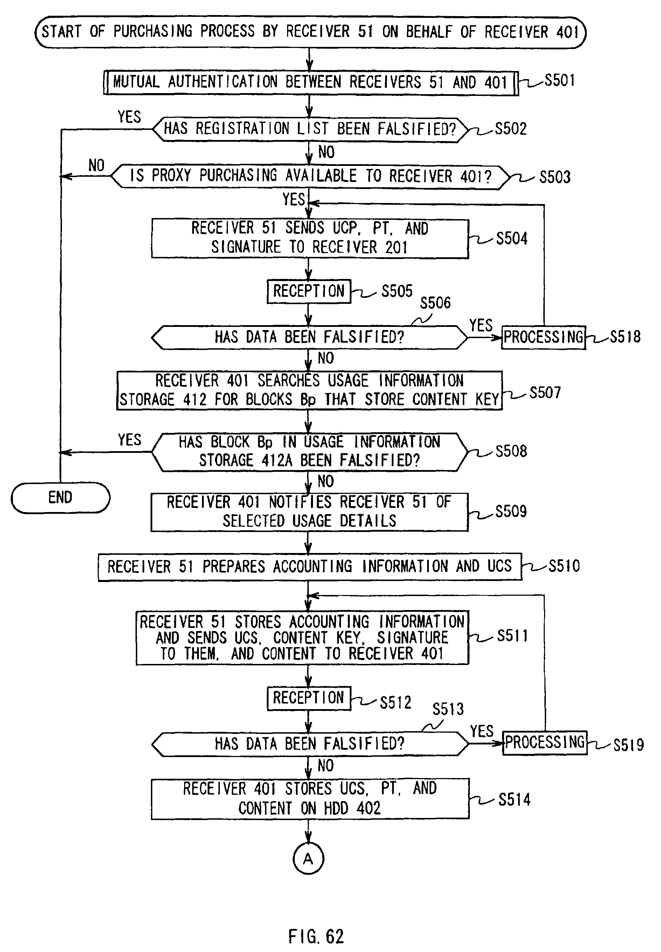

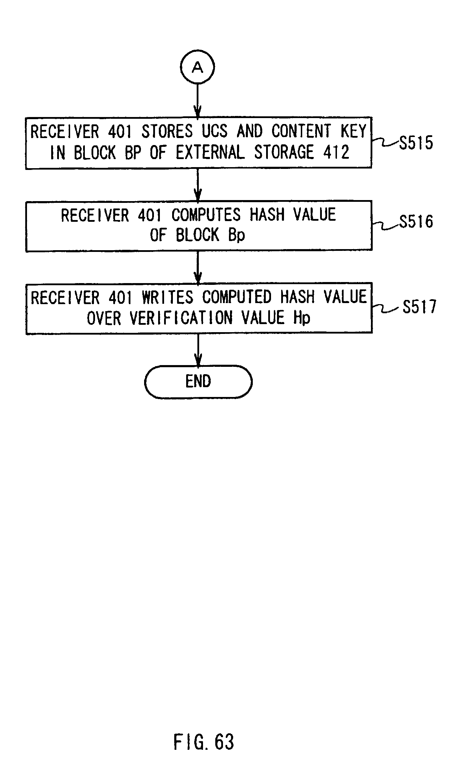

Now the processing procedures used by the receiver 51 to purchase content on behalf of the receiver 401 (by proxy) will be described with reference to the flow chart in Figures 62 and 63. When the receiver 51 receives, from the receiver 401, the ID of desired content and a predetermined signal requesting it to purchase the content by proxy, the receiver 51 performs mutual authentication with the receiver 401 in Step S501. This mutual authentication is similar to that described with reference to Figure 37 and thus description thereof is omitted. As a result, the mutual authentication module 71 of the receiver 51 acquires the SAM 411 ID of the receiver 401 and shares temporary keys Ktemp with the receiver 401.

In Step S502, SAM 62 of the receiver 51 checks the registration list stored on the HDD 52 for falsification. If it is determined that the registration list is free of falsification, SAM 62 of the receiver 51 goes to Step S503 and checks whether content can be purchased on behalf of the receiver 401 which requested it. The specific process for that is basically the same as that of Step S403 in Figure 59 and thus description thereof is omitted. If it is determined in Step S503 that account settlement by proxy is available to the receiver 401, SAM 62 of the receiver 51 goes to S504, where it sends to the receiver 401 the UCP and PT of the content which it was informed of in advance and which the receiver 501 wants to purchase, by attaching a signature. However, it is also possible to pass the UCP, PT, and, content contained in the service provider secure container as they are.

In Step S505, SAM 411 of the receiver 401 receives the UCP, PTs, and signature to them sent by the receiver 51. In Step S506, it checks the data sent by the receiver 51 for falsification by verifying the signature. This process of signature verification is similar to the process of Step S83 in Figure 37 and thus description thereof is omitted.

If it is determined in Step S506 that the data from the receiver 51 has not been falsified, SAM 411 of the receiver 401 goes to Step S507, where it searches the usage information storage 412A of the external storage 412 for the block BP (not shown) that stores the content key Kco of the content to be purchased.

Next, in Step S508, the data check module 425 of the receiver 401 computes a hash value by applying a hash function to the entire data in the block BP detected in Step S507 in the usage information storage 412A of the external storage 412, and checks if the hash value matches the verification value HP that is stored in the memory module 423 and that corresponds to the given block BP. If they are proved to be identical, i.e., the block BP data detected in the usage information storage 412A is free of falsification, Step S509 is performed next.

In Step S509, SAM 411 of the receiver 401 informs the receiver 51 about "Usage Details" of the UCP and the IDs of the PTs received in Step S505. Actually, however, before this process, the display controller 416 of the receiver 401 outputs details of the UCP and PTs received in Step S505 to the display unit (not shown) to present them to the user. From the presented information, the user selects Usage Details of the UCP as well as a PT on the operator panel (not shown). Consequently, the input controller 417 receives the signals (ID of "Usage Details" of the UCP and ID of the PT) that correspond to the user operation, from the operator panel and outputs them to SAM 411. Then, SAM 411 sends the information from the input controller 417 to the receiver 51 through the communications block 414.

In this way, the receiver 51 sends a UCP and PTs (the ID and selection items of the content to be purchased) to the receiver 401 that has a capability to allow the user to select UCP details and a PT. In place of the UCP and PT, SAM 62 of the receiver 51 prepares accounting information and UCS in Step S510, based on the ID of "Usage Details" of the UCP and ID of the PT (the ID and selection items of the content to be purchased) received from the receiver 401. Next, in Step S511, SAM 62 of the receiver 51 stores the accounting information prepared in Step S510 in the memory module 73 and sends the prepared UCS, together with the content key Kco of the content to be purchased and signature to them, to the receiver 401. In time with the execution of this process, the purchased content stored in the HDD 52 are also sent to the receiver 401. It is also possible to send a service provider secure container to the receiver 401; to make the receiver 401 check for falsification, select usage details, and issue a request for the content that will be purchased through the receiver 51; and to hand over UCS and keys.

Next, in Step S512, SAM 411 of the receiver 401 receives the UCS, content key Kco, signature to them, and content sent by the receiver 51 in Step S511, and decrypts them with the temporary key Ktemp. In Step S513, the encryption/decryption module 424 of the receiver 401 checks the data sent by the receiver 51 for falsification by verifying the signature received in Step S512. This process of signature verification is similar to the process of Step S83 in Figure 37 and thus description thereof is omitted.

If it is determined in Step S513 that the data from the receiver 51 has not been falsified, SAM 411 of the receiver 401 goes to Step S514, where it stores the UCP, PT, and content received in Step S505 in the HDD 402. Then, in Step S515, SAM 411 of the receiver 401 stores the UCS and content key Kco received in Step S512 in the block BP detected in Step S507, in the usage information storage 412A of the external storage 412.

In Step S516, the data check module 425 of the receiver 401 computes a hash value by applying a hash function to the data in the block BP of the usage information storage 412A of the external storage 412 where the UCS and content key Kco were stored in Step S515. Then in S517, the data check module 425 writes the computed hash value over the corresponding verification value HP stored in the memory module 423.

If it is determined in Step S502 that the registration list has been falsified, if it is determined in Step S503 that account settlement by proxy is not available to the receiver 401, and if it is determined in Step S508 that the block BP storing the usage information has been falsified, the process is terminated.

If it is determined in Step S506 that the data from the receiver 51 has been falsified, the process goes to Step S518, where SAM 411 of the receiver 401 notifies the receiver 51 of the falsification and takes other necessary measures. Then the process returns to Step S504. That is, thereby, UCP, PT, and signature to them are sent again to the receiver 401. In this example, this transmission from the receiver 51 is retried only a preset number of times. When that number is exceeded, the process is terminated.

If it is determined in Step S513 that the data from the receiver 51 has been falsified, the process goes to Step S519, where SAM 411 of the receiver 401 notifies the receiver 51 of the falsification and takes other necessary measures. Then the process returns to Step S511. That is, thereby, the UCS, content key Kco, signature to them, and content are sent again to the receiver 401. In this example, this transmission from the receiver 51 is retried only a preset number of times. When that number is exceeded, the process is terminated. In that case, it is possible to delete, in Step S510, the accounting information stored in the memory module 73 of the receiver 51. However, it is also possible to enter the number of times an attempt at proxy purchase processing failed into the accounting information, and restrict the operation of the receiver 401 by setting "Status Flag" to 'Restricted' for the SAM 411 ID of the receiver 401 in the registration list when the number of failures exceeds a preset number.

Besides, although the content in the above description was music data, it can also be moving picture data, still image data, text data, or program data. Then in using a different type of content, a compression method suitable for the content type can be selected: for example, MPEG (Moving Picture Experts Group) can be used if the content is image data. The type of watermark suitable for the content can also be selected.

As to common-key cryptography, DES which is a block cipher was used. However, FEAL proposed by NTT (trademark), IDEA (International Data Encryption Algorithm), or a stream cipher that encrypts a bit or several bits of data at a time can be employed as well.

Although common-key cryptography was used to encrypt content and content keys Kco, public-key cryptography can also be used.

In the present specification, a system means entire equipment consisting of two or more equipment items.

As for providing medium for use in providing the programs for running the processes described above, in addition to recording media such as magnetic discs, CD-ROMs, or solid state-memories, communications media such as satellites can also be used.

Since the receiver 51 according to the embodiments of the present invention described above can receive accounting information from other receivers and send it to control apparatus, it can settle accounts on behalf of other receivers.

Also, the receiver according to the embodiments of the present invention can prepare usage control status and send it to other information processing apparatuses together with the key for decrypting encrypted information according to proxy purchase information, the other information processing apparatuses can decrypt and use the encrypted information.

Industrial Applicability

The present invention can be applied to information processing systems that encrypt and distribute music data, moving picture data, still image data, text data, or program data.

Explanation of Reference Numerals

1 ... EMD service center, 2 ... content provider, 3 ... service provider, 5 ... user home network, 11 ... service provider management section, 12 ... content provider management section, 13 ...copyright management section, 14 ... key server, 15 ... log data management section, 16 ... profit-sharing section, 17 ... mutual authentication section, 18 ... user management section, 19 ... billing section, 20 ... cashier section, 21 ... audit section, 31 ... content server, 32 ...watermarking section, 33 ... compression section, 34 ... encryption section, 35 ... random number generator section, 36 ... encryption section, 37 ... policy storage section, 38 ... secure container preparation section, 39 ... mutual authentication section, 41 ... content server, 42 ... pricing section, 43 ... policy storage section, 44 ... secure container preparation section, 45 ... mutual authentication section, 51 ... receiver, 52 ... HDD, 61 ...communication block, 62 ... SAM, 63 ... external storage, 64 ... decompression section, 65 ... communication block, 66 ... interface, 67 ... display controller, 68 ... input controller, 71 ... mutual authentication module, 72 ... accounting module, 73 ...memory module, 74 ... encryption/decryption module, 75 ... data check module, 91 ... decryption unit, 92 ... random number generator unit, 93 ... encryption unit, 101 ... mutual authentication module, 102 ... decryption module, 103 ... decryption module, 104 ... decompression module, 105 ... watermarking module, 201 ... receiver, 202 ... HDD, 211 ... communication block, 212 ... SAM, 213 ... external storage, 214 ... decompression section, 215 ... communication block, 216 ... interface, 217 ... display controller, 218 ... input controller, 221 ... mutual authentication module, 222 ... accounting module, 223 ... memory module, 224 ... encryption/decryption module, 225 ... data check module, 231 ... decryption unit, 232 ... random number generator unit, 233 ... encryption unit, 241 ... mutual authentication module, 242 ... decryption module, 243 ... decryption module, 244 ... decompression module, 245 ... watermarking module, 301 ... receiver, 311 ... SAM, 312 ... external storage, 313 ... decompression section, 314 ... communication block, 321 ... mutual authentication module, 322 ... accounting module, 323 ... memory module, 324 ... encryption/decryption module, 325 ... data check module, 331 ... decryption unit, 332 ... random number generator unit, 333 ... encryption unit, 341 ... mutual authentication module, 342 ... decryption module, 344 ... decompression module, 345 ... watermarking module, 401 ... receiver, 402 ... HDD, 411 ... SAM, 412 ... external storage, 413 ... decompression section, 414 ... communication block, 415 ... interface, 416 ... display controller, 417 ... input controller, 421 ... mutual authentication module, 422 ... accounting module, 423 ... memory module, 424 ... encryption/decryption module, 425 ... data check module, 431 ... decryption unit, 432 ... random number generator unit, 433 ... encryption unit, 441 ... mutual authentication module, 442 ... decryption module, 443 ... decryption module, 444 ... decompression module, 445 ... watermarking module.

**Claims**

1. An information processing apparatus which is connected to other information processing apparatuses and which decrypts and uses encrypted information under the control of a control apparatus, characterized by comprising:

storage means for storing appropriate proxy account settlement information for said other information processing apparatuses;

requesting means for requesting said other information processing apparatuses to provide appropriate accounting information according to said proxy account settlement information stored in said storage means;

first reception means for receiving said accounting information sent by said other information processing apparatuses in response to the request from said requesting means;

sending means for sending said accounting information received by said first reception means to said control apparatus;

second reception means for receiving the registration conditions prepared based on the results of the account settlement performed according to said accounting information sent by said sending means and received from said control apparatus; and

control means for controlling the operation, based on said registration conditions received by said second reception means.

2. An information processing method for an information processing apparatus which is connected to other information processing apparatuses and which decrypts and uses encrypted information under the control of a control apparatus, characterized by comprising:

a storage step of storing appropriate proxy account settlement information for said other information processing apparatuses;

a requesting step of requesting said other information processing apparatuses to provide appropriate accounting information according to said proxy account settlement information stored in said storage step;

a first reception step of receiving said accounting information sent by said other information processing apparatuses in response to the request from said requesting step;

a sending step of sending said accounting information received by said first reception step to said control apparatus;

a second reception step of receiving the registration conditions prepared based on the results of the account settlement performed according to said accounting information sent by said sending step and received from said control apparatus; and

a control step of controlling the operation, based on said registration conditions received by said second reception step.

3. A providing medium that provides a computer-readable program for executing a process to an information processing apparatus which is connected to other information processing apparatuses and which decrypts and uses encrypted information under the control of a control apparatus, characterized in that said process comprises:

a storage step of storing appropriate proxy account settlement information for said other information processing apparatuses;
a requesting step of requesting said other information processing apparatuses to provide appropriate accounting information according to said proxy account settlement information stored in said storage step;
a first reception step of receiving said accounting information sent by said other information processing apparatuses in response to the request from said requesting step;
a sending step of sending said accounting information received by said first reception step to said control apparatus;
a second reception step of receiving the registration conditions prepared based on the results of the account settlement performed according to said accounting information sent by said sending step and received from said control apparatus; and
a control step of controlling the operation, based on said registration conditions received by said second reception step.

**4.** An information processing apparatus which is connected to other information processing apparatuses and which decrypts and uses encrypted information under the control of a control apparatus, characterized by comprising:

first storage means for storing appropriate proxy purchase information for said other information processing apparatuses;
first preparation means for preparing appropriate accounting information, according to said proxy purchase information stored in said first storage means;
second preparation means for preparing appropriate usage control status according to said proxy purchase information stored in said first storage means;
second storage means for storing said accounting information prepared by said first preparation means; and
sending means for sending said usage control status prepared by said second preparation means and the key necessary to decrypt said encrypted information supplied by said control apparatus.

**5.** The information processing apparatus according to claim 4, characterized in that, when said other information processing apparatuses comprise:

a display control means for controlling appropriate display; and
an input control means for controlling the input of appropriate data,
said first preparation means prepares said accounting information based on the data entered into said input control means with reference to said display controlled by said display means, and
said second preparation means prepares said usage control status based on the data controlled by said input control means with reference to said display controlled by said display means.

**6.** An information processing method for an information processing apparatus which is connected to other information processing apparatuses and which decrypts and uses encrypted information under the control of a control apparatus, characterized by comprising:

a first storage step of storing appropriate proxy purchase information for said other information processing apparatuses;
a first preparation step of preparing appropriate accounting information according to said proxy purchase information stored in said first storage step;
a second preparation step of preparing appropriate usage control status according to said proxy purchase information stored in said first storage step;
a second storage step of storing said accounting information prepared by said first preparation step; and
a sending step of sending said usage control status prepared by said second preparation step and the key necessary to decrypt said encrypted information supplied by said control apparatus.

**7.** A providing medium that provides a computer-readable program for executing a process to an information processing apparatus which is connected to other information processing apparatuses and which decrypts and uses encrypted information under the control of a control apparatus, characterized in that said process comprises:

a first storage step of storing appropriate proxy purchase information for said other information processing apparatuses;
a first preparation step of preparing appropriate accounting information according to said proxy purchase information stored in said first storage step;

a second preparation step of preparing appropriate usage control status according to said proxy purchase information stored in said first storage step;

a second storage step of storing said accounting information prepared by said first preparation step; and

a sending step of sending said usage control status prepared by said second preparation step and the key necessary to decrypt said encrypted information supplied by said control apparatus.

FIG. 1

FIG. 2

EMD SEVICE CENTER 1

FIG. 3

DELIVERY KEYS POSSESSED BY CONTENT PROVIDER

| DELIVRY KEY | VERSION | VALIDITY PERIOD START | END |
|---|---|---|---|
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |

DELIVERY KEY USED →

DELIVERY KEYS POSSESSED BY EMD SERVICE CENTER

| DELIVRY KEY | VERSION | VALIDITY PERIOD START | END |
|---|---|---|---|
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |

DELIVERY KEY USED →

SEND DELIVERY KEYS

SEND DELIVERY KEYS

DELIVERY KEYS POSSESSED BY RECEIVER

| DELIVRY KEY | VERSION | VALIDITY PERIOD START | END |
|---|---|---|---|
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |

DELIVERY KEY USED →

FIG. 4

EP 1 087 320 A1

DELIVERY KEYS POSSESSED BY CONTENT PROVIDER

| DELIVERY KEY | VERSION | VALIDITY PERIOD | |
| | | START | END |
|---|---|---|---|
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |

DELIVERY KEY USED →

DELIVERY KEY USED → SEND DELIVERY KEYS

DELIVERY KEYS POSSESSED BY EMD SERVICE CENTER

| DELIVERY KEY | VERSION | VALIDITY PERIOD | |
| | | START | END |
|---|---|---|---|
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |

SEND DELIVERY KEYS

DELIVERY KEYS POSSESSED BY RECEIVER

DELIVERY KEY USED →

| DELIVERY KEY | VERSION | VALIDITY PERIOD | |
| | | START | END |
|---|---|---|---|
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |

FIG. 5

EP 1 087 320 A1

DELIVERY KEYS POSSESSED BY CONTENT PROVIDER

DELIVERY KEY USED →

| DELIVERY KEY | VERSION | VALIDITY PERIOD START | VALIDITY PERIOD END |
|---|---|---|---|
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |
| hhhhhhhh | 8 | 1998/8/1 | 1998/8/31 |

SEND DELIVERY KEYS

DELIVERY KEY USED →

DELIVERY KEYS POSSESSED BY EMD SERVICE CENTER

| DELIVERY KEY | VERSION | VALIDITY PERIOD START | VALIDITY PERIOD END |
|---|---|---|---|
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |
| hhhhhhhh | 8 | 1998/8/1 | 1998/8/31 |

SEND DELIVERY KEYS

DELIVERY KEYS POSSESSED BY RECEIVER

DELIVERY KEY USED →

| DELIVERY KEY | VERSION | VALIDITY PERIOD START | VALIDITY PERIOD END |
|---|---|---|---|
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |

FIG. 6

EP 1 087 320 A1

DELIVERY KEYS POSSESSED BY CONTENT PROVIDER

| DELIVERY KEY | VERSION | VALIDITY PERIOD START | END |
|---|---|---|---|
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |
| hhhhhhhh | 8 | 1998/8/1 | 1998/8/31 |
| iiiiiiii | 9 | 1998/9/1 | 1998/9/30 |

DELIVERY KEY USED → (dddddddd)

SEND DELIVERY KEYS

DELIVERY KEYS POSSESSED BY EMD SERVICE CENTER

| DELIVERY KEY | VERSION | VALIDITY PERIOD START | END |
|---|---|---|---|
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |
| hhhhhhhh | 8 | 1998/8/1 | 1998/8/31 |
| iiiiiiii | 9 | 1998/9/1 | 1998/9/30 |

DELIVERY KEY USED →

SEND DELIVERY KEYS

DELIVERY KEYS POSSESSED BY RECEIVER

| DELIVERY KEY | VERSION | VALIDITY PERIOD START | END |
|---|---|---|---|
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |

DELIVERY KEY USED →

FIG. 7

EP 1 087 320 A1

31
CONTENT
SERVER

32
WATERMARKING
SECTION

33
COMPRESSION
SECTION

34
ENCRYPTION
SECTION

38
SECURE
CONTAINER
PREPARATION
SECTION

35
RANDOM NUMBER
GENERATOR SECTION

36
ENCRYPTION
SECTION

37
POLICY
STORAGE SECTION

39
MUTUAL
AUTHENTICATION
SECTION

CONTENT PROVIDER 2

FIG. 8

A

| CONTENT ID | ID OF CONTENT A | |
|---|---|---|
| CONTENT PROVIDER ID | ID OF CONTENT PROVIDER 2 | |
| UCP ID | ID OF ucpA | |
| ucp VALIDITY | VALIDITY PERIOD OF ucpA | |
| USAGE CONDITIONS 10 | USER CONDITIONS 10 | 200 POINTS OR HIGHER |
| | EQUIPMENT CONDITIONS 10 | NO CONDITION |
| USAGE DETAILS 11 | ID 11 | ID OF USAGE DETAILS 11 |
| | TYPE 11 | PURCHASE AND REPRODUCE |
| | PARAMETER 11 | x x x x |
| | CONTROL TRANSFER PERMISSION INFORMATION 11 | PERMITTED |
| USAGE DETAILS 12 | ID 12 | ID OF USAGE DETAILS 12 |
| | TYPE 12 | FIRST-GENERATION DUPLICATE |
| | PARAMETER 12 | x x x x |
| | CONTROL TRANSFER PERMISSION INFORMATION 12 | NOT PERMITTED |
| USAGE DETAILS 13 | ID 13 | ID OF USAGE DETAILS 13 |
| | TYPE 13 | LIMITED-TIME REPRODUCTION |
| | PARAMETER 13 | x x x x |
| | CONTROL TRANSFER PERMISSION INFORMATION 13 | NOT PERMITTED |
| USAGE DETAILS 14 | ID 14 | ID OF USAGE DETAILS 14 |
| | TYPE 14 | Pay Per Copy 5 |
| | PARAMETER 14 | DUPLICATES FIVE TIMES |
| | CONTROL TRANSFER PERMISSION INFORMATION 14 | NOT PERMITTED |

ucpA

B

| CONTENT ID | ID OF CONTENT A | |
|---|---|---|
| CONTENT PROVIDER ID | ID OF CONTENT PROVIDER 2 | |
| UCP ID | ID OF ucpB | |
| UCP VALIDITY PERIOD | VALIDITY PERIOD OF ucpB | |
| USAGE DETAILS 20 | USER CONDITIONS 20 | 200 POINTS OR LOWER |
| | EQUIPMENT CONDITIONS 20 | NO CONDITION |
| USAGE DETAILS 21 | ID 21 | ID OF USAGE DETAILS 21 |
| | TYPE 21 | Pay Per Play 4 |
| | PARAMETER 21 | REPRODUCTION FOUR TIMES |
| | CONTROL TRANSFER PERMISSION INFORMATION 21 | NOT PERMITTED |
| USAGE DETAILS 22 | ID 22 | ID OF USAGE DETAILS 22 |
| | PARAMETER 22 | Pay Per Copy 2 |
| | PARAMETER 22 | DUPLICATES TWO TIMES |
| | CONTROL TRANSFER PERMISSION INFORMATION 22 | NOT PERMITTED |

ucpB

FIG. 9

EP 1 087 320 A1

A

SOURCE EQUIPMENT
OF CONTROL TRANSFER

DESTINATION EQUIPMENT
OF CONTROL TRANSFER

CONTROL TRANSFER
OF CONTENT

| CONTENT |

→ | CONTENT |

~~CONTROL TRANSFER OF CONTENT~~

THIRD EQUIPMENT

| CONTENT |

B

SOURCE EQUIPMENT

DESTINATION EQUIPMENT

| CONTENT |

TRANSFER OF CONTENT →

| CONTENT |

FIG. 10

EP 1 087 320 A1

ORIGINAL

FIRST-GENERATION

SECOND-GENERATION

A

ORIGINAL

FIRST-GENERATION

SECOND-GENERATION

B

FIG. 11

EP 1 087 320 A1

A

| SERVICE CODE | INDICATION |
|---|---|
| 0000h | NO CONDITION |
| 0001h TO 00FFh | WITH CONDITIONS FOR EQUIPMENT |
| 0100h TO 01FFh | WITH CONDITIONS FOR SEX |
| 0200h TO 02FFh | WITH CONDITIONS FOR AGE |
| 0300h TO 7FFFh | WITH OTHER CONDITIONS |
| 8000h TO FFFFh | WITH CONDITIONS FOR USE POINT |

B

| CONDITION CODE | INDICATION |
|---|---|
| 00h | NO CONDITION |
| 01h | $=$ |
| 02h | $\neq$ |
| 03h | $<$ (SMALLER) |
| 04h | $>$ (LARGER) |
| 05h | $\leq$ (EQUAL OR SAMLLER) |
| 06h | $\geq$ (EQUAL OF LARGER) |
| 07h TO FFh | FREE |

FIG. 12

A

| USER<br>CONDITIONS 10 | SERVICE CODE | VALUE CODE | CONDITION CODE |
|---|---|---|---|
| | 80× ×h | 0000C8h | 06h |
| EQUIPMENT<br>CONDITIONS 10 | SERVICE CODE | VALUE CODE | CONDITION CODE |
| | 0000h | FFFFFFh | 00h |

USAGE CONDITIONS 10 OF UCPA

B

| USER<br>CONDITIONS 20 | SERVICE CODE | VALUE CODE | CONDITION CODE |
|---|---|---|---|
| | 80× ×h | 0000C8h | 03h |
| EQUIPMENT<br>CONDITIONS 20 | SERVICE CODE | VALUE CODE | CONDITION CODE |
| | 0000h | FFFFFFh | 00h |

USAGE CONDITIONS 20 OF UCPB

FIG. 13

CONTENT PROVIDER SECURE
CONTAINER

CONTENT KEY KcoA

CONTENT A

DELIVERY KEY Kd

CONTENT KcoA

UCPA, UCPB

SECRET KEY Kscp OF
CONTENT PROVIDER 2

SIGNATURE

HASH FUNCTION

CONTENT KEY KcoA

CONTENT A

CONTENT KEY Kd

CONTENT KcoA

UCPA, UCPB

FIG. 14

AUTHENTICATION CERTIFICATE
OF CONTENT PROVIDER 2

VERSION NUMBER OF AUTHENTICATION
CERTIFICATE

SERIAL NUMBER OF AUTHENTICATION
CERITIFICATE ASSIGNED BY
CERTIFICATION AGENCY

ALGORITHM AND PARAMETERS USED
FOR SIGNATURE

NAME OF CERTIFICATION AGENCY

VALIDITY PERIOD OF AUTHENTICATION
CERTIFICATE

NAME(ID) OF CONTENT PROVIDER 2

PUBLIC KEY Kpcp OF CONTENT
PROVIDER 2

SECRET KEY Ksca OF CERTIFICATION
AGENCY

SIGNATURE

HASH FUNCTION

VERSION NUMBER OF
AUTHENTICATION CERTIFICATE

SERIAL NUMBER OF AUTHENTICATION
CERITIFICATE ASSIGNED BY
CERTIFICATION AGENCY

ALGORITHM AND PARAMETERS
USED FOR SIGNATURE

NAME OF CERTIFICATION AGENCY

VALIDITY PERIOD OF AUTHENTICATION
CERTIFICATE

NAME(ID) OF CONTENT PROVIDER 2

PUBLIC KEY Kpcp OF CONTENT
PROVIDER 2

FIG. 15

41 — CONTENT SERVER

42 — PRICING SECTION

43 — POLICY STORAGE SECTION

45 — MUTUAL AUTHENTICATION SECTION

44 — SECURE CONTAINER PREPARATION SECTION

SERVICE PROVIDER 3

FIG. 16

47

| CONTENT ID | ID OF CONTENT A | |
|---|---|---|
| CONTENT PROVIDER ID | ID OF CONTENT PROVIDER 2 | |
| UCP ID | ID OF UCP A | |
| UCP VALIDITY PERIOD | VALIDITY PERIOD OF UCPA | |
| SERVICE PROVIDER ID | ID OF SERVICE PROVIDER 3 | |
| PT ID | ID OF PTA-1 | |
| PT VALIDITY PERIOD | VALIDITY PERIOD OF PTA-1 | |
| PRICING CONDITIONS 10 | USER CONDITIONS 10 | MALE |
| | EQUIPMENT CONDITIONS 10 | NO CONDITIONS |
| PRICE 11 | 2000YEN | |
| PRICE 12 | 600YEN | |
| PRICE 13 | 100YEN | |
| PRICE 14 | 300YEN | |

PTA-1

| CONTENT ID | ID OF CONTENT A | |
|---|---|---|
| CONTENT PROVIDER ID | ID OF CONTENT PROVIDER 2 | |
| UCP ID | ID OF UCP A | |
| UCP VALIDITY PERIOD | VALIDITY PERIOD OF UCPA | |
| SERVICE PROVIDER ID | ID OF SERVICE PROVIDER 3 | |
| PT ID | ID OF PTA-2 | |
| PT VALIDITY PERIOD | VALIDITY PERIOD OF PTA-2 | |
| PRICING CONDITIONS 20 | USER CONDITIONS 20 | FEMALE |
| | EQUIPMENT CONDITIONS 20 | NO CONDITIONS |
| PRICE 21 | 1000YEN | |
| PRICE 22 | 300YEN | |
| PRICE 23 | 50YEN | |
| PRICE 24 | 150YEN | |

PTA-2

FIG. 17

EP 1 087 320 A1

A

| USER CONDITIONS 10 | SERVICE CODE | VALUE CODE | CONDITION CODE |
|---|---|---|---|
| | 01 × × h | 000000h | 01h |
| EQUIPMENT CONDITIONS 10 | SERVICE CODE | VALUE CODE | CONDITION CODE |
| | 0000h | FFFFFFh | 00h |

PRICING CONDITIONS 10 OF PTA-1

B

| USER CONDITIONS 20 | SERVICE CODE | VALUE CODE | CONDITION CODE |
|---|---|---|---|
| | 01 × × h | 000001h | 01h |
| EQUIPMENT CONDITIONS 20 | SERVICE CODE | VALUE CODE | CONDITION CODE |
| | 0000h | FFFFFFh | 00h |

PRICING CONDITIONS 20 OF PTA-2

FIG. 18

| CONTENT ID | ID OF CONTENT A | |
|---|---|---|
| CONTENT PROVIDER ID | ID OF CONTENT PROVIDER 2 | |
| UCP ID | ID OF ucp B | |
| SERVICE PROVIDER ID | ID OF SERVICE PROVIDER 3 | |
| PT ID | ID OF ptB-1 | |
| PT VALIDITY PERIOD | VALIDITY PERIOD OF ptB-1 | |
| PRICING CONDITIONS 30 | USER CONDITIONS 30 | NO CONDITIONS |
| | EQUIPMENT CONDITIONS 30 | SLAVE EQUIPMENT |
| PRICE 31 | 100YEN | |
| PRICE 32 | 300YEN | |

PTB-1

A

| CONTENT ID | ID OF CONTENT A | |
|---|---|---|
| CONTENT PROVIDER ID | ID OF CONTENT PROVIDER 2 | |
| UCP ID | ID OF ucpB | |
| SERVICE PROVIDER ID | ID OF SERVICE PROVIDER 3 | |
| PT ID | ID OF ptB-2 | |
| PT VALIDITY PERIOD | VALIDITY PERIOD OF ptB-2 | |
| PRICING CONDITIONS 40 | USER CONDITIONS 40 | NO CONDITIONS |
| | EQUIPMENT CONDITIONS 40 | MASTER EQUIPMENT |
| PRICE 41 | 50YEN | |
| PRICE 42 | 150YEN | |

PTB-2

B

FIG. 19

EP 1 087 320 A1

A

| USER CONDITIONS 30 | SERVICE CODE | VALUE CODE | CONDITION CODE |
|---|---|---|---|
| | 0000h | FFFFFFh | 00h |
| EQUIPMENT CONDITIONS 30 | SERVICE CODE | VALUE CODE | CONDITION CODE |
| | 00×× h | 000064h | 03h |

PRICING CONDITIONS 30 OF PTB-1

B

| USER CONDITIONS 40 | SERVICE CODE | VALUE CODE | CONDITION CODE |
|---|---|---|---|
| | 0000h | FFFFFFh | 00h |
| EQUIPMENT CONDITIONS 40 | SERVICE CODE | VALUE CODE | CONDITION CODE |
| | 00×× h | 000064h | 06h |

PRICING CONDITIONS 40 OF PTB-2

FIG. 20

SERVICE PROVIDER
SECURE CONTANINER

CONTENT KEY KcoA

CONTENT A

DELIVERY KEY Kd

CONTENT KcoA

UCPA, B

SIGNATURE OF
CONTENT PROVIDER 2

PTA-1, A-2, B-1, B-2

SECRET KEY Kscp OF
CONTENT PROVIDER 2-1

SIGNATURE

HASH FUNCTION

CONTENT KEY Kco

CONTENT

CONTENT KEY Kd

CONTENT Kco

UCPA, B

SIGNATURE OF
CONTENT PROVIDER 2

PTA-1, A-2, B-1, B-2

FIG. 21

AUTHENTICATION CERTIFICATE OF
SERVICE PROVIDER 3

VERSION NUMBER OF
AUTHENTICATION CERTIFICATE

SERIAL NUMBER OF AUTHENTICATION
CERTIFICATE ASSIGNED BY
CERTIFICATION AGENCY

ALGORITHM AND PARAMETERS
USED FOR SIGNATURE

NAME OF CERTIFICATION AGENCY

VALIDITY PERIOD OF
AUTHENTICATION CERTIFICATE

NAME(ID) OF SERVICE PROVIDER 3

PUBLIC KEY Kpsp OF SERVICE
PROVIDER 3

SECRET KEY Ksca OF CERTIFICATION AGENCY

SIGNATURE

HASH FUNCTION

VERSION NUMBER OF
AUTHENTICATION CERTIFICATE

SERIAL NUMBER OF AUTHENTICATION
CERTIFICATE ASSIGNED BY
CERTIFICATION AGENCY

ALGORITHM AND PARAMETERS USED
FOR SIGNATURE

NAME OF CERTIFICATION AGENCY

VALIDITY PERIOD OF
AUTHENTICATION CERTIFICATE

NAME(ID) OF SERVICE PROVIDER 3

PUBLIC KEY Kpsp OF SERVICE
PROVIDER 3

FIG. 22

53

FIG. 23

AUTHENTICATION CERTIFICATE OF SAM 62

VERSION NUMBER OF
AUTHENTICATION CERTIFICATE

SERIAL NUMBER OF AUTHENTICATION
CERTIFICATE ASSIGNED BY
CERTIFICATION AGENCY

ALGORITHM AND PARAMETERS USED
FOR SIGNATURE

NAME OF CERTIFICATION AGENCY

VALIDITY PERIOD OF AUTHENTICATION
CERTIFICATE

NAME(ID) OF SAM 62

PUBLIC KEY Kpu OF SAM 62

SECRET KEY Ksca OF CERTIFICATION AGENCY

SIGNATURE

HASH FUNCTION

VERSION NUMBER OF
AUTHENTICATION CERTIFICATE

SERIAL NUMBER OF AUTHENTICATION
CERTIFICATE ASSIGNED BY
CERTIFICATION AGENCY

ALGORITHM AND PARAMETERS USED
FOR SIGNATURE

NAME OF CERTIFICATION AGENCY

VALIDITY PERIOD OF AUTHENTICATION
CERTIFICATE

NAME(ID) OF SAM 62

PUBLIC KEY Kpu OF SAM 62

PARAMETER INDICATING WHETHER GIVEN
SAM IS SUBORDINATE TO OTHER SAM

FIG. 24

| CONTENT ID | | ID OF CONTENT A |
|---|---|---|
| CONTENT PROVIDER ID | | ID OF CONTENT PROVIDER 2 |
| UCP ID | | ID OF ucPA |
| UCP VALIDITY PERIOD | | VALIDITY PERIOD OF ucPA |
| SERVICE PROVIDER ID | | ID OF SERVICE PROVIDER 3 |
| PT ID | | ID OF pTA-1 |
| PT VALIDITY PERIOD | | VALIDITY PERIOD OF pTA-1 |
| UCS ID | | ID OF ucsA |
| SAM ID | | ID OF SAM62 |
| USER ID | | ID OF USER F |
| USAGE DETAILS | ID | ID OF USAGE DETAILS 13 |
| | TYPE | LIMITED-TIME REPRODUCTION |
| | PARAMETER | × × × |
| | CONTROL TRANSFER STATUS | SOURCE: ID OF SAM62, DESTINATION: ID OF SAM62 |
| USAGE HISTORY | | × × × |

ucsA

FIG. 25

EP 1 087 320 A1

BLOCK Bp-1 {
USAGE INFORMATION MEMORY AREA Rp-1
USAGE INFORMATION MEMORY AREA Rp-2
USAGE INFORMATION MEMORY AREA Rp-3
⋮
USAGE INFORMATION MEMORY AREA Rp-N
}

BLOCK Bp-M {
USAGE INFORMATION MEMORY AREA Rp-1
USAGE INFORMATION MEMORY AREA Rp-2
⋮
USAGE INFORMATION MEMORY AREA Rp-N
}

USAGE INFORMATION STORAGE 63A

FIG. 26

| CONTENT ID | ID OF CONTENT A |
|---|---|
| CONTENT PROVIDER ID | ID OF CONTENT PROVIDER 2 |
| UCP ID | ID OF ucpA |
| UCP VALIDITY PERIOD | VALIDITY PERIOD OF ucpA |
| SERVICE PROVIDER ID | ID OF SERVICE PROVIDER 3 |
| PT ID | ID OF ptA-1 |
| PT VALIDITY PERIOD | VALIDITY PERIOD OF ptA-1 |
| UCS ID | ID OF ucsA |
| SAM ID | ID OF SAM62 |
| USER ID | ID OF USER F |
| USAGE DETAILS | ID | ID OF USAGE DETAILS 13 |
| | TYPE | PURCHASE AND REPRODUCE |
| | PARAMETER | x x x |
| | CONTROL TRANSFER STATUS | SOURCE: ID OF SAM62, DESTINATION: ID OF SAM62 |
| ACCOUNTING HISTORY | x x x | |

ACCOUNTING INFORMATION A

FIG. 27

| PUBLIC KEY Kpu OF SAM62 |
|---|
| SECRET KEY Ksu OF SAM62 |
| PUBLIC KEY Kpesc OF THE EMD SERVICE CENTER 1 |
| PUBLIC KEY Kpca OF THE CERTIFICATION AGENCY |
| SAVE KEY Ksave |
| THREE MONTHS' DELIVERY KEYS Kd |
| $\vdots$ |
| AUTHENTICATION CERTIFICATE OF SAM62 |
| REFERENCE INFORMATION 51 |
| ACCOUNTING INFORMATION |
| $\vdots$ |

| VERIFICATION VALUES HP-1 | VERIFICATION VALUES HP-2 | . . . . . . . . . . |
|---|---|---|

. . . . . . . . . . VERIFICATION VALUES HP-M

FIG. 28

| SAM ID | ID OF SAM62 |
|---|---|
| EQUIPMENT NUMBER | EQUIPMENT NUMBER (100) OF RECEIVERS 51 |
| SETTLEMENT ID | SETTLEMENT ID OF USER |
| CHARGE LIMIT | FORMAL REGISTRATION |
| ACCOUNT-SETTLING USER INFORMATION · NAME | NAME OF USER |
| ADDRESS | ADDRESS OF USER |
| PHONE NUMBER | PHONE NUMBER OF USER |
| SETTLEMENT INSTITUTION INFORMATION | SETTLEMENT INSTITUTION INFORMATION OF USER |
| DATA OF BIRTH | DATE OF BIRTH OF USER |
| AGE | AGE OF USER (21 YEARS) |
| SEX | SEX OF USER (MALE) |
| USER ID | USER ID OF USER |
| PASSWORD | PASSWORD OF USER |

| USE POINT INFORMATION | USE POINF INFORMATION OF RECEIVERS 51 |
|---|---|

REFERENCE INFORMATION 51

FIG. 29

| | SAM ID | USER ID | PURCHA-SING | ACCOUN-TING | EQUIPMENT BILLED | MASTER EQUIPMENT | STATUS FLAG | SIGNATURE TO CONDITIONS | SIGNATURE TO REGISTRATION LIST | |
|---|---|---|---|---|---|---|---|---|---|---|
| REGISTRATION CONDITIONS OF RECEIVER 51 | ID OF SAM62 | USER ID | YES | YES | ID OF SAM62 | NONE | NO RESTRI-CTION | x x x x | x x x x | LIST SECTION |
| REGISTRATION CONDITIONS OF RECEIVER 201 | ID OF SAM212 | USER ID | YES | NO | ID OF SAM62 | NONE | NO RESTRI-CTION | x x x x | | |

SAM ID: ID OF SAM62     ID OF SAM62
VALIDITY PERIOD     x x x x
VERSION NUMBER     x x x x
NUMBER OF EQUIPMENT CONNECTED     2

} SAM INFORMATION SECTION

REGISTRATION LIST OF RECEIVER 51

FIG. 30

EP 1 087 320 A1

FIG. 31

LIST SECTION

| SAM ID | USER ID | PURCHA- SING | ACCOUN- TING | EQUIPMENT BILLED | MASTER EQUIPMENT | STATUS FLAG | SIGNATURE TO CONDITIONS | SIGNATURE TO REGISTRATION LIST |
|---|---|---|---|---|---|---|---|---|
| ID OF SAM62 | USER ID | YES | YES | ID OF SAM62 | NONE | NO RESTRI- CTION | x x x x | x x x x |
| ID OF SAM212 | USER ID | YES | NO | ID OF SAM62 | NONE | NO RESTRI- CTION | x x x x | |

REGISTRATION CONDITIONS OF RECEIVER 51

REGISTRATION CONDITIONS OF RECEIVER 201

SAM ID: ID OF SAM62

| | ID OF SAM212 | |
|---|---|---|
| VALIDITY PERIOD | x x x x | |
| VERSION NUMBER | x x x x | |
| NUMBER OF EQUIPMENT CONNECTED | 2 | |

SAM INFORMATION SECTION

REGISTRATION LIST OF RECEIVER 201

FIG. 32

START OF PROCESS FOR UTILIZATION OF CONTENT A

DELIVERY KEYS Kd ARE SUPPLIED FROM EMD SERVICE CENTER 1 TO CONTENT PROVIDER 2 — S11

CONTENT PROVIDER SECURE CONTAINER IS SUPPLIED FROM CONTENT PROVIDER 2 TO SERVICE PROVIDER 3 — S12

SERVICE PROVIDER SECURE CONTAINER IS TRANSMITTED FROM SERVICE PROVIDER 3 TO RECEIVER 51 — S13

SERVICE PROVIDER SECURE CONTAINER IS RECEIVED BY THE RECEIVER 51 — S14

UTILIZATION OF CONTENT — S15

END

FIG. 33

START OF PROCESS FOR SUPPLYING DELIVERY KEYS Kd

PERFORM MUTUAL AUTHENTICATION WITH CONTENT PROVIDER ~S31

CONTENT PROVIDER RECEIVES DELIVERY KEYS ~S32

CONTENT PROVIDER STORES DELIVERY KEYS ~S33

RETURN

FIG. 34

CONTENT PROVIDER

| | |
|---|---|
| GENERATES 64-bit RANDOM NUMBER R1 | ~S41 |
| ENCRYPTS R1 WITH KEY Kc | ~S42 |
| SENDS ENCRYPTED R1 TO EMD SERVICE CENTER | ~S43 |
| DECRYPTS RECEIVED R1h ∥ R2 | ~S49 |
| CERTIFIES EMD SERVICE CENTER IF HIGH-ORDER 32bits OF DECRYPTED R1h ∥ R2 MATCHES THAT OF R1 | ~S50 |
| GENERATES 32-bit RANDOM NUMBER R3 | ~S51 |
| PRODUCES R2 ∥ R3 | ~S52 |
| ENCRYPTS R2 ∥ R3 WITH KEY Kc | ~S53 |
| SENDS ENCRYPTED R2 ∥ R3 TO EMD SERVICE CENTER | ~S54 |

EMD SERVICE CENTER

| | |
|---|---|
| DECRYPTS RECEIVED R1 | ~S44 |
| GENERATES 32-bit RANDOM NUMBER R2 | ~S45 |
| REPLACES LOW-ORDER 32bits OF R1 WITH RANDOM NUMBER R2 TO GENERATE R1h ∥ R2 | ~S46 |
| ENCRYPTS R1h ∥ R2 WITH KEY Kc | ~S47 |
| SENDS ENCRYPTED R1h ∥ R2 TO CONTENT PROVIDER | ~S48 |
| DECRYPTS RECEIVED R2 ∥ R3 | ~S55 |
| CERTIFIES CONTENT PROVIDER IF HIGH-ORDER 32bits OF DECRYPTED R2 ∥ R3 MATCHES THAT OF R2 | ~S56 |

FIG. 35

EP 1 087 320 A1

CONTENT PROVIDER

| | |
|---|---|
| GENERATES 64-bit RANDOM NUMBER R1 | ~S61 |
| ENCRYPTS R1 WITH KEY Kc1 | ~S62 |
| SENDS ENCRYPTED R1 TO EMD SERVICE CENTER | ~S63 |

EMD SERVICE CENTER

| | |
|---|---|
| DECRYPTS RECEIVED R1 | ~S64 |
| ENCRYPTS R1 WITH KEY Kc2 | ~S65 |
| GENERATES 64-bits RANDOM NUMBER R2 | ~S66 |
| ENCRYPTS R2 WITH KEY Kc2 | ~S67 |

| | |
|---|---|
| DECRYPTS RECEIVED R1 AND R2 | ~S69 |
| CERTIFIES EMD SERVICE CENTER IF DECRYPTED R1 MATCHES ORIGINAL R1 | ~S70 |
| ENCRYPTS R2 WITH KEY Kc1 | ~S71 |
| SENDS ENCRYPTED R2 TO EMD SERVICE CENTER | ~S72 |

| | |
|---|---|
| SENDS ENCRYPTED R1 AND R2 TO CONTENT PROVIDER | ~S68 |

| | |
|---|---|
| DECRYPTS RECEIVED R2 | ~S73 |
| CERTIFIES CONTENT PROVIDER IF DECRYPTED R2 MATCHES ORIGINAL R2 | ~S74 |

FIG. 36

EP 1 087 320 A1

CONTENT PROVIDER

| | |
|---|---|
| GENERATES 64-bit RANDOM NUMBER | S81 |
| SENDS R1 AND AUTHENTICATION CERTIFICATE TO EMD SERVICE CENTER | S82 |

EMD SERVICE CENTER

| | |
|---|---|
| EXTRACT PUBLIC KEY Kpcp FROM AUTHENTICATION CERTIFICATE IF SIGNATURE TO AUTHENTICATION CERTIFICATE IS VERIFIED | S83 |
| GENERATES 64-bit RANDOM NUMBER R2 | S84 |
| GENERATES R1 ‖ R2 | S85 |
| ENCRYPTS R1 ‖ R2 WITH PUBLIC KEY Ksesc | S86 |
| ENCRYPTS R1 ‖ R2 WITH PUBLIC KEY Kpcp | S87 |
| SENDS R1 ‖ R2 ENCRYPTED WITH SECRET KEY Ksesc, R1 ‖ R2 ENCRYPTED WITH PUBLIC KEY Kpcp, AND AUTHENTICATION CERTIFICATE TO CONTENT PROVIDER | S88 |

| | |
|---|---|
| EXTRACT PUBLIC KEY Kpesc IF SIGNATURE TO AUTHENTICATION CERTIFICATE IS VERIFIED | S89 |
| DECRYPTS R1 ‖ R2 WITH PUBLIC KEY Kpesc | S90 |
| DECRYPTS R1 ‖ R2 WITH SECRET KEY Kscp | S91 |
| CERTIFIES EMD SERVICE CENTER IF TWO R1 ‖ R2 MATCH | S92 |
| GENERATES 64-BIT RANDOM NUMBER R3 | S93 |
| PRODUCES R2 ‖ R3 | S94 |
| ENCRYPTS R2 ‖ R3 WITH PUBLIC KEY Kpesc | S95 |
| SENDS ENCRYPTED R2 ‖ R3 TO EMD SERVICE CENTER | S96 |

| | |
|---|---|
| DECRYPTS R2 ‖ R3 WITH SECRET KEY Ksesc | S97 |
| CERTIFIES CONTENT PROVIDER IF DECRYPTED R2 MATCHES ORIGINAL R2 | S98 |

FIG. 37

```
        ┌─────────────────────────────────┐
        │   START OF PROCESS FOR PROVIDING │
        │ CONTENT PROVIDER SECURE CONTAINER │
        └─────────────────────────────────┘
                        │
                        ▼
        ┌─────────────────────────────────┐
        │      WATERMARK THE CONTENT       │───S201
        └─────────────────────────────────┘
                        │
                        ▼
        ┌─────────────────────────────────┐
        │         COMPRESS CONTENT         │───S202
        └─────────────────────────────────┘
                        │
                        ▼
        ┌─────────────────────────────────────────┐
        │GENERATE RANDOM NUMBER FOR USE AS CONTENT KEY│───S203
        └─────────────────────────────────────────┘
                        │
                        ▼
        ┌─────────────────────────────────┐
        │   ENCRYPT CONTENT WITH CONTENT KEY │───S204
        └─────────────────────────────────┘
                        │
                        ▼
        ┌─────────────────────────────────┐
        │ ENCRYPT CONTENT KEY WITH DELIVERY KEY │───S205
        └─────────────────────────────────┘
                        │
                        ▼
        ┌─────────────────────────────────┐
        │        GENERATE SIGNATURE        │───S206
        └─────────────────────────────────┘
                        │
                        ▼
        ┌─────────────────────────────────┐
        │      PREPARE SECURE CONTAINER    │───S207
        └─────────────────────────────────┘
                        │
                        ▼
        ┌──────────────────────────────────────────────┐
        │ PERFORM MUTUAL AUTHENTICATION WITH SERVICE PROVIDER │───S208
        └──────────────────────────────────────────────┘
                        │
                        ▼
        ┌─────────────────────────────────┐
        │       SEND SECURE CONTAINER      │───S209
        └─────────────────────────────────┘
                        │
                        ▼
                  ┌──────────┐
                  │  RETURN  │
                  └──────────┘
```

FIG. 38

START OF PROCESS FOR PROVIDING
SERVICE PROVIDER SECURE CONTAINER

EXTRACTS PUBLIC KEY FROM AUTHENTICATION
CERTIFICATE ATTACHED TO SECURE CONTAINER — S221

VERIFY THAT SECURE CONTAINER IS FREE OF FALSIFICATION — S222

EXTRACTS UCP FROM SECURE CONTAINER — S223

PREPARE PT — S224

PREPARE SECURE CONTAINER — S225

PERFORMS MUTUAL AUTHENTICATION WITH RECEIVER — S226

SEND SECURE CONTAINER — S227

RETURN

FIG. 39

START OF PROCESS FOR RECEIVING
SERVICE PROVIDER SECURE CONTAINER

RECEIVES SECURE CONTAINER FROM SERVICE PROVIDER — S241

RECEIVE AUTHENTICATION CERTIFICATE OF
SECRET KEY FROM SERVICE PROVIDER — S242

CHECK SIGNATURE CONTAINED IN SECURE CONTAINER — S243

SELECT USAGE DETAILS WITH REFERENCE TO UCPs AND PTs — S244

UCS AND ACCOUNTING INFORMATION BASED ON UCP AND PTs — S245

STORE CONTENT ON HDD — S246

DECRYPT CONTENT KEY WITH DELIVERY KEY — S247

ENCRYPT CONTENT KEY WITH SAVE KEY — S248

SEARCH EXTERNAL STORAGE FOR FREE BLOCKS — S249

COMPUTE HASH VALUE OF FREE BLOCKS IN EXTERNAL STORAGE — S250

DOES COMPUTED HASH VALUE
MATCH CORRESPONDING VERIFICATION
VALUE OF MEMORY MODULE? — S251

NO

YES

STORES CONTENT KEY, ETC. IN EXTERNAL STORAGE — S252

YES

HAVE ALL BLOCKS
IN EXTERNAL STORAGE
BEEN CHECKED? — S256

COMPUTE HASH VALUE OF BLOCKS IN EXTERNAL
STORAGE CONTAINING CONTENT KEY, ETC. — S253

NO

SEARCH FOR OTHER FREE
BLOCKS IN EXTERNAL STORAGE — S257

WRITE COMPUTED HASH VALUE OVER
CORRESPONDING VERIFICATION
VALUE OF MEMORY MODULE — S254

STORE ACCOUNTING INFORMATION
IN MEMORY MODULE — S255

RETURN

FIG. 40

START OF REPRODUCTION PROCESS

COMPUTE A HASH VALUE OF BLOCK Bp — S261

DOES COMPUTED HASH VALUE MATCH HASH VALUE IN SAM? S262 — NO

YES

IS REPRODUCTION POSSIBLE? S263 — NO

ERROR PROCESSING — S277

YES

UPDATE UCS — S264

STORE ucs IN EXTERNAL STORAGE — S265

COMPUTE AND STORE VERIFICATION VALUE Hp — S266

SAM AND DECOMPRESSION SECTION PERFORM MUTUAL AUTHENTICATION AND SHARE TEMPORARY KEYS — S267

DECRYPT CONTENT KEY WITH SAVE KEY — S268

ENCRYPT CONTENT KEY WITH TEMPORARY KEY — S269

SEND CONTENT KEY TO DECOMPRESSION SECTION — S270

DECRYPT CONTENT KEY WITH TEMPORARY KEY — S271

DECOMPRESSION SECTION RECEIVES CONTENT — S272

DECRYPT CONTENT WITH CONTENT KEY — S273

DECOMPRESS CONTENT — S274

WATERMARK THE CONTENT — S275

OUTPUT THE CONTENT — S276

RETURN

FIG. 41

START OF ACCOUNT SETTLEMENT PROCESS

MUTUAL AUTHENTICATION IS PERFORMED BETWEEN RECEIVER 51 AND EMD SERVICE CENTER 1 — S301

RECEIVER 51 SENDS AUTHENTICATION CERTIFICATE TO EMD SERVICE CENTER 1 — S302

RECEIVER 51 SENDS DELIVERY KEY VERSION, UCP, REGISTRATION LIST, AND ENCRYPTED ACCOUNTING INFORMATION TO EMD SERVICE CENTER 1 — S303

EMD SERVICE CENTER 1 CHECKS "STATUS FLAG" OF RECEIVER 51 — S304

EMD SERVICE CENTER 1 ANALYZES ACCOUNTING INFORMATION AND SETTLES ACCOUNT — S305

EMD SERVICE CENTER 1 CHECKS IF ACCOUNTS WERE SETTLED SUCCESSFULY — S306

EMD SERVICE CENTER 1 PREPARES REGISTRATION LIST — S307

EMD SERVICE CENTER 1 SENDS REGISTRATION LIST WITH DELIVERY KEY VERSION ENCRYPTED WITH TEMPORARY KEY TO RECEIVER 51 — S308

RECEIVER 51 DELETES EXISTING ACCOUNTING INFORMATION AND UPDATES REGISTRATION LIST AND DELIVERY KEYS — S309

END

FIG. 42

START OF PROXY ACCOUNT
SETTLEMENT PROCESS

MUTUAL AUTHENTICATION —S321

HAS REGISTRATION LIST BEEN FALSIFIED? —S322

YES

NO

IS ACCOUNT SETTLEMENT BY PROXY
AVAILABLE TO RECEIVER 201? —S323

NO

YES

END

RECEIVER 51 REQUESTS RECEIVER 201
TO PROVIDE ACCOUNTING INFORMATION —S324

RECEIVER 51 RECEIVES ACCOUNTING INFORMATION —S325

RECEIVER 51 PERFORMS MUTUAL AUTHENTICATION
WITH EMD SERVICE CENTER 1 —S326

RECEIVER 51 SENDS VERSION OF DELIVERY
KEYS, ACCOUNTING INFORMATION, AND
REGISTRATION LIST TO EMD SERVICE CENTER 1 —S327

EMD SERVICE CENTER 1 CHECKS RECEIVERS
51 AND 201 FOR OPERATIONAL RESTRICTIONS —S328

S329

IS THERE ANY ILLEGAL ACT ON
PART OF RECEIVER 51? YES → B

NO

EMD SERVICE CENTER 1 ANALYZES ACCOUNTING
INFORMATION AND SETTLES ACCOUNT —S330

EMD SERVICE CENTER 1 PREPARES
REGISTRATION LIST —S331

A

FIG. 43

Ⓐ

EMD SERVICE CENTER 1 SENDS REGISTRATION LISTS AND DELIVERY KEYS ENCRYPTED WITH TEMPORARY KEY TO RECEIVER 51 ⟿ S332

RECEPTION ⟿ S333

S334

DOES "STATUS FLAG" CONTAIN OPERATIONAL RESTRICTION INFORMATION? ─ YES

NO

RECEIVER 51 ERASES ACCOUNTING INFORMATION ⟿ S335

RECEIVER 51 UPDATES DELIVERY KEYS AND REGISTRATION LIST ⟿ S336

RECEIVER 51 SENDS REGISTRATION LIST AND DELIVERY KEYS TO RECEIVER 201 ⟿ S337

RECEIVER 201 UPDATES REGISTRATION LIST AND DELIVERY KEYS ⟿ S338 ← Ⓒ

S339

RECEIVER 51 TAKES APPROPRIATE ACTION IN ACCORDANCE WITH OPERATIONAL RESTRICTION INFORMATION CONTAINED IN "STATUS FLAG"

END

FIG. 44

( B )

↓

| EMD SERVICE CENTER 1 PREPARES REGISTRATION LISTS | ~ S340 |

↓

| EMD SERVICE CENTER 1 SENDS REGISTRATION LISTS TO RECEIVER 51 | ~ S341 |

↓

| RECEIVER 51 UPDATES REGISTRATION LISTS | ~ S342 |

↓

( C )

FIG. 45

USER HOME NETWORK 5

FIG. 46

EP 1 087 320 A1

| | SAM ID | USER ID | PURCHA-SING | ACCOU-NTING | EQUIPMENT BILLED | MASTER EQUIPMENT | STATUS FLAG | SIGNATURE TO CONDITIONS | SIGNATURE TO REGISTRATION LIST | |
|---|---|---|---|---|---|---|---|---|---|---|
| REGISTRATION CONDITIONS OF RECEIVER 51 | ID OF SAM 62 | ID OF USER | YES | YES | ID OF SAM 62 | NONE | NO RESTRICTION | × × × × | × × × × | LIST SECTION |
| REGISTRATION CONDITIONS OF RECEIVER 251-1 | ID OF SAM | ID OF USER | YES | NO | ID OF SAM 62 | NONE | NO RESTRICTION | × × × × | | |
| REGISTRATION CONDITIONS OF RECEIVER 251-2 | ID OF SAM | ID OF USER | YES | NO | ID OF SAM 62 | NONE | NO RESTRICTION | × × × × | | |
| ⋮ | ⋮ | ⋮ | ⋮ | ⋮ | ⋮ | ⋮ | ⋮ | ⋮ | | |

| | |
|---|---|
| SAM ID | ID OF SAM 62 |
| VALIDITY PERIOD | × × × × |
| VERSION NUMBER | × × × × |
| NUMBER OF EQUIPMENT CONNECTED | L+1 |

SAM INFORMATION SECTION

FIG. 47

| | SAM ID | USER ID | PURCHA-SING | ACCOU-NTING | EQUIPMENT BILLED | MASTER EQUIPMENT | STATUS FLAG | SIGNATURE TO CONDITIONS | SIGNATURE TO REGISTRATION LIST | |
|---|---|---|---|---|---|---|---|---|---|---|
| REGISTRATION CONDITIONS OF RECEIVER 51 | ID OF SAM 62 | ID OF USER | YES | YES | ID OF SAM 62 | NONE | NO RESTRICTION | × × × × | × × × × | LIST SECTION |
| REGISTRATION CONDITIONS OF RECEIVER 251-1 | ID OF SAM | ID OF USER | YES | NO | ID OF SAM 62 | NONE | NO RESTRICTION | × × × × | | |
| REGISTRATION CONDITIONS OF RECEIVER 251-2 | ID OF SAM | ID OF USER | YES | NO | ID OF SAM 62 | NONE | NO RESTRICTION | × × × × | | |

| | | |
|---|---|---|
| SAM ID | ID OF SAM OF RECEIVER 251-1 | SAM INFORMATION SECTION |
| VALIDITY PERIOD | × × × × | |
| VERSION NUMBER | × × × × | |
| NUMBER OF EQUIPMENT CONNECTED | 2 | |

FIG. 48

EP 1 087 320 A1

START OF PROXY ACCOUNT SETTLEMENT

i ← 1 ⎯⎯S361

(D)

RECEIVER 51 PERFORMS MUTUAL
AUTHENTICATION WITH RECEIVER 251-i ⎯⎯S362

HAS REGISTRATION LIST BEEN FALSIFIED? ⎯⎯S363
YES

NO

IS ACCOUNT SETTLEMENT BY PROXY
AVAILABLE TO RECEIVER 251-i? ⎯⎯S364
NO

YES

(E)

RECEIVER 51 REQUESTS RECEIVER 251-i
TO PROVIDE ACCOUNTING INFORMATION ⎯⎯S365

RECEIVER 51 RECEIVES ACCOUNTING INFORMATION ⎯⎯S366

RECEIVER 51 PERFORMS MUTUAL
AUTHENTICATION WITH EMD SERVICE CENTER 1 ⎯⎯S367

RECEIVER 51 SENDS VERSION OF DELIVERY
KEYS, ACCOUNTING INFORMATION, AND
REGISTRATION LIST TO EMD SERVICE CENTER 1 ⎯⎯S368

EMD SERVICE CENTER 1 CHECKS RECEIVERS
51 AND 251-i FOR OPERATIONAL RESTRICTIONS ⎯⎯S369

S370

IS THERE ANY ILLEGAL ACT ON PART OF RECEIVER 51? YES (B)

NO

EMD SERVICE CENTER 1 ANALYZES ACCOUNTING
INFORMATION AND SETTLES ACCOUNT ⎯⎯S371

EMD SERVICE CENTER 1 PREPARES
REGISTRATION LIST ⎯⎯S372

(A)

FIG. 49

FIG. 50

(B)

↓

| EMD SERVICE CENTER 1 PREPARES REGISTRATION LISTS | S381 |

↓

| EMD SERVICE CENTER 1 SENDS REGISTRATION LISTS TO RECEIVER 51 | S382 |

↓

| RECEIVER 51 UPDATES REGISTRATION LISTS | S383 |

↓

(C)

FIG. 51

FIG. 52

USER HOME NETWORK 5

EMD SERVICE CENTER 1
SERVICE PROVIDER 3

RECEIVER ~301
RECEIVER ~401
HDD ~402
RECEIVER 51
HDD ~52

FIG. 53

BLOCK Bp-1
USAGE INFORMATION MEMORY AREA Rp-1
USAGE INFORMATION MEMORY AREA Rp-2
USAGE INFORMATION MEMORY AREA Rp-3
USAGE INFORMATION MEMORY AREA Rp-N

ADD | USE | CONTENT

BLOCK Bp-M
USAGE INFORMATION MEMORY AREA Rp-1
USAGE INFORMATION MEMORY AREA Rp-2
USAGE INFORMATION MEMORY AREA Rp-N

USAGE INFORMATION STORAGE 312A

FIG. 54

LIST SECTION

| SAM ID | USER ID | PURCHA-SING | ACCOU-NTING | EQUIPMENT BILLED | MASTER EQUIPMENT | STATUS FLAG | SIGNATURE TO CONDITIONS | SIGNATURE TO REGISTRATION LIST |
|---|---|---|---|---|---|---|---|---|
| ID OF SAM 311 | ID OF USER | NO | NO | NONE | ID OF SAM 62 | NO RESTRICTION | x x x x | x x x x |

REGISTRATION CONDITIONS OF RECEIVER 301

SAM INFORMATION SECTION

| | |
|---|---|
| SAM ID | ID OF SAM 311 |
| VALIDITY PERIOD | x x x x |
| VERSION NUMBER | x x x x |
| NUMBER OF EQUIPMENT CONNECTED | 2 |

REGISTRATION LIST OF RECEIVER 301

FIG. 55

FIG. 56

REGISTRATION
CONDITIONS OF
RECEIVER 401

| SAM ID | USER ID | PURCHA-SING | ACCOU-NTING | EQUIPMENT BILLED | MASTER EQUIPMENT | STATUS FLAG | SIGNATURE TO CONDITIONS | SIGNATURE TO REGISTRATION LIST |
|--------|---------|-------------|-------------|------------------|------------------|-------------|--------------------------|-------------------------------|
| ID OF SAM 411 | ID OF USER | NO | NO | NONE | ID OF SAM 62 | NO RESTRICTION | x x x x | x x x x |

LIST SECTION

SAM ID     <u>ID OF SAM 411</u>

VALIDITY PERIOD     <u>x x x x</u>

VERSION NUMBER     <u>x x x x</u>

NUMBER OF EQUIPMENT CONNECTED     <u>2</u>

SAM INFORMATION SECTION

REGISTRATION LIST OF RECEIVER 401

FIG. 57

EP 1 087 320 A1

LIST SECTION

| | SAM ID | USER ID | PURCHA-SING | ACCOU-NTING | EQUIPMENT BILLED | MASTER EQUIPMENT | STATUS FLAG | SIGNATURE TO CONDITIONS | SIGNATURE TO REGISTRATION LIST |
|---|---|---|---|---|---|---|---|---|---|
| REGISTRATION CONDITIONS OF RECEIVER 51 | ID OF SAM 62 | ID OF USER | YES | YES | ID OF SAM 62 | NONE | NO RESTRICTION | x x x x | x x x x |
| REGISTRATION CONDITIONS OF RECEIVER 301 | ID OF SAM 311 | ID OF USER | NO | NO | NONE | ID OF SAM 62 | NO RESTRICTION | x x x x | |
| REGISTRATION CONDITIONS OF RECEIVER 401 | ID OF SAM 411 | ID OF USER | NO | NO | NONE | ID OF SAM 62 | NO RESTRICTION | x x x x | |

SAM INFORMATION SECTION

| SAM ID | ID OF SAM 62 |
|---|---|
| VALIDITY PERIOD | x x x x |
| VERSION NUMBER | x x x x |
| NUMBER OF EQUIPMENT CONNECTED | 3 |

REGISTRATION LIST

FIG. 58

START OF PURCHASING PROCESS BY RECEIVER 51 ON BEHALF OF RECEIVER 301

MUTUAL AUTHENTICATION BETWEEN RECEIVERS 51 AND 301 — S401

HAS REGISTRATION LIST BEEN FALSIFIED? — S402
YES ↑ NO ↓

IS PROXY PURCHASING AVAILABLE TO RECEIVER 301? — S403
NO ← ↓ YES

RECEIVER 51 NOTIFIES RECEIVER 301 THAT CONTENT CAN BE PURCHASED BY PROXY — S404

RECEIVER 301 SEARCHES USAGE INFORMATION STORAGE 312A FOR BLOCK Bp THAT STORES CONTENT — S405

HAS BLOCK Bp IN USAGE INFORMATION STORAGE 312A BEEN FALSIFIED? — S406
YES ← ↓ NO

NOTIFICATION — S407

RECEIVER 51 PREPARES ACCOUNTING INFORMATION AND UCS — S408

RECEIVER 51 STORES ACCOUNTING INFORMATION AND SENDS UCS, CONTENT KEY, SIGNATURE TO THEM, AND CONTENT TO RECEIVER 301 — S409

RECEPTION — S410

HAS DATA BEEN FALSIFIED? — S411
YES → PROCESSING — S415
↓ NO

RECEIVER 301 STORES UCS, CONTENT KEY, AND CONTENT IN EXTERNAL STORAGE 312 — S412

RECEIVER 301 COMPUTES HASH VALUE OF BLOCK Bp — S413

RECEIVER 301 WRITES COMPUTED HASH VALUE OVER VERIFICATION VALUE Hp — S414

END

FIG. 59

START OF PURCHASING PROCESS BY RECEIVER 51 ON BEHALF OF RECEIVER 301

MUTUAL AUTHENTICATION BETWEEN RECEIVERS 51 AND 301 — S431

HAS REGISTRATION LIST BEEN FALSIFIED? — S432 — YES

NO — S433

IS PROXY PURCHASING AVAILABLE TO RECEIVER 301? — NO

YES

RECEIVER 51 NOTIFIES RECEIVER 301 THAT CONTENT CAN BE PURCHASED BY PROXY — S434

RECEIVER 301 SETS INITIAL VALUE '1' ON COUNTER $j$ — S435

RECEIVER 301 SEARCHES USAGE INFORMATION STORAGE 312A FOR BLOCK Bp THAT STORES CONTENT $j$ — S436

HAS BLOCK Bp IN USAGE INFORMATION STORAGE 312A BEEN FALSIFIED? — S437 — YES

NO

NOTIFICATION — S438

RECEIVER 51 PREPARES ACCOUNTING INFORMATION AND UCS — S439

RECEIVER 51 STORES ACCOUNTING INFORMATION AND SENDS UCS, CONTENT KEY, SIGNATURE TO THEM, AND CONTENT $j$ TO RECEIVER 301 — S440

RECEPTION — S441

HAS DATA BEEN FALSIFIED? — S442 — YES — PROCESSING — S446

NO

S448
$j = j + 1$

RECEIVER 301 STORES UCS, CONTENT KEY, AND CONTENT $j$ IN EXTERNAL STORAGE 312 — S443

RECEIVER 301 COMPUTES HASH VALUE OF BLOCK Bp — S444

RECEIVER 301 WRITES COMPUTED HASH VALUE OVER VERIFICATION VALUE Hp — S445

NO — $j = k$ ? — S447 — YES

END

FIG. 60

91

START OF PURCHASING PROCESS BY RECEIVER 51 ON BEHALF OF RECEIVER 301

MUTUAL AUTHENTICATION BETWEEN RECEIVERS 51 AND 301 — S461

HAS REGISTRATION LIST BEEN FALSIFIED? — S462 — YES

NO

IS PROXY PURCHASING AVAILABLE TO RECEIVER 301? — S463 — NO

YES

RECEIVER 51 REQUESTS RECEIVER 301 TO INFORM IT OF STORAGE CAPACITY — S464

RECEIVER 301 INFORMS RECEIVER 51 OF AVAILABLE SPACE — S465

RECEIVER 51 INFORMS RECEIVER 301 OF CONTENT CORRESPONDING TO STORAGE CAPACITY — S466

RECEIVER 51 SEARCHES USAGE INFORMATION STORAGE 312A FOR BLOCKS Bp THAT STORE CONTENT — S467

HAVE BLOCKS Bp IN USAGE INFORMATION STORAGE 312A BEEN FALSIFIED? — S468 — YES

NO

NOTIFICATION — S469

RECEIVER 51 PREPARES ACCOUNTING INFORMATION AND UCS — S470

RECEIVER 51 STORES ACCOUNTING INFORMATION AND SENDS UCS, CONTENT KEYS, SIGNATURE TO THEM, AND CONTENT TO RECEIVER 301 — S471

RECEPTION — S472

HAS DATA BEEN FALSIFIED? — S473 — YES → PROCESSING — S477

NO

RECEIVER 301 STORES UCS, CONTENT KEY, AND CONTENT IN EXTERNAL STORAGE 312 — S474

RECEIVER 301 COMPUTES HASH VALUES OF BLOCKS Bp — S475

RECEIVER 301 WRITES COMPUTED HASH VALUES OVER VERIFICATION VALUES Hp — S476

END

FIG. 61

START OF PURCHASING PROCESS BY RECEIVER 51 ON BEHALF OF RECEIVER 401

MUTUAL AUTHENTICATION BETWEEN RECEIVERS 51 AND 401 — S501

HAS REGISTRATION LIST BEEN FALSIFIED? — S502 · YES

IS PROXY PURCHASING AVAILABLE TO RECEIVER 401? — S503 · NO

NO

YES

RECEIVER 51 SENDS UCP, PT, AND SIGNATURE TO RECEIVER 201 — S504

RECEPTION — S505

S506

HAS DATA BEEN FALSIFIED? — YES → PROCESSING — S518

NO

RECEIVER 401 SEARCHES USAGE INFORMATION STORAGE 412 FOR BLOCKS Bp THAT STORE CONTENT KEY — S507

HAS BLOCK Bp IN USAGE INFORMATION STORAGE 412A BEEN FALSIFIED? — S508 · YES

NO

END

RECEIVER 401 NOTIFIES RECEIVER 51 OF SELECTED USAGE DETAILS — S509

RECEIVER 51 PREPARES ACCOUNTING INFORMATION AND UCS — S510

RECEIVER 51 STORES ACCOUNTING INFORMATION AND SENDS UCS, CONTENT KEY, SIGNATURE TO THEM, AND CONTENT TO RECEIVER 401 — S511

RECEPTION — S512

S513

HAS DATA BEEN FALSIFIED? — YES → PROCESSING — S519

NO

RECEIVER 401 STORES UCS, PT, AND CONTENT ON HDD 402 — S514

A

FIG. 62

```
                    ( A )
                      |
                      v
  +----------------------------------------+
  | RECEIVER 401 STORES UCS AND CONTENT KEY|  ___S515
  |   IN BLOCK BP OF EXTERNAL STORAGE 412  |
  +----------------------------------------+
                      |
                      v
  +----------------------------------------+
  |     RECEIVER 401 COMPUTES HASH VALUE   |  ___S516
  |              OF BLOCK Bp               |
  +----------------------------------------+
                      |
                      v
  +----------------------------------------+
  | RECEIVER 401 WRITES COMPUTED HASH VALUE|  ___S517
  |       OVER VERIFICATION VALUE Hp       |
  +----------------------------------------+
                      |
                      v
               (   END   )
```

FIG. 63

# INTERNATIONAL SEARCH REPORT

| | International application No. |
|---|---|
| | PCT/JP00/02291 |

A. CLASSIFICATION OF SUBJECT MATTER
     Int.Cl⁷   G06F17/60

According to International Patent Classification (IPC) or to both national classification and IPC

B. FIELDS SEARCHED

Minimum documentation searched (classification system followed by classification symbols)
     Int.Cl⁷   G06F17/60, G06F13/00, G09C1/00, H04L9/08, G06F15/00, H04L9/32

Documentation searched other than minimum documentation to the extent that such documents are included in the fields searched
     Jitsuyo Shinan Koho        1926-1996     Jitsuyo Shinan Toroku Koho  1996-2000
     Kokai Jitsuyo Shinan Koho  1971-2000     Toroku Jitsuyo Shinan Koho  1994-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO, 96/27155, A2 (InerTrust Technologies Corp.)<br>6 September, 1996 (06.09.96)<br>&JP, 10-512074, A | 1-7 |
| A | Jinbun Kagaku to Computer, Vols. 36 to 38, November, 1997, Seiji Kawahara, "Chosaku Ken Shori Gijutsu no Saikin no Doko", pp.43-48 | 1-7 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 24 May, 2000 (24.05.00) | 13 June, 2000 (13.06.00) |

| Name and mailing address of the ISA/<br>     Japanese Patent Office | Authorized officer |
|---|---|
| Facsimile No. | Telephone No. |

Form PCT/ISA/210 (second sheet) (July 1992)